# EUROPEAN PATENT SPECIFICATION

(11) **EP 2 698 968 B1**
(45) Date of publication and mention of the grant of the patent: **25.11.2015**
(21) Application number: 12771359.2
(22) Date of filing: 13.04.2012
(51) Int. Cl.: H04M 1/00, B60R 16/02, G01C 21/26, G06F 3/14

(54) **INFORMATION TERMINAL, ON-BOARD INFORMATION SYSTEM, ON-BOARD DEVICE, AND INFORMATION TERMINAL PROGRAM**
INFORMATIONSENDGERÄT, BORDINFORMATIONSSYSTEM, BORDVORRICHTUNG UND PROGRAMM FÜR DAS INFORMATIONSENDGERÄT
TERMINAL D'INFORMATION, SYSTÈME D'INFORMATION À BORD, DISPOSITIF À BORD ET PROGRAMME DE TERMINAL D'INFORMATION

(30) Priority: 15.04.2011 JP 2011091252; 15.04.2011 JP 2011091253
(43) Date of publication of application: 19.02.2014
(73) Proprietor: Clarion Co., Ltd., Saitama-shi, Saitama 330-0081 (JP)
(72) Inventor: NARA, Norikazu, Saitama-shi Saitama 330-0081 (JP); ABE, Noriyuki, Saitama-shi Saitama 330-0081 (JP); KATO, Ryohei, Saitama-shi Saitama 330-0081 (JP); OKAMOTO, Kimio, Saitama-shi Saitama 330-0081 (JP)
(74) Representative: MERH-IP Matias Erny Reichl Hoffmann
(86) International application number: PCT/JP2012/060142
(87) International publication number: WO 2012/141294

(56) References cited:
- EP-A1- 1 871 075
- WO-A2-2008/079891
- JP-A- 2003 196 793
- JP-A- 2006 251 698
- JP-A- 2010 127 781
- JP-A- 2010 261 803

## Description

### TECHNICAL FIELD

The present invention relates to an information terminal, to an in-vehicle information system, and to an in-vehicle device that are used when mounted to a vehicle, and to an information terminal program for such an information terminal.

### BACKGROUND ART

In the prior art, a technique is per se known with which information that is displayed upon a screen of an information terminal such as a portable telephone is transmitted to an in-vehicle device, and this information is displayed upon a screen of the in-vehicle device (refer to Patent Document #1).

EP 1 871 075 A1 describes a mobile information communication apparatus comprising a data processing means for sending plotting command/data to a display control means that controls the pixels of a display panel belonging to the mobile information communication apparatus.

WO 2008/079891 A2 describes a system for mounting in a vehicle and for reproducing an image generated by a remote source and shown on a display of the remote source.

### CITATION LIST

### PATENT LITERATURE

Patent Document #1: Japanese Laid Open Patent Publication 2003 244343.

### SUMMARY OF INVENTION

### TECHNICAL PROBLEM

When a user looks at the screen of an information terminal that he is holding in his hand, the distance from the eyes of the user to the screen is normally around 30 cm. On the other hand, when a user is sitting in the seat of a vehicle and is looking at the screen of an in-vehicle device, although the distance from the eyes of the user to the screen changes according to the position of the seat and so on, generally this distance is greater than in the case of the information terminal described above, and may, for example, be around 60 cm. Accordingly, when an in-vehicle device is controlled from an information terminal and screen image display is performed upon the in-vehicle device as described in Patent Document #1, if the screen image of the information terminal is displayed just as it is upon the screen of the in-vehicle device, then, even in the case of a screen image display that is optimum for the information terminal, sometimes it may happen that, upon the screen of the in-vehicle device, some characters become too small or some lines become too thin, and accordingly it is difficult for the user to see them.

### SOLUTION TO TECHNICAL PROBLEM

The above-described problem is solved by the invention according to the independent claims. The dependent claims describe further preferred developments of the invention.

An information terminal according to a 1st aspect of the present invention is a portable information terminal that is connected to an in-vehicle device and comprises: a first display unit; a display control unit that generates a first screen image for display upon the first display unit, and a second screen image for display upon a second display unit that is comprised in the in-vehicle device; and a screen image output unit that outputs the second screen image to the in-vehicle device.

According to a 2nd aspect of the present invention, the information terminal of the 1 st aspect may further comprise a connection determination unit that makes a decision as to whether or not the in-vehicle device is connected. In this information terminal, it is preferred that the display control unit generates the first screen image if it has been determined by the connection determination unit that the in-vehicle device is not connected, and generates the second screen image if it has been determined by the connection determination unit that the in-vehicle device is connected.

According to a 3rd aspect of the present invention, in the information terminal of the 2nd aspect, the first screen image may be displayed only by the first display unit and the second screen image may be displayed in common both by the first display unit and by the second display unit.

According to a 4th aspect of the present invention, in the information terminal of the 2nd or 3rd aspect, the first screen image can include a map screen image. In this information terminal, it is preferred that the display control unit generates the second screen image by changing at least one of the size of a character, the font of a character, the thickness of a road, the size of a map symbol, and a hue on the map screen image.

According to a 5th aspect of the present invention, in the information terminal of any one of the 2nd through 4th aspects, the display control unit can generate the second screen image on the basis of resolution information transmitted from the in-vehicle device related to the resolution of the second display unit, or on the basis of device type information related to the device type of the in-vehicle device.

According to a 6th aspect of the present invention, in the information terminal of any one of the 2nd through 5th aspects, the first display unit and the second display unit may be touch panels that are capable of touch operation. In this information terminal, it is preferred that: the display control unit generates the second screen image that includes a predetermined mark for selection by touch operation upon the first display unit or upon the second display unit; and when pull touch operation upon the first display unit in a predetermined direction or touch operation to select the mark has been performed, or when touch operation information has been transmitted from the in-vehicle device specifying that the mark has been selected by touch operation upon the second display unit, the display control unit changes the second screen image.

According to a 7th aspect of the present invention, in the information terminal of the 1 st aspect, the display control unit may comprise a first display control unit that generates the first screen image, and a second display control unit that generates the second screen image on the basis of at least a portion of the first screen image. In this information terminal, it is preferred that the screen image output unit outputs the second screen image to the in-vehicle device when the first display unit is displaying the first screen image.

According to an 8th aspect of the present invention, in the information terminal of the 7th aspect, the first display unit and the second display unit may be touch panels that are capable of touch operation. In this information terminal, it is preferred that the first screen image includes an information terminal menu screen image upon which one, or two or more, icons are arranged for being selected by touch operation upon the first display unit. And it is preferred that, on the basis of a portion of the information terminal menu screen image, the second display control unit generates, as the second screen image, an in-vehicle device menu screen image upon which one, or two or more, icons are arranged for being selected by touch operation upon the second display unit.

According to a 9th aspect of the present invention, in the information terminal of the 8th aspect, the second display control unit can extract a portion of the information terminal menu screen image, and generate the in-vehicle device menu screen image by changing at least one of the size of the icons included in that portion, and the gap between adjacent icons.

According to a 10th aspect of the present invention, in the information terminal of any one of the 7th through 9th aspects, the first screen image may include an information terminal map screen image. In this information terminal, it is preferred that, as the second screen image, the second display control unit generates a map screen image for the in-vehicle device on the basis of a portion of the information terminal map screen image.

According to an 11th aspect of the present invention, in the information terminal of the 10th aspect, it is preferred that the second display control unit generates the map screen image for the in-vehicle device by extracting a portion of the information terminal map screen image, and by changing at least one of the size of a character, the font of a character, the thickness of a road, the size of a map symbol, and a hue included in that portion.

According to a 12th aspect of the present invention, in the information terminal of any one of the 7th through 11th aspects, it is preferred that the first display unit displays the portion in the first screen image that corresponds to the second screen image in an identifiable format.

According to a 13th aspect of the present invention, in the information terminal of any one of the 7th through 12th aspects, the second display control unit can generate the second screen image on the basis of resolution information related to the resolution of the second display unit, or on the basis of device type information related to the device type of the in-vehicle device, transmitted from the in-vehicle device.

According to a 14th aspect of the present invention, in the information terminal of any one of the 7th through 13th aspects, the first display unit and the second display unit may be touch panels that are capable of touch operation. In this information terminal, it is preferred that: the second display control unit generates the second screen image that includes a predetermined mark for selection by touch operation upon the second display unit; and when touch operation information is transmitted from the in-vehicle device, specifying that the mark has been selected by touch operation upon the second display unit, the second display control unit changes the second screen image in correspondence thereto.

According to a 15th aspect of the present invention, in the information terminal ot the 14th aspect, it is preferred that the first display control unit changes the first screen image when pull touch operation in a predetermined direction has been performed upon the first display unit, or when the touch operation information has been transmitted from the in-vehicle device. And it is preferred that the second display control unit changes the second screen image according to change of the first screen image.

According to a 16th aspect of the present invention, in the information terminal of the 14th or 15th aspect, when the touch operation information is transmitted from the in-vehicle device, the second display control unit can change the second screen image by changing the range of the first screen image that is employed for generation of the second screen image.

According to a 17th aspect of the present invention, in the information terminal of the 1 st aspect, the display control unit may comprise a first display control unit that generates the first screen image, and a second display control unit that generates the second screen image on the basis of at least a portion of the first screen image. In this information terminal, it is preferred that the first display unit displays the portion in the first screen image that corresponds to the second screen image in an identifiable format.

According to an 18th aspect of the preset invention, in the information terminal of the 1st aspect, the display control unit may comprise a first display control unit that generates the first screen image, and a second display control unit that generates the second screen image. In this information terminal, the second display control unit can generate the second screen image on the basis of resolution information related to the resolution of the second display unit, or on the basis of device type information related to the device type of the in-vehicle device, transmitted from the in-vehicle device.

According to a 19th aspect of the present invention, in the information terminal of the 1 st aspect, the first display unit and the second display unit may be touch panels that are capable of touch operation. In this information terminal, it is preferred that: the second display control unit generates the second screen image that includes a predetermined mark for selection by touch operation upon the second display unit; and when touch operation information is transmitted from the in-vehicle device specifying that the mark has been selected by touch operation upon the second display unit, the second display control unit changes the second screen image.

An in-vehicle information system according to a 20th aspect of the present invention comprises a portable information terminal and an in-vehicle device. In this in-vehicle information system, the information terminal comprises: a first display unit; a display control unit that generates a first screen image for display upon the first display unit, and a second screen image for display upon a second display unit that is comprised in the in-vehicle device; and a screen image output unit that outputs the second screen image to the in-vehicle device. And the in-vehicle device comprises the second display unit that displays the second screen image outputted from the information terminal by the screen image output unit.

According to a 21st aspect of the present invention, in the in-vehicle information system of the 20th aspect, the information terminal may further comprise a connection determination unit that makes a determination as to whether or not the in-vehicle device is connected. In this in-vehicle information system, it is preferred that the display control unit generates the first screen image if it has been decided by the connection determination unit that the in-vehicle device is not connected, and generates the second screen image if it has been decided by the connection determination unit that the in-vehicle device is connected.

According to a 22nd aspect of the present invention, in the in-vehicle information system of the 20th aspect, the display control unit may comprise a first display control unit that generates the first screen image, and a second display control unit that generates the second screen image on the basis of at least a portion of the first screen image. In this in-vehicle information system, it is preferred that the second display unit displays the second screen image outputted from the information terminal by the screen image output unit, when the first display unit is displaying the first screen image.

An in-vehicle device according to a 23rd aspect of the present invention is used in the in-vehicle information system of any one of the 20th through 22nd aspects described above, and comprises the second display unit.

An information terminal program according to a 24th aspect of the present invention is executed by a portable information terminal comprising a first display unit and a control circuit and connected to an in-vehicle device, and thereby causes the control circuit to function as: a display control unit that generates a first screen image for display upon the first display unit, and a second screen image for display upon a second display unit that is comprised in the in-vehicle device; and a screen image output unit that outputs the second screen image to the in-vehicle device.

According to a 25th aspect of the present invention, the information terminal program of the 24th aspect may further cause the control circuit to function as a connection determination unit that makes a decision as to whether or not the in-vehicle device is connected. In this information terminal program, it is preferred that the display control unit generates the first screen image if it has been determined by the connection determination unit that the in-vehicle device is not connected, and generates the second screen image if it has been determined by the connection determination unit that the in-vehicle device is connected.

According to a 26th aspect of the present invention, in the information terminal program of the 24th aspect, the display unit may comprise a first display control unit that generates the first screen image, and a second display control unit that generates the second screen image on the basis of at least a portion of the first screen image. In this information terminal program, it is preferred that the screen image output unit outputs the second screen image to the in-vehicle device, when the first display unit is displaying the first screen image.

### ADVANTAGEOUS EFFECTS OF INVENTION

According to the present invention, the in-vehicle device can be controlled from the information terminal in such a manner that it is possible to perform screen image display adapted to the in-vehicle device.

### BRIEF DESCRIPTION OF DRAWINGS

Fig. 1 is a figure showing the structure of an in-vehicle information system, according to a first embodiment of the present invention;
Fig. 2 is a block diagram showing the structures of an in-vehicle device and of a portable terminal;
Fig. 3 is a figure showing examples of menu screen images that are displayed upon each of the in-vehicle device and the portable terminal, according to the first embodiment;
Fig. 4 is a figure showing examples of map screen images that are displayed upon the portable terminal, according to the first embodiment;
Fig. 5 is a figure showing examples of map screen images that are displayed upon the in-vehicle device, according to the first embodiment;
Fig. 6 is a flow chart for processing executed by the in-vehicle device, according to the first embodiment;
Fig. 7 is a flow chart for processing executed by the portable terminal, according to the first embodiment;
Fig. 8 is a figure showing an example of a table that is referred to when determining screen structural factors;
Fig. 9 is a flow chart for processing executed by the portable terminal during map display, according to the first embodiment;
Fig. 10 is a flow chart for processing executed by an in-vehicle device, according to a second embodiment;
Fig. 11 is a flow chart for processing executed by a portable terminal, according to the second embodiment;
Fig. 12 is a flow chart for processing executed by the portable terminal during map display, according to the second embodiment;
Fig. 13 is a figure showing an example of a map screen image that is displayed both upon a portable terminal and upon an in-vehicle device, according to a third embodiment;
Fig. 14 is a flow chart for processing executed by the portable terminal during map display, according to the third embodiment;
Fig. 15 is a flow chart for processing executed by a portable terminal during map display, according to a fourth embodiment;
Fig. 16 is a flow chart for processing executed by an in-vehicle device during map display, according to the fourth embodiment;
Fig. 17 is a figure showing the structure of an in-vehicle information system, according to a fifth embodiment of the present invention;
Fig. 18 is a figure showing an example of menu screen images that are displayed both upon an in-vehicle device and upon a portable terminal, according to the fifth embodiment;
Fig. 19 is a figure showing an example of a map screen image that is displayed upon the portable terminal, according to the fifth embodiment;
Fig. 20 is a figure showing an example of a map screen image that is displayed upon the in-vehicle device, according to the fifth embodiment;
Fig. 21 is a flow chart for processing executed by the in-vehicle device, according to the fifth embodiment;
Fig. 22 is a flow chart for processing executed by the portable terminal, according to the fifth embodiment;
Fig. 23 is a flow chart for processing executed by the portable terminal during map display, according to the fifth embodiment;
Fig. 24 is a figure showing an example of display of a map screen image upon the in-vehicle device and of display of a nearby facility list upon the portable terminal, according to the fifth embodiment;
Fig. 25 is a figure showing an example of menu screen images that are displayed both upon an in-vehicle device and upon a portable terminal, according to a sixth embodiment;
Fig. 26 is a flow chart for processing executed by the in-vehicle device, according to the sixth embodiment;
Fig. 27 is a flow chart for processing executed by the portable terminal, according to the sixth embodiment; and
Fig. 28 is a figure showing a situation in which a program is supplied to a portable terminal.

### DESCRIPTION OF EMBODIMENTS

### Embodiment #1

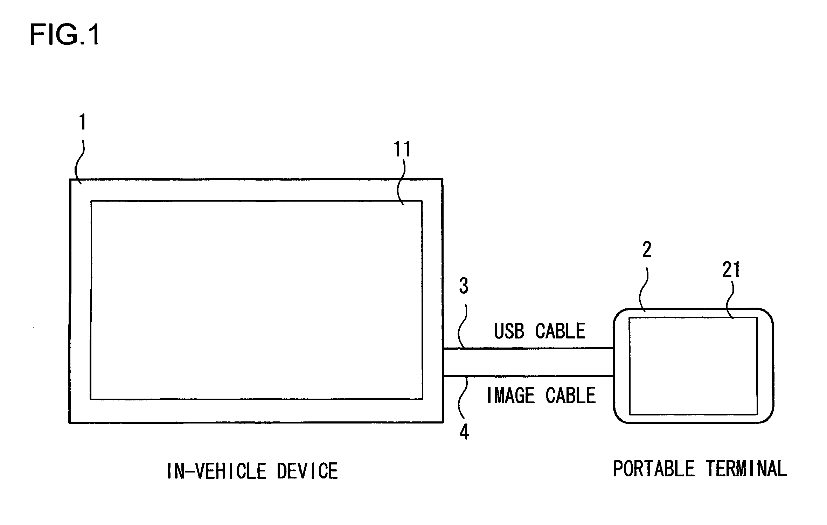

Fig. 1 is a figure showing the structure of an in-vehicle information system, according to a first embodiment of the present invention. The in-vehicle information system shown in Fig. 1 is used in the state of being mounted to a vehicle, and is implemented by an in-vehicle device 1 and a portable terminal 2 being mutually connected together via a USB (Universal Serial Bus) cable 3 and an image cable 4. The in-vehicle device 1 is fixed within a vehicle, and is, for example, installed in an instrument panel or the like of the vehicle. The portable terminal 2 is a portable information terminal that can be carried around by a user, and may, for example, be a portable telephone or a smart phone or the like.

A display unit 11 is provided to the in-vehicle device 1. The display unit 11 is a touch panel type display monitor that is capable of displaying images of various types, and, for example, may consist of a combination of resistive film type touch panel switches and a liquid crystal display. By performing touch operation with his finger or the like at any desired position on the display unit 11, and by thus designating an icon or operation button or the like displayed in that position, the user is able to cause the portable terminal 2 to execute various functions as desired. It should be understood that, in addition to the display unit 11, it would also be acceptable further to provide the in-vehicle device 1 with various operation switches corresponding to predetermined operations.

A display unit 21 is provided to the portable terminal 2. The display unit 21 is a touch panel type display monitor that is capable of displaying images of various types, and may, for example, consist of a combination of capacitance type touch panel switches and a liquid crystal display. By touching any desired position upon the display unit 21, according to the details of the images being displayed upon the display unit 21, the user is able to cause the portable terminal 2 to execute various functions as desired. It should be understood that, in a similar manner to the case for the previously described in-vehicle device 1, in addition to the display unit 21, it would also be acceptable further to provide the portable terminal 2 with various operation switches that correspond to predetermined operations.

Upon the display unit 11 of the in-vehicle device 1, it is possible to display either a screen image generated by the in-vehicle device 1 or the same screen image as the one being displayed upon the portable terminal 2. If the same screen image as the one being displayed upon the portable terminal 2 is to be displayed upon the display unit 11, then the portable terminal 2 converts the screen image for the display unit 21 to an image signal, and outputs this image signal to the in-vehicle device 1 via the image cable 4. Due to this, while the screen image is being displayed upon the display unit 21, at the same time the image signal can be outputted from the portable terminal 2 to the in-vehicle device 1, so that the same screen image can be displayed upon its display unit 11.

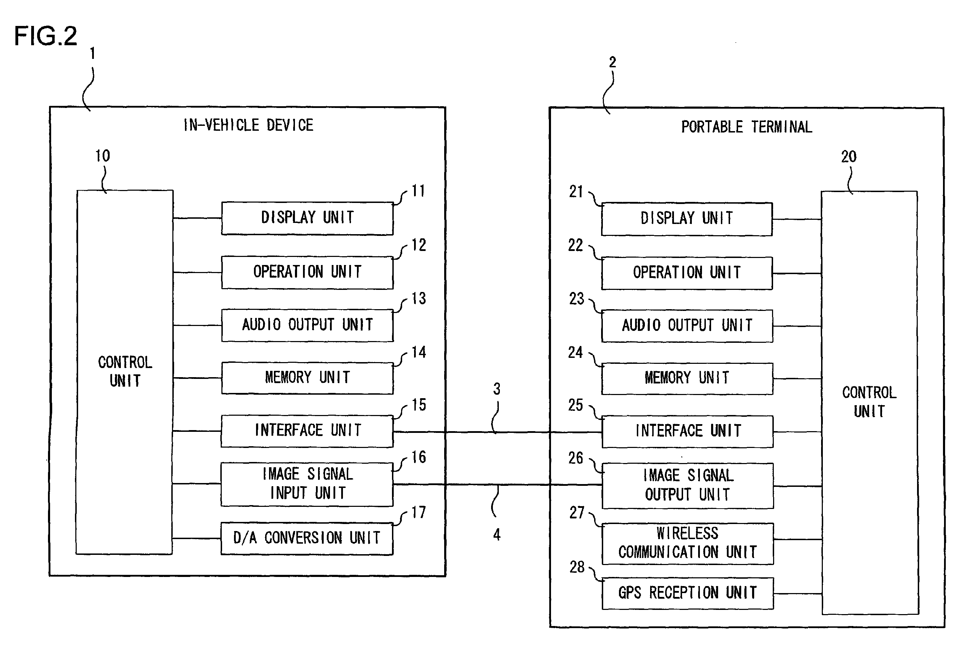

Fig. 2 is a block diagram showing the structures of the in-vehicle device 1 and of the portable terminal 2. As shown in Fig. 2, the in-vehicle device 1 comprises a control unit 10, a display unit 11, an operation unit 12, an audio output unit 13, a memory unit 14, an interface unit 15, an image signal input unit 16, and a D/A conversion unit 17. On the other hand, the portable terminal 2 comprises a control unit 20, a display unit 21, an operation unit 22, an audio output unit 23, a memory unit 24, an interface unit 25, an image signal output unit 26, a wireless communication unit 27, and a GPS (Global Positioning System) reception unit 28.

In the in-vehicle device 1, the control unit 10 comprises a microprocessor and peripheral circuitry of various types, RAM, ROM, and so on, and executes processing of various types on the basis of a control program that is recorded in the memory unit 14. And, due to this processing performed by the control unit 10, various types of image display processing and audio output processing and so on are executed.

As previously described with reference to Fig. 1, the display unit 11 is a display monitor that may consist of a liquid crystal display or the like. The operation unit 12 is a section for detecting touch operation by the user upon the display unit 11, and corresponds to the touch panel switches described above. It should be understood that though the display unit 11 and the operation unit 12 are shown separately in Fig. 2, actually these are integrated together and constitute a touch panel type display monitor. Moreover, if operation switches are provided to the in-vehicle device 1 as previously described, then these operation switches are also included in the operation unit 12. The information of input operations that the user performs upon the operation unit 12 is outputted to the control unit 10, and is reflected in the processing performed by the control unit 10.

The audio output unit 13 includes an amp, a speaker, and so on, and can output various types of audio according to control by the control unit 10. For example, music reproduced from music data read out from the portable terminal 2 or from a recording medium not shown in the figures, or guidance audio for guiding the vehicle to a destination or the like, may be outputted from the audio output unit 13.

The memory unit 14 is a non volatile data storage device, and for example may be implemented with a HDD (hard disk drive) or a flash memory or the like. Various types of data are stored in the memory unit 14, such as for example the control program described above that is used by the control unit 10 and so on. According to requirements, reading out of data from the memory unit 14 and writing of data into it are performed under the control of the control unit 10.

According to control by the control unit 10, the interface unit 15 performs interface processing that is required when performing transmission and reception of information to and from the portable terminal 2 via the USB cable 3. For example, it converts information outputted from the control unit 10 into a predetermined signal format and transmits the result to the portable terminal 2, and receives information outputted in a predetermined signal format from the portable terminal 2 and outputs it to the control unit 10. The interface processing performed by the interface unit 15 is performed according to a prescribed communication standard for USB.

The image signal input unit 16 converts an image signal inputted from the portable terminal 2 via the image cable 4 to image data for screen image display, and outputs that image data to the control unit 10. When image data is outputted from the image signal input unit 16 to the control unit 10, the control unit 10 controls the display unit 11, and causes the display unit 11 to display a screen image on the basis of this image data. Due to this it is possible to display, upon the display unit 11, the same screen image as the one being displayed upon the portable terminal 2, as previously described.

Under control by the control unit 10, the D/A conversion unit 17 converts the audio data in digital format transmitted from the portable terminal 2 via the USB cable 3 and received by the interface unit 15 into an audio signal in analog form, and outputs the result to the audio output unit 13. And it is possible to output music or guidance audio as previously described by driving the amp and/or the speaker of the audio output unit 13 on the basis of this audio signal.

On the other hand, in a similar manner to the case with the control unit 10 of in-vehicle device 1, in the portable terminal 2, the control unit 20 comprises a microprocessor and peripheral circuitry of various types, and RAM, ROM, and so on, and executes processing of various types on the basis of a control program that is recorded in the memory unit 24.

As previously described, the display unit 21 is a display monitor such as a liquid crystal display or the like. The operation unit 22 is a section for detecting touch operation by the user upon the display unit 21, and corresponds to the touch panel switches described above. It should be understood that though the display unit 21 and the operation unit 22 are shown separately in Fig. 2, actually these are integrated together and constitute a touch panel type display monitor. Moreover, if operation switches are provided to the portable terminal 2 as previously described, then these operation switches are also included in the operation unit 22. The information of input operations that the user performs upon the operation unit 22 is outputted to the control unit 20, and is reflected in the processing performed by the control unit 20.

The audio output unit 23 includes an amp, a speaker, and so on, and can output various types of audio according to control by the control unit 20. For example, when the portable terminal 2 is being employed for conducting a telephone conversation, the voice of the opposite party in the telephone conversation may be outputted from the audio output unit 23.

The memory unit 24 is a non volatile data storage device similar to the memory unit 14 of the in-vehicle device 1, and stores various types of data for use in the processing by the control unit 20. Application programs of various kinds (hereinafter simply termed "applications") that the user has obtained in advance are stored in this memory unit 24. Functions of various kinds can be implemented on the portable terminal 2 by the user selecting one application from among the applications of various types stored in the memory unit 24 and causing the control unit to execute that application.

In a similar manner to the case with the interface unit 15 of the in-vehicle device 1, the interface unit 25 performs interface processing on the basis of a prescribed communication standard for USB. In other words, communication between the in-vehicle device 1 and the portable terminal 2 is performed in the state in which the interface unit 15 and the interface unit 25 are connected together via the USB cable 3.

The image signal output unit 26 converts a screen image that has been generated by the control unit 20 for display by the in-vehicle device 1 into an image signal, and outputs that image signal to the in-vehicle device 1 via the image cable 4. By this image signal being inputted to the image signal input unit 16 in the in-vehicle device 1, the same screen image as the one being displayed upon the display unit 21 can be displayed upon the display unit 11, as previously described.

The wireless communication unit 27 performs wireless communication for connecting the portable terminal 2 to another portable terminal or to a server, via a wireless communication network not shown in the figures. Via wireless communication performed by the wireless communication unit 27, the portable terminal 2 is able to conduct a telephone conversation with another portable terminal, and to download a desired application from a server. It should be understood that, in this wireless communication performed by the wireless communication unit 27, for example, a portable telephone network or an internet network via a wireless LAN or the like may be used as the wireless communication network.

The GPS reception unit 28 receives GPS signals transmitted from the GPS satellites and outputs them to the control unit 20. Information is included in the GPS signals related to the positions of the GPS satellites that transmit these GPS signals and to the time of transmission, and serves as information for obtaining the current position of the portable terminal 2 and the present time. Accordingly, by receiving GPS signals from a predetermined number of GPS satellites or more, it is possible for the control unit 20 to calculate the current position and the present time on the basis of this information.

Next, processing performed by this in-vehicle information system will be explained. In the state in which the in-vehicle device 1 and the portable terminal 2 are connected together, by executing applications of various kinds upon the portable terminal 2, this in-vehicle information system is able to perform processing of various kinds corresponding to these applications. For example, if an application for navigation is executed, then navigation processing is performed for guiding the vehicle to a destination. In this navigation processing, a map screen image is created by the portable terminal 2 for a predetermined map range in the vicinity of the current position or the like, and this map screen image is transmitted to the in-vehicle device 1 while being displayed upon the display unit 21. Due to this, it is arranged for it to be possible to display the same map screen image upon the display unit 11 of the in-vehicle device 1 as well. Moreover, a recommended path from a departure point to a destination is found in advance on the portable terminal 2, and, when the vehicle gets near to a guidance point upon the recommended path, information is transmitted from the portable terminal 2 to the in-vehicle device 1 for output of guidance audio corresponding to the direction of progression of the vehicle at this guidance point. Due to this, it is arranged for it to be possible to output guidance audio from the audio output unit 13 of the in-vehicle device 1. By arranging to display a map screen image upon the display unit 11 and to output guidance audio from the audio output unit 13 as explained above, the in-vehicle device 1 issues notification to the user in order to make it possible for the user to drive the vehicle to the destination without going astray.

Furthermore, even in the state in which it is not connected to the in-vehicle device 1, the portable terminal 2 can still execute the application for navigation. In this case, as a map screen image that is suitable for employment when the portable terminal 2 is being used by itself, the portable terminal 2 creates a map screen image in a different format from the one that is used when the in-vehicle device 1 is connected, and displays that map screen image upon the display unit 21.

With regard to data of various types such as map data that is required in order for the portable terminal 2 to execute the application for navigation and so on, it would be acceptable to arrange to use data that is stored in advance in the memory unit 24 of the portable terminal 2. Or, alternatively, it would also be acceptable to arrange to store only the necessary minimum limit of data in the memory unit 24, and, when the portable terminal 2 is to execute the application for navigation, to arrange for it to acquire the required data each time that it is needed by connecting to a predetermined server using the wireless communication unit 27.

Among a plurality of applications as described above that include an application for navigation, an application that has been selected by the user is executed by the portable terminal 2. The user can perform selection of the application to be executed by the portable terminal 2 by selecting the desired application by touch operation upon a menu screen image displayed upon the display unit 21 of the portable terminal 2, using the operation unit 22.

Furthermore, the portable terminal 2 transmits, to the in-vehicle device 1, an image signal of the menu screen image being displayed upon the display unit 21. And, on the basis of this image signal transmitted from the portable terminal 2, the in-vehicle device 1 displays, on the display unit 11, the same menu screen image as the one on the display unit 21. When, on this menu screen image, the user selects the desired application by touch operation upon the display unit 11 using the operation unit 12, the in-vehicle device 1 transmits to the portable terminal 2 touch operation information specifying the position on the screen that has been thus designated by touch operation. And, on the basis of this touch operation information transmitted from the in-vehicle device 1, the portable terminal 2 recognizes which application the user has selected, and executes that application. Due to this, the user is able to perform selection of an application to be executed by the portable terminal 2, in a similar manner to the case of using a menu screen image displayed upon the display unit 21 of the portable terminal 2.

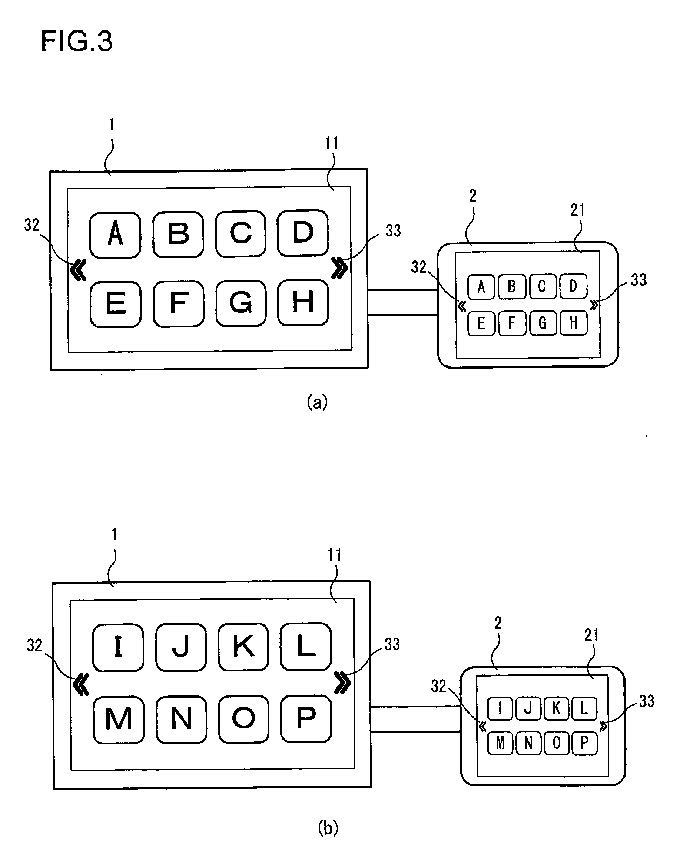

Fig. 3 is a figure showing examples of menu screen images that are displayed upon each of the in-vehicle device 1 and the portable terminal 2. When the in-vehicle device 1 and the portable terminal 2 are connected together, the menu screen images as shown in Fig. 3 (a), for example, are displayed upon the display unit 11 of the in-vehicle device 1 and upon the display unit 21 of the portable terminal 2 respectively.

In Fig. 3(a), eight icons corresponding to applications "A" through "H" are arranged on a menu screen image that is displayed both upon the display unit 21 of the portable terminal 2 and also upon the display unit 11 of the in-vehicle device 1. Furthermore, arrow signs 32 and 33 corresponding to the left and right directions are also displayed. Operations for changing over the menu screen images are assigned to these arrow marks.

When the user selects the arrow sign 32 or 33 by touch operation upon the display unit 11, touch operation information specifying this touch position is transmitted from the in-vehicle device 1 to the portable terminal 2. At this time, the portable terminal 2 changes over the menu screen image to a different menu screen image, upon which different icons from those up until now are arranged. If the portable terminal 2 has a large number of applications and it is not possible to display icons for all the applications upon the menu screen image at once, then a plurality of menu screen images are established corresponding to the icons that are to be displayed by the portable terminal 2. Thus, it is made possible for the user to select any icon that he desires by changing over the menu screen images according to the procedure described above. It should be understood that, when three or more menu screen images are established upon the portable terminal 2, then it would be acceptable to make the changeover sequence of menu screen images change when the arrow sign 32 is selected, and when the arrow sign 33 is selected.

On the other hand, when the user is operating the portable terminal 2, apart from selection of the arrow sign 32 or 33 by touch operation, he can also change over the menu screen image by performing a type of touch operation called flick operation. Flick operation is touch operation that is performed by pulling in some predetermined direction, for example in the left or the right direction. By the user performing flick operation when a menu screen image is being displayed upon the display unit 21, he is able to change over between menu screen images. In other words, on the in-vehicle device 1, changing over of the menu screen images is implemented by touch operation of the arrow signs 32 and 33, instead of by flick operation.

It should be understood that if the number of applications that the portable terminal 2 has is not very great, and it is possible to display icons for them all at one time upon a single menu screen image, then there is no need for changing over of the menu screen images as described above to be performed. In this case, it would be acceptable not to display the arrow signs 32 and 33 upon the menu screen image.

When changing over between the menu screen images by the type of operation described above is performed, the portable terminal 2 transmits to the in-vehicle device 1 an image signal corresponding to the menu screen image after changeover. And, by this menu screen image being displayed upon the display unit 11 of the in-vehicle device 1 on the basis of this image signal, the menu screen image that is being displayed upon the in-vehicle device 1 is also changed over. As a result, for example, a menu screen image such as shown in Fig. 3(b) is displayed both upon the display unit 11 of the in-vehicle device 1 and also upon the display unit 21 of the portable terminal 2. On this menu screen image, eight icons corresponding to applications "I" through "P" are arranged, these being different applications from those on the screen image of Fig. 3(a).

When, by touch panel operation, the user selects some icon on a menu screen image such as explained above, then the application corresponding to that icon is started on the portable terminal 2.

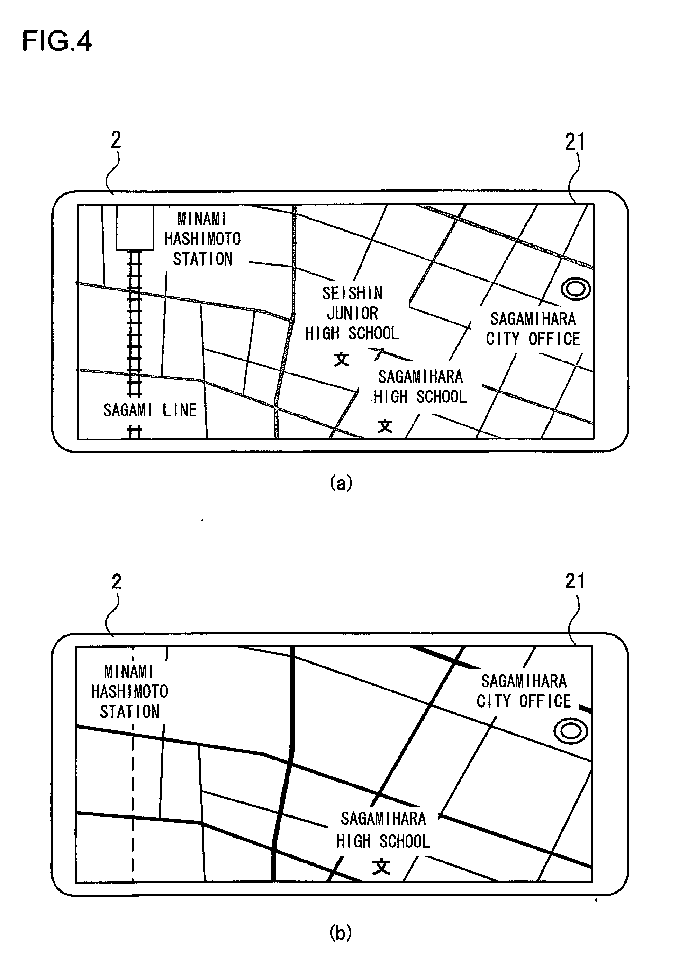

Fig. 4 shows examples of map screen images that are displayed upon the display unit 21 of the portable terminal 2 when an application for navigation is being executed. When an application for navigation is executed, the portable terminal 2 creates a map screen image by the method previously described for a predetermined map range around the current position or the like, and displays this map screen image upon the display unit 21.

Fig. 4(a) shows an example of a map screen image that is displayed upon the display unit 21 in the state in which the in-vehicle device 1 and the portable terminal 2 are not mutually connected together. This map screen image is displayed only upon the display unit 21 of the portable terminal 2, and is not displayed upon the display unit 11 of the in-vehicle device 1. In the following, this type of map screen image will be termed a "private map screen image".

On the other hand, Fig. 4(b) shows an example of a map screen image that is displayed upon the display unit 21 in the state in which the in-vehicle device 1 and the portable terminal 2 are mutually connected together. This map screen image is converted to an image signal by the portable terminal 2, and is transmitted to the in-vehicle device 1. By screen image display on the basis of this image signal being performed by the in-vehicle device 1, the same map screen image is also displayed upon the display unit 11.

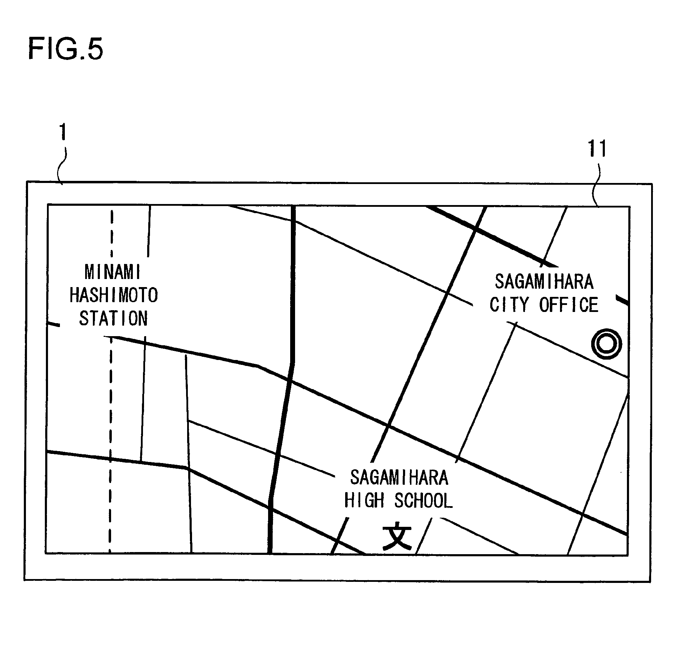

Fig. 5 is an example of a map screen image that is displayed upon the display unit 11 of the in-vehicle device 1. This map screen image is one that is the same as the map screen image shown in Fig. 4(b). In the following, a map screen image that is displayed in common by both the in-vehicle device 1 and also the portable terminal 2 will be termed a "common map screen image".

When the private map screen image shown in Fig. 4(a) and the common map screen image shown in Figs. 4(b) and 5 are compared together, it will be understood that on the common map screen image, along with the size of the text and the size of the map symbols being increased as compared to those on the private map screen image, also the hue and the thickness of the lines that symbolize roads are changed to a format that is easier to see. Moreover, the line that symbolizes a railroad line is changed to a format that does not stand out so much, and also some of the text saying "Sagami Line" and "Seishin Junior High School" and so on, some of the map symbols, and some of the lines that symbolize roads and so on, are eliminated.

As has been explained above, by displaying the private map screen image upon the display unit 21 when the in-vehicle device 1 and the portable terminal 2 are not mutually connected together, it is possible to provide a map screen image that is easy to see in the case of the portable terminal 2. In other words, since the operation of the portable terminal 2 is performed with the user holding it in his hand, the distance from the eyes of the user to the display unit 21 is normally around 30 cm, and this is comparatively close. Due to this, it is possible to supply a large amount of map information to the user by displaying a private map screen image like that of Fig. 4(a) upon the display unit 21. On the other hand, by displaying the common map screen image upon the display unit 11 when the in-vehicle device 1 and the portable terminal 2 are mutually connected together, it is possible to provide a map screen image that is easy to see in the case of the in-vehicle device 1. In other words, since the in-vehicle device 1 is installed in the instrument panel of the vehicle or the like, accordingly the distance from the eyes of the user to the display unit 11 is greater than in the case of the portable terminal 2. Due to this, by displaying a common map screen image like that shown in Fig. 5 upon the display unit 11, it is possible to supply the map information that is necessary for driving the vehicle to the user in an easily understandable manner.

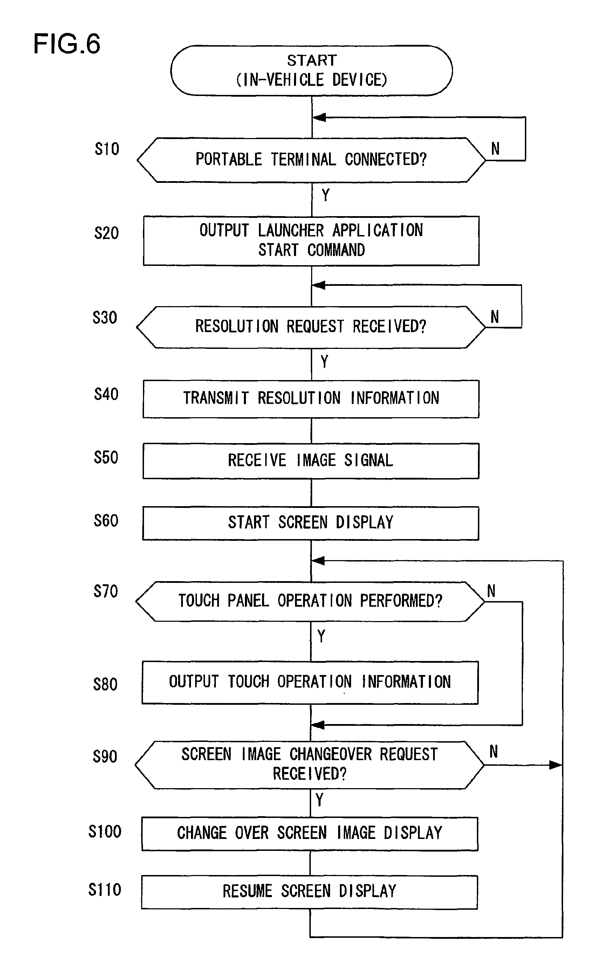

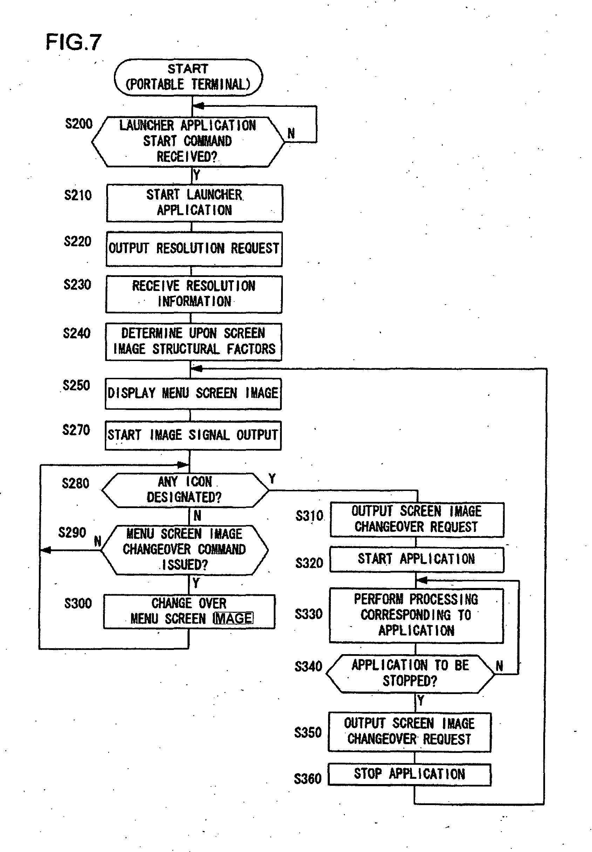

Flow charts for processing by the in-vehicle device 1 and the portable terminal 2 are shown in Figs. 6 and 7. Fig. 6 is a flow chart showing processing by the in-vehicle device 1, and Fig. 7 is a flow chart showing processing by the portable terminal 2.

First, the flow chart of Fig. 6 will be explained. The processing shown in the flow chart of Fig. 6 is executed by the control unit 10 of the in-vehicle device 1.

First, in the step S10, the control unit 10 makes a decision as to whether or not the portable terminal 2 is connected. And, when the in-vehicle device 1 and the portable terminal 2 are connected together via the USB cable 3 and the image cable 4 as shown in Fig. 1, then the flow of control proceeds to the next step S20.

In the step S20, the control unit 10 outputs a launcher application start command to the portable terminal 2. This launcher application is an application that is executed by the portable terminal 2 in order to create the menu screen image shown in Fig. 3 and to output it to the in-vehicle device 1, and in order to recognize the details of touch panel operation that the user has performed, according to touch operation information transmitted from the in-vehicle device 1. This output of the launcher application start command is performed via the interface unit 15 and the USB cable 3. It should be understood that, if the launcher application has already been started upon the portable terminal 2, then there is no need to output a start command for the launcher application again.

Then in the step S30 the control unit 10 makes a decision as to whether or not a resolution request asking for the resolution of the display unit 11 has been issued from the portable terminal 2. When the in-vehicle device 1 and the portable terminal 2 are mutually connected together via the USB cable 3 and the image cable 4, and a start command for the launcher application is outputted from the in-vehicle device 1 to the portable terminal 2 in the step S20, corresponding thereto, a resolution request is outputted from the portable terminal 2 by a step S220 of Fig. 7 that will be described hereinafter being executed by the portable terminal 2. This resolution request is transmitted to the in-vehicle device 1 via the USB cable 3, and is received by the interface unit 15 of the in-vehicle device 1 and is outputted to the control unit 10. When a resolution request has been received from the portable terminal 2 in this manner, then the flow of control proceeds to the next step S40.

In the step S40, in response to the resolution request from the portable terminal 2 that has been received in the step S30, the control unit 10 transmits resolution information related to the resolution of the display unit 11 to the portable terminal 2. Here, for example, information specifying the screen size of the display unit 11 and its number of pixels vertically and horizontally may be transmitted as resolution information. This resolution information transmission is performed via the interface unit 15 and the USB cable 3.

Then in the step S50 the control unit 10 receives an image signal outputted from the portable terminal 2. Here, an image signal that the portable terminal 2 starts to output by executing the step S270 of Fig. 7 that will be explained hereinafter is inputted to the image signal input unit 16 via the image cable 4. The image signal input unit 16 outputs the image signal that has been inputted, to the control unit 10 after having converted it into image data for screen image display. Due to this, the image signal is received by the control unit 10. Subsequently, this reception of the image signal outputted from the portable terminal 2 is continued.

Then in the step S60 the control unit 10 starts screen image display on the basis of the image signal received in the step S50. Here, screen image display is started by displaying an screen image based upon the image data outputted from the image signal input unit 16 in the step S50 upon the display unit 11. Due to this, for example, a menu screen image such as that shown in Fig. 3 is displayed upon the display unit 11.

Then in the step S70 the control unit 10 makes a decision as to whether or not touch panel operation has been performed by the user upon the display unit 11. If the user has performed touch operation to designate some position upon the screen of the display unit 11, then the flow of control proceeds to the step S80, and in this step S80 touch operation information specifying the position upon the screen that has been designated by this touch operation is outputted to the portable terminal 2. This output of touch operation information is performed via the interface unit 15 and the USB cable 3. After touch operation information has been outputted in the step S80, the flow of control proceeds to the step S90. On the other hand, if it is decided in the step S70 that touch operation has not been performed, then the step S80 is not executed, and the flow of control is transferred to the step S90.

In the step S90, the control unit 10 makes a decision as to whether or not an screen image changeover request has been received from the portable terminal 2. When an application is started and the screen image on the display unit 11 is to be changed over from the menu screen image to an execution screen image for the application, or when an application that has been executing up until this time point terminates and return to the menu screen image is to be performed, the portable terminal 2 outputs a screen image changeover request to the in-vehicle device 1 by executing a step S310 or a step S350 of Fig. 7 that will be described hereinafter. For example, as will be described hereinafter, a screen image changeover request may be sent from the portable terminal 2 to the in-vehicle device 1 by output of a session end notification for the application that has been executing up until the present time point. This screen image changeover request is transmitted to the in-vehicle device 1 via the USB cable 3, and is received by the interface unit 15 of the in-vehicle device 1 and is outputted to the control unit 10. When a screen image changeover request has been received in this manner, the flow of control proceeds to the next step S100. On the other hand, if no screen image changeover request has been received from the portable terminal 2, then the flow of control returns to the step S70, and the processing described above is repeated.

In the step S100, the control unit 10 temporarily interrupts its screen image display on the basis of the image signal from the portable terminal 2, and provides a predetermined screen image changeover display upon the display unit 11. Here, for example, a message to the effect that the screen image is changing over, or a display animation effect that shows that the screen image is being changed over, or the like may be displayed upon the display unit 11 for a predetermined display interval. By doing this, it is possible to prevent flickering or the like from occurring during the screen image changeover, and it is possible to ensure that the user does not experience any feeling of discomfort due to the screen going dark. When the screen image changeover display in this step S100 is completed, the control unit advances the flow of control to the next step S110. It should be understood that it would also be acceptable to arrange to determine the timing of the end of screen image changeover display after a display time period that has been determined in advance elapses, or to arrange for this timing to be determined according to control from the portable terminal 2. For example, when an application is started upon the portable terminal 2, sometimes it is the case that a notification of the start of this application session is outputted from the portable terminal 2 to the in-vehicle device 1, in order for communication to be performed in connection with this application to be established between the in-vehicle device 1 and the portable terminal 2. Due to receipt of this application session start notification, it is possible for the in-vehicle device 1 to determine the timing of the end of screen image changeover display.

In the step S 110, the control unit 10 resumes screen image display on the basis of the image signal from the portable terminal 2 that was interrupted when the step S 100 was performed, so that, as a result, display of the screen image after changeover is performed upon the display unit 11. When this step S 110 has been executed, the control unit 10 returns the flow of control to the step S70, and the processing described above is repeated.

Next, the flow chart of Fig. 7 will be explained. The processing shown in the flow chart of Fig. 7 is executed by the control unit 20 of the portable terminal 2.

In a first step S200, the control unit 20 makes a decision as to whether or not a launcher application start command has been received from the in-vehicle device 1. When, as shown in Fig. 1, the in-vehicle device 1 and the portable terminal 2 are mutually connected together via the USB cable 3 and the image cable 4, and a launcher application start command outputted from the in-vehicle device 1 has been received due to the step S20 of Fig. 6 being executed by the in-vehicle device 1, then the flow of control proceeds to the next step S210.

In this step S210, the control unit 20 starts the launcher application. At this time, in order to establish communication with the in-vehicle device 1, the control unit 20 outputs a launcher application session start notification to the in-vehicle device 1. In this launcher application session, a series of communication steps to be performed by the launcher application between the in-vehicle device 1 and the portable terminal 2 are prescribed. This launcher application session start notification is transmitted to the in-vehicle device 1 via the USB cable 3, and is received by the interface unit 15 of the in-vehicle device 1 and is outputted to the control unit 10. It should be understood that, if the launcher operation has already been started, then the processing of this step S210 is omitted, and the flow of control proceeds to the next step S220.

In the step S220, the control unit 20 outputs a resolution request for the resolution of the display unit 11 to the in-vehicle device 1. Output of this resolution request is performed via the interface unit 25 and the USB cable 3.

In the step S230, the control unit 20 receives resolution information transmitted from the in-vehicle device 1 in response to the resolution request outputted in the step S220. Here, resolution information as described above transmitted by the step S40 of Fig. 6 being executed by the in-vehicle device 1 is received via the USB cable 3 and the interface unit 25.

In the step S240, on the basis of the resolution information received in the step S230, the control unit 20 determines upon the screen image structural elements to be used when the in-vehicle device 1 is connected. Here, for the various screen image structural elements to be used on various screen images such as the map screen image previously described and so on, such as text, lines, icons and so on, the sizes and fonts for the text, the thicknesses and hues for the lines, the sizes of the icons and so on are determined. It should be understood that, for screen image structural elements other than text, lines, and icons as well, the formats to be used in the content corresponding to those screen image structural elements may also be determined.

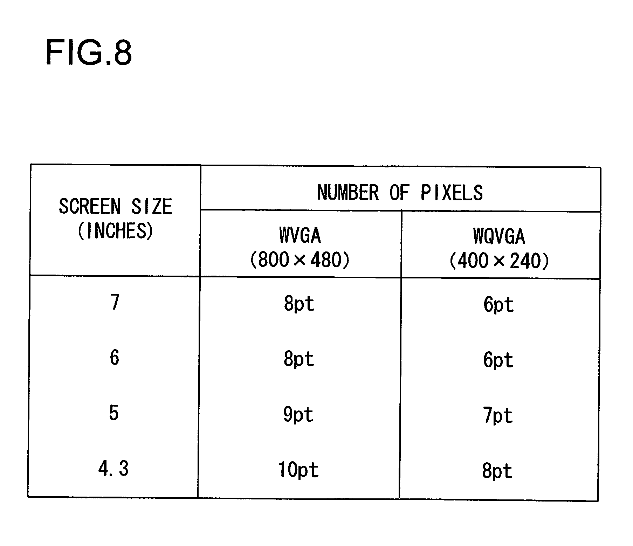

Fig. 8 shows an example of a table to which reference is made during determination of the screen image structural factors in the step S240. In this example, the sizes of the text to be used in screen image display corresponding to screen sizes of 7 inches, 6 inches, 5 inches, and 4.3 inches, and to numbers of pixels 800×480 and 400×240, are specified in points. In the portable terminal 2, a table of this type is stored in the memory unit 24 or the like in advance, and, when the resolution information is received from the in-vehicle device 1 in the step S230, the size of the text to be used is determined by referring to the corresponding portion of this table, on the basis of the information included in this resolution information specifying the screen size and the number of pixels of the display unit 11. The screen image structural factors may, for example, be determined on the basis of the resolution information in this manner. It should be understood that the table shown in Fig. 8 is only an example, and its details should not be considered as being limitative.

While, in the example described above, the case of determining the size of the text has been explained, it would also be possible to determine upon the other screen image structural factors by a similar method. Or alternatively, it would also be acceptable to employ some method other than reference to a table. For example, it would be possible to determine upon the size for the text and upon the thickness for the lines by using a predetermined equation for calculation.

Moreover, while in the example described above the explanation was made in terms of the screen size for the display unit 11 and its numbers of pixels horizontally and vertically being specified, it would also be acceptable to arrange to refer to details of other types. For example, it would also be acceptable to arrange to express the resolution information by using the pixel density, the pixel size, the vertical to horizontal aspect ratio, or the like. Or, alternatively, if the type of in-vehicle device 1 to which the portable terminal 2 is to be connected is determined in advance, then it would be acceptable to arrange for a resolution for each type of in-vehicle device to be stored in advance in the portable terminal 2, and, as the resolution information, to transmit information from the in-vehicle device 1 specifying what type of in-vehicle device 1 has been connected.

In the step S250, the control unit 20 creates a menu screen image and displays it upon the display unit 21. Due to this, a menu screen image upon which a plurality of icons are arranged such as that shown in Fig. 3 is displayed upon the display unit 21.

In the step S270, the control unit 20 starts output of an image signal to the in-vehicle device 1. At this time, the control unit 20 outputs the menu screen image that was displayed upon the display unit 21 in the step S250 to the image signal output unit 26. And the image signal output unit 26 converts the menu screen image outputted from the control unit 20 to an image signal, and outputs this image signal to the in-vehicle device 1 via the image cable 4. By this image signal being received by the in-vehicle device 1, a menu screen image such as that shown in Fig. 3 is displayed upon the display unit 11 of the in-vehicle device 1. Subsequently, this output of the image signal is continued.

In the step S280, the control unit 20 makes a decision as to whether or not any icon has been designated by touch operation by the user on the menu screen image that was displayed upon the display unit 21 in the step S250, or upon the menu screen image that has been displayed upon the display unit 11 of the in-vehicle device 1 on the basis of the image signal. At this time, the details of touch operation on the menu screen image of the in-vehicle device 1 is determined on the basis of touch operation information transmitted from the in-vehicle device 1 in the step S80 of Fig. 6. If no icon has been designated, then the flow of control proceeds to the step S290, while if any icon has been designated, then the flow of control proceeds to the step S310.

In the step S290, the control unit 20 makes a decision as to whether or not a menu screen image changeover command has been issued. Here, as previously described, when the arrow sign 32 or 33 of Fig. 3 is selected by touch operation by the user upon the menu screen image on the in-vehicle device 1 or on the portable terminal 2, or when a flick operation is performed upon the portable terminal 2, then it is determined that a menu screen image changeover command has been issued, and the flow of control proceeds to the step S300. On the other hand, if none of these operations has been performed, then it is determined that no menu screen image changeover command has been issued, and the flow of control returns to the step S280.

In the step S300, the control unit 20 changes over the menu screen image. At this time, the menu screen image that is being displayed upon the display unit 21 is changed over by the procedure described above, and thereafter the menu screen image on the in-vehicle device 1 is also changed over by output of an image signal. When this step S300 has been executed, the flow of control returns to the step S280.

In the step S310, the control unit 20 outputs a screen image changeover request to the in-vehicle device 1. Here, for example, the launcher application that was started in the step S210 is temporarily stopped, and a notification of the end of the launcher application session is outputted to the in-vehicle device 1. Upon receipt thereof, the in-vehicle device 1 determines in the step S90 of Fig. 6 that a screen image changeover request has been issued. In other words, by a launcher application session end notification being outputted from the portable terminal 2 to the in-vehicle device 1, the screen image changeover request can be outputted. This output of the screen image changeover request is performed via the interface unit 25 and the USB cable 3.

In the step S320, the control unit 20 starts the application corresponding to the icon that was determined, in the step S280, as having been designated.

In the next step S330, the control unit 20 performs processing corresponding to the application that was started in the step S320. At this time, along with displaying a screen image generated by the application being executed upon the display unit 21, also an image signal for this screen image is transmitted to the in-vehicle device 1. And screen image display upon the display unit 11 is performed by the in-vehicle device 1 on the basis of this image signal that is received. Due to this, when for example an application for navigation is being executed, a common map screen image as shown in Figs. 4(b) and 5 is displayed both upon the display unit 21 and upon the display unit 11.

In the step S340, the control unit 20 makes a decision as to whether or not to stop the application that was started in the step S320. If a predetermined termination operation for stopping the application has been performed upon the in-vehicle device 1 or upon the portable terminal 2, then the control unit 20 determines that the application being executed is to be stopped, and the flow of control proceeds to the step S350. On the other hand, if no stop operation has been performed, then the control unit 20 determines that the application is not to be stopped, and the flow of control returns to the step S330 and processing corresponding to the application being executed is continued.

In the step S350, the control unit 20 outputs a screen image changeover request to the in-vehicle device 1, in a similar manner to the case in the step S310. Here, for example, a session end notification for the application that was started in the step S320 is outputted to the in-vehicle device 1. And, upon receipt thereof, the in-vehicle device 1 determines in the step S90 of Fig. 6 that a screen image changeover request has been issued.

In the step S360, the control unit 20 stops the application that was started in the step S320. After this step S360 has been executed the flow of control returns to the step S250, and display of the menu screen image is resumed and processing like that described above is repeated.

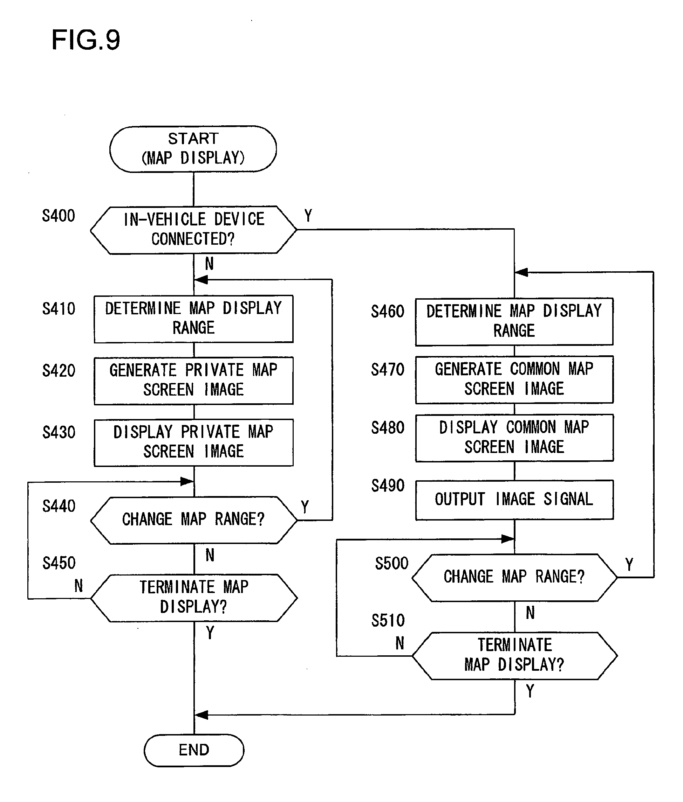

Next, map display by the application for navigation will be explained. Fig. 9 is a flow chart for processing that is executed by the portable terminal 2 during map display. This flow chart is executed by the control unit 20 when the application for navigation is started on the portable terminal 2.

In a first step S400, the control unit 20 makes a decision as to whether or not the in-vehicle device 1 is connected. If the in-vehicle device 1 is not connected to the portable terminal 2, then the flow of control proceeds to the step S410. On the other hand, if as shown in Fig. 1 the portable terminal 2 and the in-vehicle device 1 are mutually connected together via the USB cable 3 and the image cable 4, then the flow of control proceeds to the step S460.

In the step S410, the control unit 20 determines a display range for the map. Here, for example, a predetermined range from the current position, or a range specified by the user, is determined as the display range for the map.

In the step S420, for the display range determined in the step S410, the control unit 20 generates a private map screen image for display upon the portable terminal 2.

In the step S430, the control unit 20 displays the private map screen image generated in the step S420 upon the display unit 21. Due to this, for example, a map screen image like the one shown in Fig. 4(a) is displayed upon the portable terminal 2.

In the step S440, the control unit 20 makes a decision as to whether or not the map range is to be changed. If the current position has shifted, or if a predetermined operation has been performed upon the portable terminal 2 in order to change the map range, then a decision is taken to change the map range, and the flow of control returns to the step S410. In this case, by executing the processing from the step S410 onwards as previously described, a private map screen image is newly generated for the map range after change, and is displayed upon the display unit 21. On the other hand, if the map range is not to be changed, then the flow of control proceeds to the step S450.

In the step S450, the control unit 20 makes a decision as to whether or not the map display is to be terminated. If a predetermined operation for terminating the map display has been performed upon the portable terminal 2, for example an operation to terminate the application for navigation or the like, then the control unit 20 decides that the map display is to be terminated, and the processing of the Fig. 9 flow chart terminates. On the other hand, if such an operation has not been performed, then the control unit 20 decides that the map display is not to be terminated, and the flow of control returns to the step S440 and the display of the private map screen image upon the display unit 21 continues.

In the step S460, the control unit 20 determines the display range for the map, in a similar manner to the case in the step S410.

In the step S470, the control unit 20 generates a common map screen image for the display range determined in the step S460, for display on both the in-vehicle device 1 and the portable terminal 2. The size for the text on the common map screen image, the font for the text, the thickness for the roads, the size for the map symbols, the hue and so on are determined according to the screen image structural factors that were determined in the step S240 of Fig. 7. Due to this, as previously described, a common map screen image is generated in which the screen image structural elements in the private map screen image that was generated in the step S420 have been changed so that they become easier to see. At this time, as described above, it would also be acceptable to arrange to delete from the map screen image some of the map symbols and roads whose importance for guidance of the vehicle is low. It should be understood that it is not necessarily required to make changes in all of these screen image structural elements; it will be acceptable to select only some of them to be changed.

In the step S480, the control unit 20 displays the common map screen image that has been generated in the step S470 upon the display unit 21. Due to this, a map screen image such as for example shown in Fig. 4(b) is displayed upon the portable terminal 2.

In the step S490, the control unit 20 outputs an image signal for the common map screen image that has been displayed in the step S480 to the in-vehicle device 1. At this time, the control unit 20 outputs the common map screen image to the image signal output unit 26. The image signal output unit 26 converts the common map screen image outputted from the control unit 20 into an image signal, and outputs this image signal to the in-vehicle device 1 via the image cable 4. By this image signal being received by the in-vehicle device 1, a map screen image like the one shown in Fig. 5 is displayed upon the display unit 11 of the in-vehicle device 1.

In the step S500, the control unit 20 makes a decision as to whether or not the map range is to be changed. If the current position has shifted, or if a predetermined operation has been performed upon the in-vehicle device 1 or upon the portable terminal 2 in order to change the map range, then a decision is taken to change the map range, and the flow of control returns to the step S460. In this case, by executing the processing from the step S460 onwards as previously described, a common map screen image is newly generated for the map range after change, and is displayed both upon the display unit 11 and upon the display unit 21. On the other hand, if the map range is not to be changed, then the flow of control proceeds to the step S510.

In the step S510, the control unit 20 makes a decision as to whether or not the map display is to be terminated. If a predetermined operation for terminating the map display has been performed upon the in-vehicle device 1 or upon the portable terminal 2, for example an operation to terminate the application for navigation or the like, then the control unit 20 decides that the map display is to be terminated, and the processing of the Fig. 9 flow chart terminates. On the other hand, if such an operation has not been performed, then the control unit 20 decides that the map display is not to be terminated, and the flow of control returns to the step S500 and the display of the common map screen image both upon the display unit 11 and upon the display unit 21 continues.

According to the first embodiment of the present invention as explained above, the following beneficial operational effects are obtained.
(1) According to processing by the control unit 20, the portable terminal 2 determines whether or not the in-vehicle device 1 is connected (in the step S400), and generates a private map screen image (in the step S420) for display only upon the display unit 21 if it has been decided that the in-vehicle device 1 is not connected. On the other hand, if it has been decided that the in-vehicle device 1 is connected, then the portable terminal generates a common map screen image (in the step S470) for display in common both upon the display unit 21 and upon the display unit 11 that is provided to the in-vehicle device 1, and outputs this common map screen image to the in-vehicle device 1 (in the step S490). Since this is done, it is possible to control the in-vehicle device 1 from the portable terminal 2, and it is possible to provide a screen image display that is adapted to be suitable for the in-vehicle device 1.
(2) In the step S470, the control unit 20 generates the common map screen image by changing at least one of the size for the text, the font for the text, the thickness for the roads, the size for the map symbols, and the hue, from those employed for the private map screen image. Since this is done, it is possible to supply the map information that is required for driving the vehicle in an easily understood manner, and it is possible to provide a screen image display that is adapted to be suitable for the in-vehicle device 1.
(3) The control unit 20 receives the resolution information transmitted from the in-vehicle device 1 and related to the resolution of the display unit 11 (in the step S230), and generates the common map screen image on the basis thereof in the step S470. In other words, for the various screen image structural elements such as text, lines, icons and so on that are used on the common map screen image, the control unit determines the size and the font for the text, the thickness and the hue for the lines, the size for the icons and so on (in the step S240), on the basis of the common map information that has been received in the step S230. And, when generating the common map screen image in the step S470, the control unit determines the size for the text, the font for the text, the thickness for the roads, the size for the map symbols, the hue and so on according to the screen image structural factors that have been determined in this manner. Since it is arranged to do this, accordingly it is possible to generate the common map screen image according to the resolution of the display unit 11. Moreover, even if in-vehicle devices of various types are available and the resolutions of their display units 11 differ from one another, and any one of these in-vehicle devices can be connected to the portable terminal 2, it is still possible to generate map screen images that are optimized for each of these in-vehicle devices, and to display them upon the respective display units 11.
(4) The control unit 20 generates and displays the menu screen image that includes the arrow signs 32 and 33 (in the step S250), and also outputs it to the in-vehicle device 1 (in the step S270). And the menu screen image is changed (in the step S300) either when flick operation or touch operation upon the display unit 21 to select one of the arrow signs 32 and 33 is performed, or when touch operation information is transmitted (in the step S290) from the in-vehicle device 1 specifying that one of the arrow signs 32 and 33 has been selected by touch operation upon the display unit 11. Since it is arranged to do this, accordingly, even if a large number of applications are loaded upon the portable terminal 2 and it is not possible to display icons for all these applications upon the menu screen image at one time, still it is possible for the user to select any icon that he desires by changing over the menu screen image.

### Embodiment #2

Next, a second embodiment of the present invention will be explained. In the first embodiment described above, an example was explained in which the resolution information for the display unit 11 was transmitted from the in-vehicle device 1 to the portable terminal 2, and various screen image structural factors related to the characters, lines, icons and so on to be used upon the map screen image and the like were determined on the basis of this resolution information. By contrast, in this embodiment, an example will be explained in which device type information for the device type of the in-vehicle device 1 is also transmitted from the in-vehicle device 1 to the portable terminal 2, and, on the portable terminal 2, the display format for the common map screen image is determined by the application for navigation on the basis of this device type information.

It should be understood that the structure of the in-vehicle information system according to this embodiment, and the structures of the in-vehicle device 1 and of the portable terminal 2, are all the same as those shown in Figs. 1 and 2 for the first embodiment described above. Accordingly, in the following, explanation thereof will be omitted.

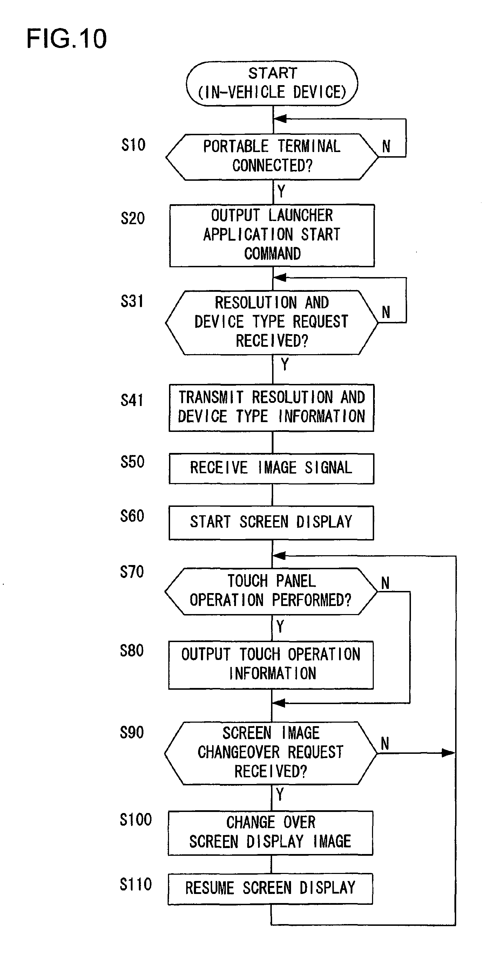

In this embodiment a flow chart for the processing executed by the in-vehicle device 1 is shown in Fig. 10, instead of the flow chart of Fig. 6 explained in connection with the first embodiment described above. It should be understood that, in this flow chart, to processing steps that execute processing whose details are the same as those of steps shown in the flow chart of Fig. 6, the same step numbers as in Fig. 6 are appended. In the following, for such processing steps to which the same step numbers as in Fig. 6 are appended, explanation is omitted unless particularly required.

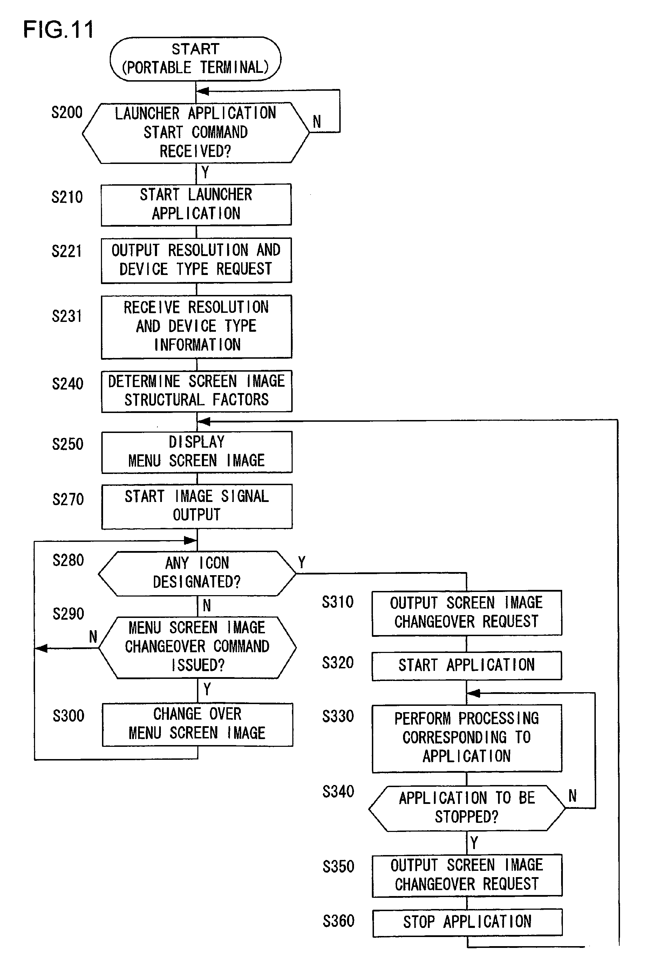

In the step S31 of Fig. 10, the control unit 10 of the in-vehicle device 1 makes a decision as to whether or not a resolution request and a device type request have been issued from the portable terminal 2. When the in-vehicle device 1 and the portable terminal 2 are mutually connected together via the USB cable 3 and the image cable 4, and a start command for the launcher application is outputted from the in-vehicle device 1 to the portable terminal 2 in the step S20, in response thereto, by a step S221 of Fig. 11 that will be explained hereinafter being executed by the portable terminal 2, a resolution request and a device type request are outputted from the portable terminal 2. This resolution request and this device type request are transmitted to the in-vehicle device 1 via the USB cable 3, and are received by the interface unit 15 of the in-vehicle device 1 and are outputted to the control unit 10. When a resolution request and a device type request have been received from the portable terminal 2 in this manner, the flow of control is transferred to the next step S41.

In the step S41, in response to the resolution request and the device type request that have been received from the portable terminal 2 in the step S31, along with the resolution information that was explained in the above description of the first embodiment, the control unit 10 also transmits device type information related to the device type of the in-vehicle device 1 to the portable terminal 2. Here, as information for specifying the device type of the in-vehicle device 1, for example, information such as the maker that manufactured the in-vehicle device 1 and its type number and so on may be transmitted as device type information. At this time, furthermore, it would also be acceptable to include information such as the maker that manufactured the liquid crystal panel included in the display unit 11 and its type number and so on in the device type information. This transmission of the resolution information and the device type information is performed via the interface unit 15 and the USB cable 3. After the resolution information and the device type information have been transmitted in the step S41, similar processing to that of Fig. 6 is performed.

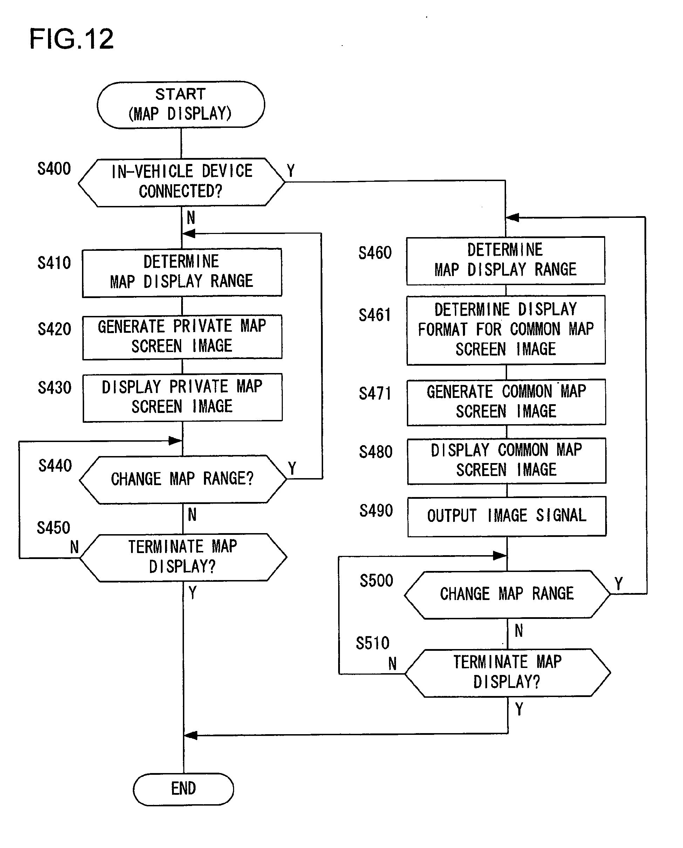

Flow charts for the processing executed by the portable terminal 2 in this embodiment are shown in Figs. 11 and 12, instead of the flow charts of Figs. 7 and 9 explained previously in connection with the first embodiment. It should be understood that, in these flow charts, to processing steps that execute processing whose details are the same as those of steps shown in the flow chart of Figs. 7 and 9, the same step numbers as in Figs. 7 and 9 are appended. In the following, for such processing steps to which the same step numbers as in Figs. 7 and 9 are appended, explanation is omitted unless particularly required.

In the step S221 of Fig. 11, the control unit 20 of the portable terminal 2 not only outputs to the in-vehicle device 1 a resolution request for the resolution of the display unit 11, but also outputs a device type request for the device type of the in-vehicle device 1. This output of the resolution request and the device type request is performed via the interface unit 25 and the USB cable 3.

In the step S231, the control unit 20 receives resolution information and device type information transmitted from the in-vehicle device 1 in response to the resolution request and the device type request that were outputted in the step S221. Here, resolution information and device type information that are transmitted as previously described by the step S41 of Fig. 10 being executed by the in-vehicle device 1 are received via the USB cable 3 and the interface unit 25. After the resolution information and the device type information have been transmitted in the step S231, similar processing to that of Fig. 7 is executed.

In the step S461 of Fig. 12, on the basis of the device type information received in the step S231 of Fig. 11, the control unit 20 determines a display format for a common map screen image to be displayed both by the in-vehicle device 1 and by the portable terminal 2. Here, the sizes, line thicknesses, hues and so on for various structural elements of the common map screen image (characters for place names and so on, map symbols, roads, polygons and so on) are determined in the following manner.

Here, it is supposed that information related to the display formats for various structural elements of map screen images that each navigation device maker employs in a standard manner is stored in advance in the portable terminal 2 in a memory unit 24. In the step S461, the control unit 20 determines upon the maker that manufactured the in-vehicle device 1 from the device type information that was received in the step S231, and specifies the display formats for the various structural elements of the map screens images corresponding to this manufacturer by using the information stored in the memory unit 24. The display formats for the various map screen image structural elements that have been specified in this manner are determined as being the display formats for the various structural elements of the common map screen image. By doing this, if the in-vehicle device 1 is a device that is capable of displaying a map screen image independently even in the state in which it is not connected to a portable terminal 2, then it is ensured that the display formats for the various map screen image structural elements that are used upon this map screen image and upon the common map screen image correspond to one another. Due to this, it is possible to ensure that a common map screen image is provided that does not impart any sense of discomfort to the user.

It should be understood that, in the step S461, it would also be acceptable to arrange also to determine the type number of the in-vehicle device 1, and the manufacturer of a liquid crystal panel that is incorporated in the display unit 11 and its type number etc. on the basis of the device type information, and to determine the display formats for various structural elements of the common map screen image while taking into account the results of this determination. For example, in some cases, the display formats for various structural elements of the map screen image may be different between different types of device even though they have been produced by the same manufacturer, or, even in devices of the same type, a plurality of types of liquid crystal panel may be used, and the hues of the map screen images that are displayed may be different between these various types. In this type of case as well, by doing as described above, it is possible to ensure that the display formats are the same for the various structural elements that are used upon the map screen image that the in-vehicle device 1 can display independently, and that are used upon the common map screen image, and accordingly it is possible to ensure that a common map screen image can be provided without imparting any sense of discomfort to the user.

In the step S471, for the map display range that was determined in the step S460, the control unit 20 generates a common map screen image for display both upon the in-vehicle device 1 and upon the portable terminal 2. Here, the common map screen image is generated by drawing each of the structural elements for the common map screen image in the respective display format that was determined in the step S461. After the common map screen image has been generated in this step S471, similar processing is executed to that of Fig. 9.

According to the second embodiment of the present invention as explained above, it is possible to display a common map screen image upon the in-vehicle device 1 without imparting any sense of discomfort to the user.

### Embodiment #3

Next, a third embodiment of the present invention will be explained. In the first and second embodiments described above, examples were explained in which a common map screen image for use in common by both the in-vehicle device 1 and the portable terminal 2 was generated by the portable terminal 2, and this was displayed both upon the display unit 11 of the in-vehicle device 1 and also upon the display unit 21 of the portable terminal 2. By contrast, in this embodiment, an example is explained in which a map screen image for the in-vehicle device 1 and a map screen image for the portable terminal 2 are both generated by the portable terminal 2, and, while the map screen image for the portable terminal 2 is being displayed upon its display unit 21, by the map screen image for the in-vehicle device 1 being transmitted from the portable terminal 2 to the in-vehicle device 1, this map screen image is displayed upon the display unit 11 of the in-vehicle device 1.

It should be understood that the structure of the in-vehicle information system according to this embodiment, and the structures of the in-vehicle device 1 and of the portable terminal 2, are all the same as those shown in Figs. 1 and 2 for the first embodiment described above. Accordingly, in the following, explanation thereof will be omitted.

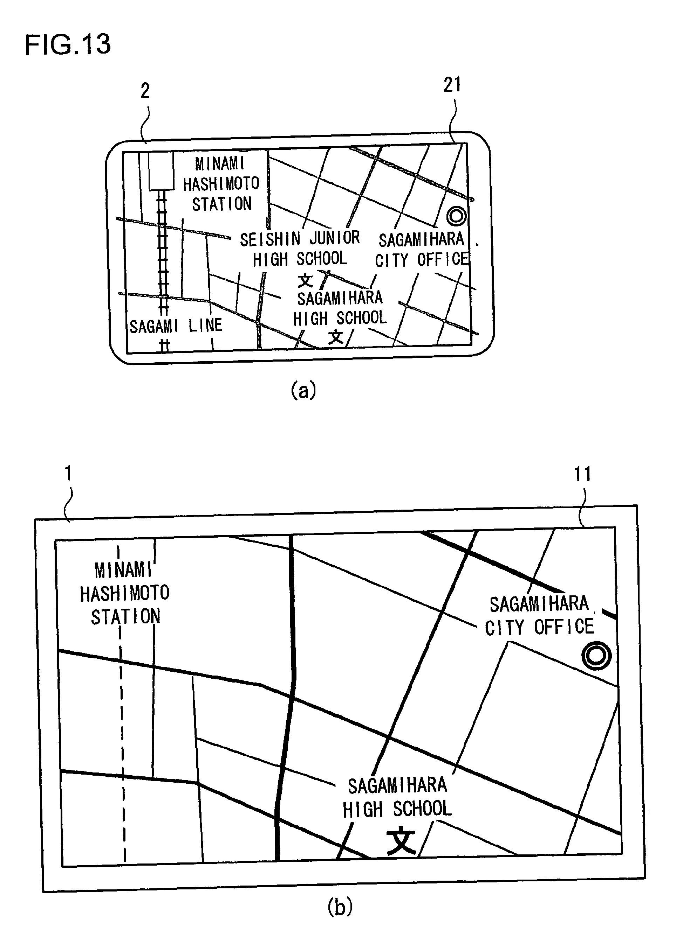

Fig. 13 shows examples of map screen images that are displayed by the in-vehicle information system according to this embodiment upon the display unit 21 of the portable terminal 2 and upon the display unit 11 of the in-vehicle device 1 respectively, when an application for navigation is being executed by the portable terminal 2.

Fig. 13(a) shows an example of a map screen image that is displayed upon the display unit 21 of the portable terminal 2. This map screen image, like the private map screen image of Fig. 4(a) explained in connection with the first embodiment described above, is one that is adapted to be capable of supplying a large quantity of map information to the user when the user is holding the portable terminal 2 in his hand and is looking at it. In the following, this type of map screen image will be termed a "map screen image for the portable terminal".

On the other hand, Fig. 13(b) shows an example of a map screen image that is displayed upon the display unit 11 of the in-vehicle device 1. This map screen image, like the common map screen image of Fig. 5 explained in connection with the first embodiment described above, as compared to the map screen image for the portable terminal of Fig. 13(a), is one that has been adapted to be capable of providing to the user the map information that is necessary for driving the vehicle in an easily understandable manner, by the characters and map symbols being increased in size, by the hues and the thicknesses of the lines that denote roads being changed into a format in which they can be seen more easily, and by some of the characters and map symbols and some of the lines that denote roads and so on being eliminated. In the following, this type of map screen image will be termed a "map screen image for the in-vehicle device".

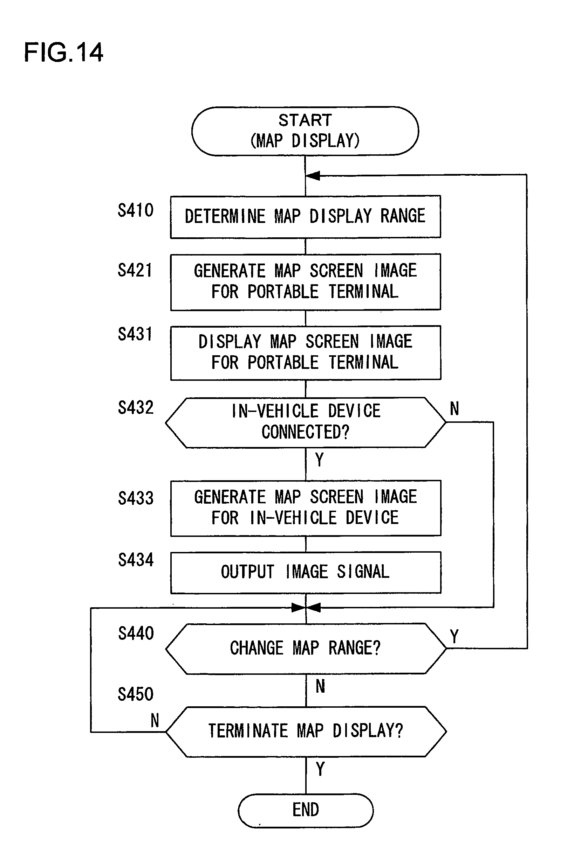

A flow chart for the processing executed by the portable terminal 2 in this embodiment, instead of the flow chart of Fig. 9 explained previously in connection with the first embodiment, is shown in Fig. 14. It should be understood that, in this flow chart, to processing steps that execute processing whose details are the same as those of steps shown in the flow chart of Fig. 9, the same step numbers as in Fig. 9 are appended. In the following, for such processing steps to which the same step numbers as in Fig. 9 are appended, explanation is omitted unless particularly required.

In the step S421, the control unit 20 generates a map screen image for the portable terminal for the map display range that was determined in the step S410.

In the step S431, the control unit 20 displays the map screen image for the portable terminal that was generated in the step S421 upon the display unit 21. By doing this, a map screen image such as for example shown in Fig. 13(a) is displayed upon the portable terminal 2.

In the step S432, the control unit 20 makes a decision as to whether or not the in-vehicle device 1 is connected. If the in-vehicle device 1 is not connected to the portable terminal 2, then the flow of control proceeds to the step S440. On the other hand, if the portable terminal 2 and the in-vehicle device 1 are mutually connected together via the USB cable 3 and the image cable 4 as shown in Fig. 1, then the flow of control proceeds to the step S433.

In the step S433, for the map display range determined in the step S410, the control unit 20 generates a map screen image for the in-vehicle device that is different from the map screen image for the portable terminal that was generated in the step S421. For example, in a similar manner to the case when generating the common map screen image explained in connection with the first embodiment, the sizes of the characters, the fonts for the characters, the thicknesses of the roads, the sizes of the map symbols, the hues and so on in this map screen image for the in-vehicle device may be determined according to the screen image structural factors that were determined on the basis of the resolution information that was received from the in-vehicle device 1. Or, as explained in connection with the second embodiment, it would also be acceptable to arrange to determine the display formats for the various structural elements of the map screen image for the in-vehicle device 1 on the basis of the device type information that has been received from the in-vehicle device.

Then in the step S434 the control unit 20 outputs an image signal for the map screen image for the in-vehicle device that was generated in the step S433 to the in-vehicle device 1. At this time, the control unit 20 outputs this map screen image for the in-vehicle device that has been generated to the image signal output unit 26. And the image signal output unit 26 converts the map screen image for the in-vehicle device outputted from the control unit 20 into an image signal, and outputs this image signal to the in-vehicle device 1 via the image cable 4. Due to this image signal being received by the in-vehicle device 1, a map screen image such as that shown in Fig. 13(b) is displayed upon the display unit 11 of the in-vehicle device 1. After the image signal for the map screen image for the in-vehicle device has been outputted to the in-vehicle device 1 in this step S434, similar processing to that of Fig. 9 is executed.

According to the third embodiment of the present invention explained above, map screen images can be displayed upon the in-vehicle device 1 and upon the portable device 2 that are suitably individually adapted for them respectively.

### Embodiment #4

Next, a fourth embodiment of the present invention will be explained. In the third embodiment described above, an example was explained in which a map screen image for the in-vehicle device was generated by the portable terminal 2, and this was transmitted to the in-vehicle device 1 from the portable terminal 2 and was displayed upon the display unit 11. By contrast, in this embodiment, an example is explained in which drawing data for drawing the map screen image for the in-vehicle device is transmitted from the portable terminal 2 to the in-vehicle device 1, and, using this drawing data, a map screen image for the in-vehicle device is drawn by the in-vehicle device, and is then displayed upon the display unit 11.

It should be understood that the structure of the in-vehicle information system according to this embodiment, and the structures of the in-vehicle device 1 and of the portable terminal 2, are all the same as those shown in Figs. 1 and 2 for the first embodiment described above. Accordingly, in the following, explanation thereof will be omitted.

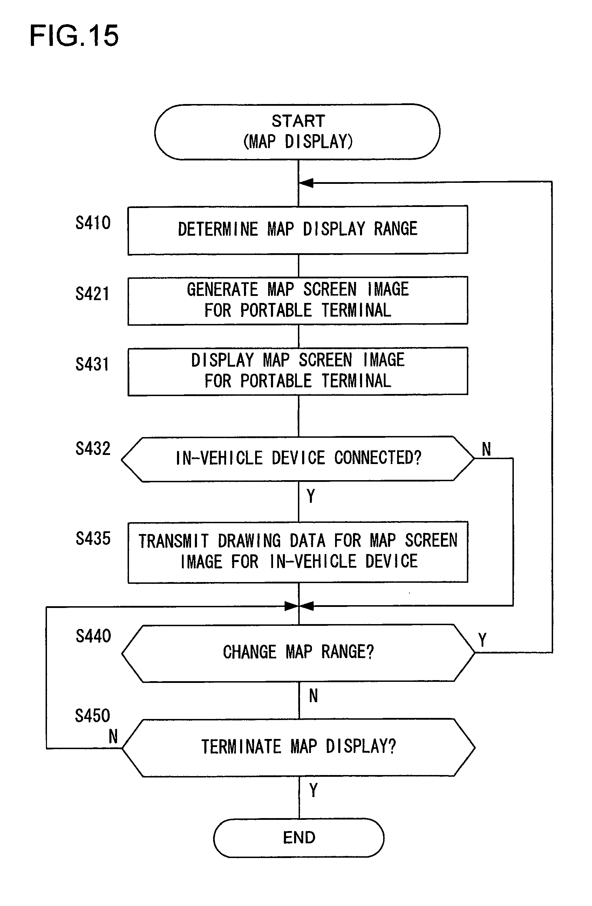

In this embodiment a flow chart for the processing executed by the portable terminal 2 is shown in Fig. 15, instead of the flow chart of Fig. 14 explained in connection with the third embodiment described above. It should be understood that, in this flow chart, to processing steps that execute processing whose details are the same as those of steps shown in the flow chart of Figs. 9 or 14, the same step numbers as in Figs. 9 or 14 are appended. In the following, for such processing steps to which the same step numbers as in Figs. 9 or 14 are appended, explanation is omitted unless particularly required.

In the step S435, for the map range that was determined in the step S410, the control unit 20 transmits drawing data for drawing a map screen image for the in-vehicle device to the in-vehicle device 1 via the interface unit 25 and the USB cable 3. For example, for structural elements such as roads or polygons or the like in the map screen image for the in-vehicle device, coordinate information for specifying positions in the drawing and parameter information for specifying colors and so on may be transmitted as drawing data. It should be understood that it is desirable for the colors designated by this parameter information to be different from those in the map screen image for the portable terminal that was generated in the step S421. Or, if the in-vehicle device 1 does not have map data for drawing the map screen image for the in-vehicle device, then it would be acceptable to arrange to extract map data for the range of the map screen image for the in-vehicle device, and to transmit this as the drawing data. After the drawing data has been transmitted to the in-vehicle device 1 in the step S435, similar processing to that of Fig. 9 is executed.

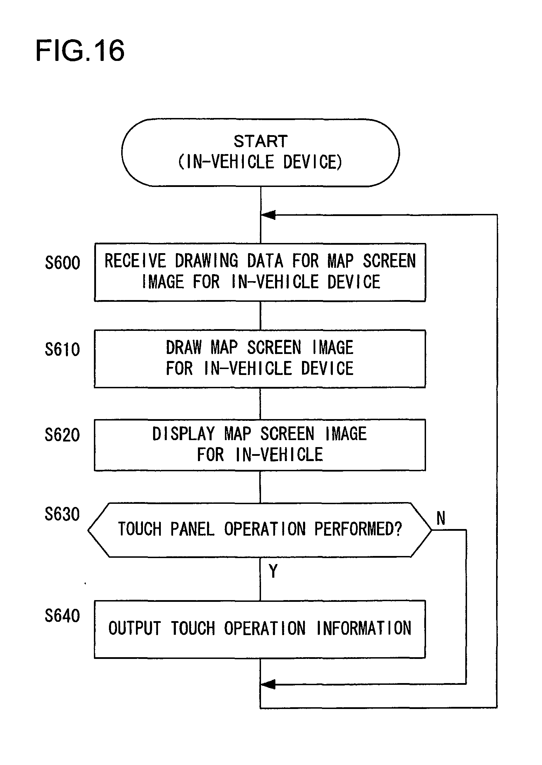

Fig. 16 is a flow chart for processing that is executed in this embodiment by the in-vehicle device 1 when displaying the map screen image for the in-vehicle device.

In the step S600, the control unit 10 receives the drawing data for the map screen image for the in-vehicle device that was transmitted from the portable terminal 2 in the step S435 of Fig. 15. Here, reception of the drawing data for the map screen image for the in-vehicle device is performed by the drawing data transmitted from the portable terminal 2 being received by the interface unit 15 via the USB cable 3, and by this drawing data then being outputted from the interface unit 15 to the control unit 10.

In the step S610, the control unit 10 draws the map screen image for the in-vehicle device on the basis of the drawing data received in the step S600. Here, the map screen image for the in-vehicle device may, for example, be drawn by processing similar to the processing for generation of the map screen image for the in-vehicle device explained in connection with the step S433 of Fig. 14 for the third embodiment being performed by the control unit 10, using the drawing data that has been received.

In the step S620, the control unit displays upon the display unit 11 the map screen image for the in-vehicle device that has been drawn in the step S610. By doing this, a map screen image such as that shown, for example, in Fig. 13(b) is displayed upon the display unit 11 of the in-vehicle device 1.

In the step S630, the control unit 10 makes a decision as to whether or not touch panel operation from the user has been performed upon the display unit 11. If the user has performed touch operation for specifying some position upon the screen of the display unit 11, then the flow of control proceeds to the step S640, and in this step S640 touch operation information specifying the position on the screen specified by this touch operation is outputted to the portable terminal 2. This output of the touch information is performed via the interface unit 15 and the USB cable 3. After this touch operation information has been outputted in the step S640, the flow of control returns to the step S600 and processing like that described above is repeated. On the other hand, if in the step S630 it has been decided that touch operation has not been performed, then the flow of control returns to the step S600 without the step S640 being executed.

According to the fourth embodiment explained above, in a similar manner to the case with the third embodiment, map screen images can be displayed upon the in-vehicle device 1 and upon the portable device 2 that are suitably adapted for them respectively.

### Embodiment #5

Next, a fifth embodiment of the present invention will be explained. In this embodiment, an example will be explained in which, in a similar manner to the case with the third embodiment described above, while a map screen image for the in-vehicle device 1 and a map screen image for the portable terminal 2 are both being generated by the portable terminal 2, and the map screen image for the portable terminal 2 is being displayed upon the display unit 21, also the map screen image for the in-vehicle device is displayed upon the display unit 11 of the in-vehicle device 11 by being transmitted from the portable terminal 2 to the in-vehicle device 1.

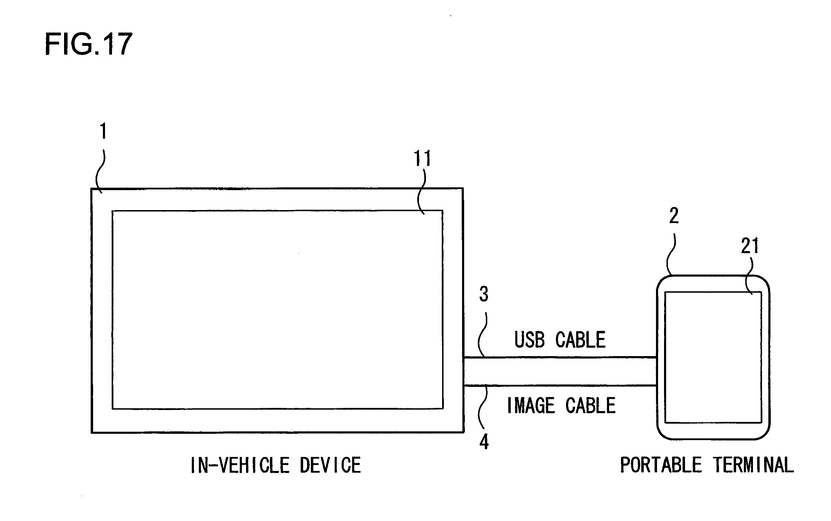

Fig. 17 is a figure showing the structure of the in-vehicle information system according to this embodiment. Like the in-vehicle information system according to the first embodiment shown in Fig. 1, the in-vehicle information system shown in Fig. 17 is one that is used by being mounted to a vehicle, and that is implemented by mutually connecting together an in-vehicle device 1 and a portable terminal 2 via a USB (Universal Serial Bus) cable 3 and an image cable 4.

In this embodiment, either a screen image that is generated by the in-vehicle device 1 itself, or a screen image that is generated for display by the portable terminal 2 for being displayed by the in-vehicle device 1, can be displayed upon the display unit 11 of the in-vehicle device 1. If the screen image that has been generated by the portable terminal 2 is to be displayed upon the display unit 11, then the portable terminal 2 converts this screen image into an image signal, and outputs this image signal to the in-vehicle device 1 via the image cable 4. It should be understood that the screen image for being displayed by the display unit 21 itself and the screen image for being displayed by the display unit 11 of the in-vehicle device 1 may be generated separately by the portable terminal 2. Due to this, while the former screen image is being displayed upon the display unit 21, simultaneously therewith, an image signal can be outputted from the portable terminal 2 to the in-vehicle device 1 for display of the latter screen image upon the display unit 11.

In this embodiment, each of the in-vehicle device 1 and the portable terminal 2 has a similar structure to the corresponding device explained in connection with the first embodiment. It should be understood that processing for generating a screen image for display by the in-vehicle device 1 as described above is also included in the processing executed by the control unit 20 of the portable terminal 2.

This screen image that is generated by the control unit 20 for display by the in-vehicle device 1 is converted into an image signal by an image signal output unit 26, and is outputted to the in-vehicle device 1 via the image cable 4. By this image signal being inputted to an image signal input unit 16 in the in-vehicle device 1, the screen image that has been generated by the portable terminal 2 for display by the in-vehicle device 1 can be displayed upon the display unit 11 thereof, as previously described.

Next, the processing performed by this in-vehicle information system will be explained. In the state in which the in-vehicle device 1 and the portable terminal 2 are connected together, by applications of various types being executed by the portable terminal 2, this in-vehicle information system is capable of performing processing of various types corresponding to these applications. For example, if an application for navigation is executed, then navigation processing is performed in order to guide the vehicle to a destination. In this navigation processing, map screen images for a predetermined map range in the vicinity of the current position or the like are generated by the portable terminal 2 both for the in-vehicle device 1 and for the portable terminal 2, and, while the map screen image for the portable terminal 2 is being displayed upon the display unit 21, the map screen image for the in-vehicle device 1 is transmitted to the in-vehicle device 1. Due to this, it is made possible for the map screen image for the in-vehicle device 1 to be displayed upon the display unit 11 of the in-vehicle device 1. Moreover, if a recommended path from a departure point to a destination has been found in advance by the portable terminal 2, and the vehicle gets close to a guidance point upon this recommended path, then information is transmitted from the portable terminal 2 to the in-vehicle device 1 for outputting guidance audio corresponding to a direction of progression for the vehicle at this guidance point. By doing this, it is made possible for guidance audio to be outputted from the audio output unit 13 of the in-vehicle device 1. As has been explained above, by displaying a map screen image upon the display unit 11 and by outputting guidance audio from the audio output unit 13, the in-vehicle device 1 issues notifications to the user in order to make it possible for him to drive the vehicle to the destination without going astray.

It should be understood that, for the various types of data such as map data and so on that are required in order for the portable terminal 2 to execute the application for navigation, it will be acceptable to use data that is stored in advance in a memory unit 24 of the portable terminal 2. Or it would also be acceptable to arrange only to store the minimum necessary amount of data in the memory unit 24, and, when the portable terminal 2 is executing the application for navigation, to arrange for the portable terminal 2 to connect to a predetermined server by using a wireless communication unit 27, so as to acquire the data each time it is required.

Among a plurality of applications including an application for navigation as described above, an application that has been selected by the user is executed by the portable terminal 2. On a menu screen image for the portable terminal 2 that is being displayed upon the display unit 21 of the portable terminal 2, the user is able to perform selection of an application to be executed by the portable terminal 2 by selecting the desired application by touch operation upon the display unit 21 using an operation unit 22.

Furthermore, the portable terminal 2 generates a menu screen image for the in-vehicle device 1 that is different from the menu screen image for the portable terminal 2, and transmits an image signal for this menu screen image to the in-vehicle device 1. And the in-vehicle device 1 displays the menu screen image for the in-vehicle device 1 upon the display unit 11 on the basis of this image signal transmitted from the portable terminal 2. When the user selects a desired application on this menu screen image by touch operation upon the display unit 11 using the operation unit 12, the in-vehicle device 1 transmits touch operation information specifying the position upon the screen that has been designated by this touch operation to the portable terminal 2. And, on the basis of the touch operation information transmitted from the in-vehicle device 1, the portable terminal 2 recognizes which application has been selected by the user, and executes that application. Due to this, the user is able to perform selection of an application to be executed by the portable terminal 2, in a similar manner to the case when using a menu screen image displayed upon the display unit 21 of the portable terminal 2.

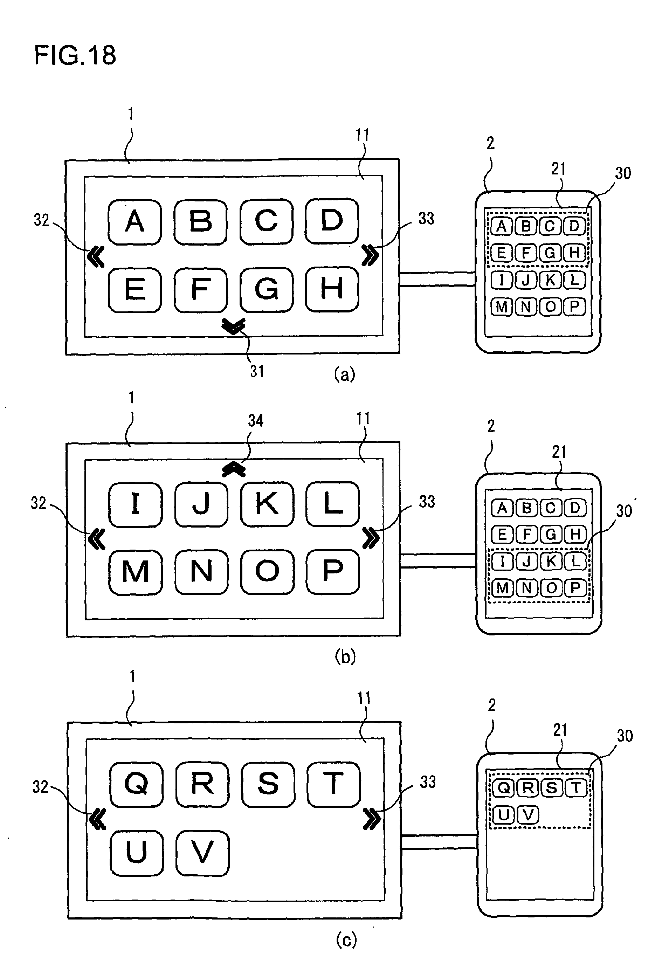

Fig. 18 is a figure showing examples of menu screen images that are displayed upon each of the in-vehicle device 1 and the portable terminal 2. When the in-vehicle device 1 and the portable terminal 2 are connected together, the menu screen images as shown in Fig. 18(a), for example, are displayed upon the display unit 11 of the in-vehicle device 1 and upon the display unit 21 of the portable terminal 2 respectively.

In Fig. 18(a), sixteen icons corresponding to applications "A" through "P" are arranged on a menu screen image that is displayed upon the display unit 21 of the portable terminal 2. On the other hand, only eight icons corresponding to the applications "A" through "H" among the above described sixteen icons are arranged on a menu screen image that is displayed upon the display unit 11 of the in-vehicle device 1. In this manner, only a portion of the contents of the menu screen image upon the portable terminal 2 is displayed upon the display unit 11 of the in-vehicle device 1 as a menu screen image for the in-vehicle device 1, while the other portion thereof is not displayed.

When the menu screen image for the portable terminal 2 that is displayed upon the display unit 21 and the menu screen image for the in-vehicle device 1 that is displayed upon the display unit 11 are compared together, it will be understood that, in the case of the menu screen image for the in-vehicle device 1, the sizes of the icons and the gaps between adjacent icons are increased in size so that they are greater than those in the case of the menu screen image for the portable terminal 2. According to this type of icon arrangement, it is possible to enhance the visibility and the ease of use for the user of the menu screen image for the in-vehicle device 1, and it is possible to adapt this menu screen image for the in-vehicle device 1. In other words, since the operation of the portable terminal 2 is performed by the user holding it in his hand, the distance from the eyes of the user to the display unit 21 is normally comparatively close at around 30 cm, and, even when the vehicle is moving, the user can simply and easily specify a position upon the screen corresponding to his intentions by touch operation. Due to this, even if as shown in Fig. 18(a) the sizes of the icons and the gaps between adjacent icons on the menu screen image for the portable terminal 2 are comparatively small, the user is still able to obtain sufficient visual confirmation of the icons, so that he is assured of sufficient ease of use. On the other hand, since the in-vehicle device 1 is installed in the instrument panel of the vehicle or the like and accordingly the distance from the eyes of the user to the display unit 11 is greater than in the case of the portable terminal 2, and also due to vibration and so on when the vehicle is moving, it may become difficult for the user to designate a position upon the screen according to his intentions by touch operation. Due to this, it is possible to ensure the necessary visibility and ease of use for the user by increasing the sizes of the icons and the distance between adjacent icons on the menu screen image for the in-vehicle device 1 as shown in Fig. 18(a).

Furthermore, upon the menu screen image for the portable terminal 2 that is being displayed upon the display unit 21, a frame 30 is displayed around the portion that corresponds to the menu screen image that is being displayed upon the display unit 11, showing the range thereof. By doing this, the portion on the menu screen image for the portable terminal 2 that corresponds to the menu screen image for the in-vehicle device 1 is displayed in a way in which it can be identified. It should be understood that, instead of employing the frame 30, it would also be acceptable to arrange for it to be possible to identify the portion on the menu screen image for the portable terminal 2 that corresponds to the menu screen image for the in-vehicle device 1 by some other display format, for example by changing its color or by displaying it as blinking or the like.

In Fig. 18(a), an arrow sign 31 that corresponds to the downward direction and arrow signs 32 and 33 that respectively correspond to the leftward and rightward directions are displayed upon the menu screen image for the in-vehicle device 1 that is displayed upon the display unit 11. These arrow signs are marks for changing over the menu screen image, and a different operation is allocated to each of them.

The arrow sign 31 is a mark for changing over the menu screen image for the in-vehicle device 1 without changing over the menu screen image for the portable terminal 2. When the user selects this arrow sign 31 by touch operation upon the display unit 11, touch operation information that specifies this touch position is transmitted from the in-vehicle device 1 to the portable terminal 2. At this time, the portable terminal 2 shifts the frame 30 in the downward direction, and changes the range of the menu screen image for the portable terminal 2 that is used for generating the menu screen image for the in-vehicle device 1. And, by increasing the sizes of the icons included within the range of the frame 30 after it has been shifted and by increasing the gap between adjacent icons as previously described, a new menu screen image for the in-vehicle device 1 is generated, and then a corresponding image signal is transmitted to the in-vehicle device 1. The menu screen image for the in-vehicle device 1 is changed over by displaying a screen image based on this image signal upon the display unit 11 of the in-vehicle device 1. As a result, menu screen images such as for example shown in Fig. 18(b) are displayed upon the display unit 11 of the in-vehicle device 1 and upon the display unit 21 of the portable terminal 2, respectively.

In Fig. 18(b), on the menu screen image that is being displayed upon the display unit 21 of the portable terminal 2, the frame 30 is shifted in the downward direction from its position in Fig. 18(a). And eight icons that correspond to the applications "I" through "P" are arranged on the menu screen image that is being displayed upon the display unit 11 of the in-vehicle device 1, so as to correspond to the range of the frame 30 after this shifting. By doing this, it is possible to display the icons that were not being displayed upon the display unit 11 in Fig. 18(a) upon the menu screen image for the in-vehicle device 1. Moreover, the arrow sign 31 in the downward direction is not displayed, but instead an arrow sign 34 in the upward direction is displayed. It is possible to return to the menu screen image of Fig. 18(a) by selecting this arrow sign 34 by touch operation.

The arrow signs 32 and 33 are marks for changing over the menu screen image upon the portable terminal 2. When the user selects the arrow sign 32 or 33 by touch operation upon the display unit 11, touch operation information that specifies this touch position is transmitted from the in-vehicle device 1 to the portable terminal 2. At this time, the portable terminal 2 changes over the menu screen image for the portable terminal 2 that is being displayed upon the display unit 21 to another menu screen image upon which different icons from those displayed up until now are arranged. If the portable terminal 2 has a large number of applications, and icons for all those applications cannot be displayed at once upon the menu screen image, then a plurality of menu screen images are set up, according to the number of icons that must be displayed by the portable terminal 2. Thus, by changing over the menu screen images as described above, the user is enabled to select any icon that he desires. It should be understood that it would be acceptable, when three or more menu screen images are set up for the portable terminal 2, to make the changeover sequence of menu screen images change when the arrow sign 32 is selected, and when the arrow sign 33 is selected.

On the other hand, when the user is operating the portable terminal 2, he can change over the menu screen image for the portable terminal 2 that is being displayed upon the display unit 21 by performing touch operation of the so called flick operation type. Flick operation is a type of touch operation that is performed so as to pull in a predetermined direction, for example the left to right direction. When a menu screen image for the portable terminal 2 is being displayed upon the display unit 21, the user is able to change over between menu screen images by performing flick operation. In other words, on the in-vehicle device 1, changing over of menu screen images is implemented by selecting the arrow sign 32 or 33 by touch operation, instead of by flick operation.

It should be understood that, if the number of applications possessed by the portable terminal 2 is not very great, and it is possible to display icons for all of them upon a single menu screen image, then there is no need to perform changing over of menu screen images such as described above. In this case, it would be acceptable not to display the arrow signs 32 and 33 upon the menu screen image for the in-vehicle device 1.

When changing over of the menu screen image for the portable terminal 2 is performed by operation such as that explained above, the portable terminal 2 newly creates a menu screen image for the in-vehicle device 1 that corresponds to the menu screen image after it has been changed over, and transmits an image signal for that menu screen image to the in-vehicle device 1. And, by a menu screen image based upon this image signal being displayed upon the display unit 11 of the in-vehicle device 1, the menu screen image for the in-vehicle device 1 is also changed together with the menu screen image for the portable terminal 2. As a result, menu screen images such as for example shown in Fig. 18(c) are displayed upon the display unit 11 of the in-vehicle device 1 and upon the display unit 21 of the portable terminal 2 respectively.

In Fig. 18(c), six icons corresponding to the applications "Q" through "V" are arranged upon the menu screen image that is displayed upon the display unit 21 of the portable terminal 2. Moreover, in a similar manner, six icons corresponding to the applications "Q" through "V" are also arranged upon the menu screen image that is displayed upon the display unit 11 of the in-vehicle device 1 as well. Furthermore, while the arrow signs 32 and 33 are displayed, no arrow sign 31 pointing in the downward direction such as shown in Fig. 18(a) is displayed. In this way, if the number of icons displayed upon the menu screen image for the portable terminal 2 is quite low, and it is possible to display all of those icons even upon the menu screen image for the in-vehicle device 1, then there is no necessity to display the arrow sign 31, since it is not necessary to change over the menu screen image for the in-vehicle device 1.

When the user selects any icon upon the menu screen image for the in-vehicle device 1 or the menu screen image for the portable terminal 2 by operation of the touch panel as explained above, the application that corresponds to that icon is started upon the portable terminal 2.

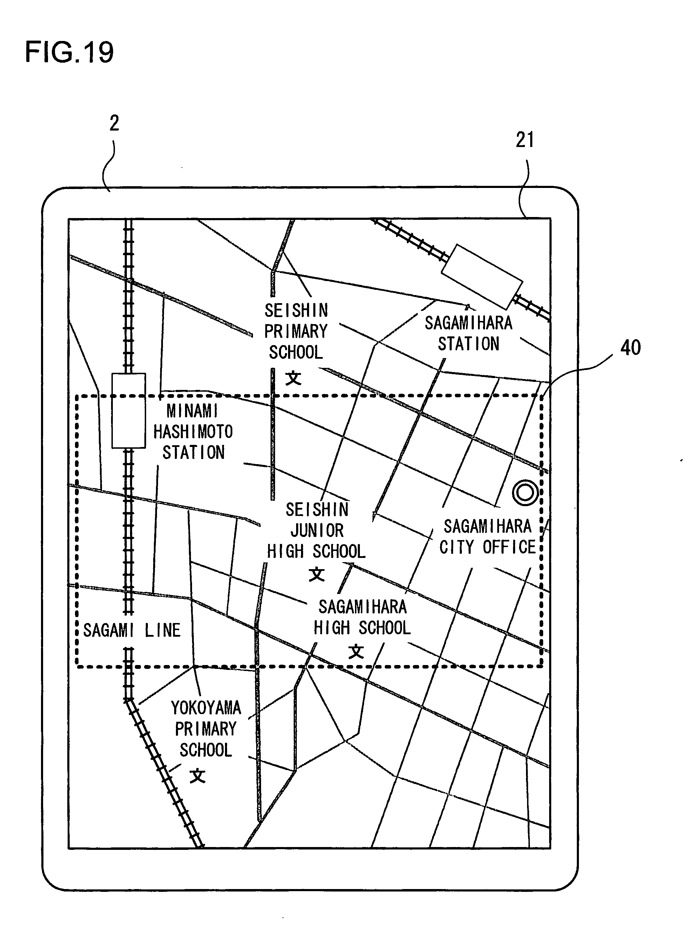

Fig. 19 is an example of a map screen image for the portable terminal 2 that is displayed upon the display unit 21 of the portable terminal 2 when the application for navigation is being executed. When the application for navigation is being executed, the portable terminal 2 generates a map screen image like that shown in Fig. 19 for the predetermined map range around the current position by the method previously described, and displays it upon the display unit 21 as a map screen image for the portable terminal 2. Furthermore, the portion in the range shown in the frame 40 of this map screen image that has been generated is extracted, a map screen image for the in-vehicle device 1 is generated on the basis of this portion, and this is converted into an image signal that is transmitted to the in-vehicle device 1. And, by displaying a screen image upon the in-vehicle device 1 on the basis of this image signal, a map screen image for the in-vehicle device 1 is displayed upon the display unit 11.

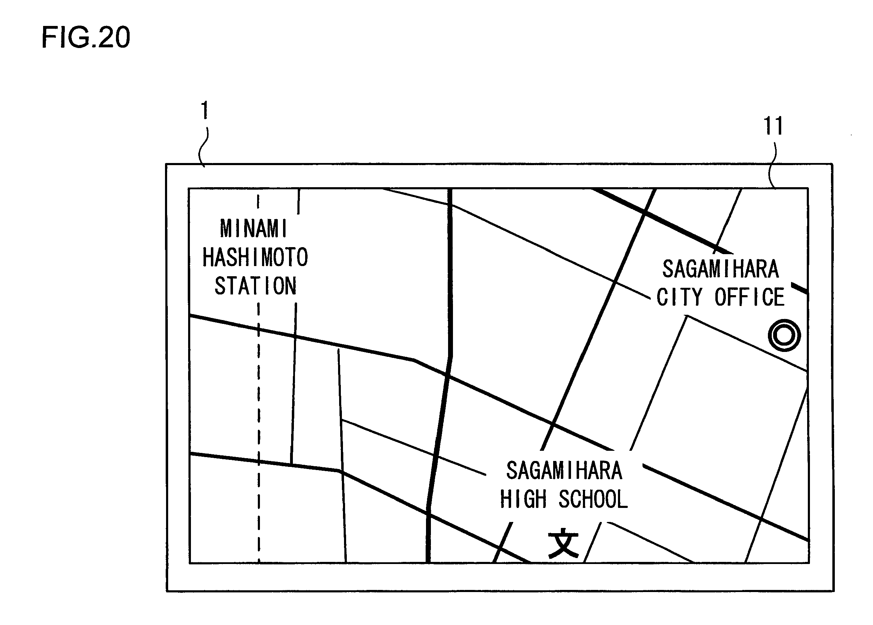

Fig. 20 is an example of a map screen image for the in-vehicle device 1 that is displayed upon the display unit of the in-vehicle device 1 corresponding to the map screen image of Fig. 19. The map screen image of Fig. 20 shows a range that corresponds to the frame 40 in the map screen image of Fig. 19.

When the map screen image for the portable terminal 2 shown in Fig. 19 and the map screen image for the in-vehicle device 1 shown in Fig. 20 are compared together, it will be understood that on the map screen image for the in-vehicle device 1 shown in Fig. 20, along with the size of the text and the size of the map symbols being increased as compared to those on the map screen image for the portable terminal 2, also the hue and the thickness of the lines that symbolize roads are changed to a format that is easier to see. Moreover, on the map screen image for the in-vehicle device 1 shown in Fig. 20, the line that symbolizes a railroad line is changed to a format that does not stand out to the eye so much, and also some of the text saying "Sagami Line" and "Seishin Junior High School" and so on, some of the map symbols, and some of the lines that symbolize roads and so on, are eliminated.

By displaying map screen images like those explained above upon the in-vehicle device 1 and upon the portable terminal 2, it is possible to provide map screen images that are easy to see, both in the case of the in-vehicle device 1 and in the case of the portable terminal 2. In other words, since as described above the distance from the eyes of the user to the display unit 21 of the portable terminal 2 is comparatively close, accordingly, by displaying a map screen image like that shown in Fig. 19 upon the display unit 21 as the map screen image for the portable terminal 2, it is possible to supply a large amount of map information to the user. On the other hand, since as described above the distance from the eyes of the user to the display unit 11 of the in-vehicle device 1 is comparatively remote, accordingly, by displaying a map screen image like that shown in Fig. 20 upon the display unit 11 as the map screen image for the in-vehicle device 1, it is possible to supply the map information that is necessary for driving the vehicle to the user in an easily understandable manner.

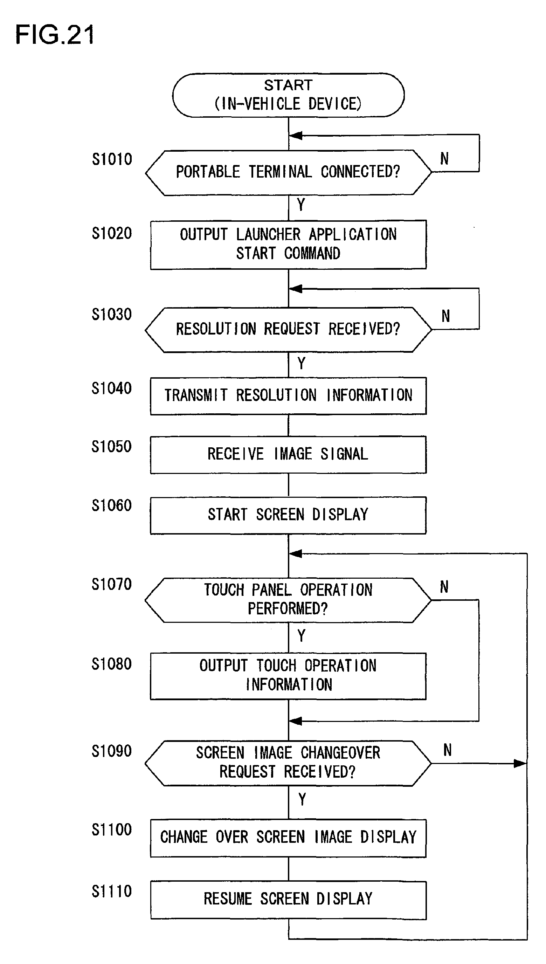

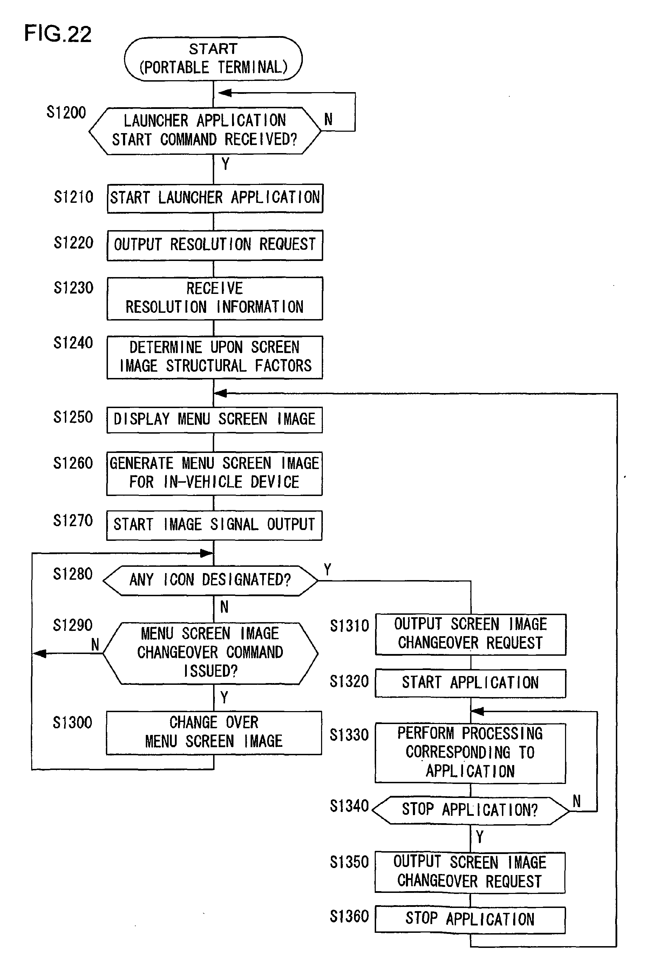

Flow charts for the processing performed by the in-vehicle device 1 and by the portable terminal 2 of this embodiment are shown in Figs. 21 and 22. Fig. 21 shows a flow chart for the processing by the in-vehicle device 1, and Fig. 22 shows a flow chart for the processing performed by the portable terminal 2.

First, the flow chart of Fig. 21 will be explained. The processing shown in the flow chart of Fig. 21 is processing that is executed by the control unit 10 of the in-vehicle device 1.

In the step S1010, the control unit 10 makes a decision as to whether or not the portable terminal 2 is connected. When, as shown in Fig. 17, the in-vehicle device 1 and the portable terminal 2 are connected together via the USB cable 3 and the image cable 4, then the flow of control proceeds to the next step S1020.

In the step S1020, the control unit 10 outputs a start command for a launcher application to the portable terminal 2. This launcher application is an application that is executed upon the portable terminal 2 in order to generate a menu screen image for the in-vehicle device 1 like that shown in Fig. 18 and to output that menu screen image to the in-vehicle device 1, and in order to recognize the details of touch panel operation performed by the user according to touch operation information transmitted from the in-vehicle device 1. This output of the start command for the launcher operation is performed via the interface unit 15 and the USB cable 3. It should be understood that, if the launcher application has already been started upon the portable terminal 2, then there is no need to output a start command for the launcher application a second time.

In the step S1030, the control unit 10 makes a decision as to whether or not a resolution request for the resolution of the display unit 11 has been received from the portable terminal 2. When the in-vehicle device 1 and the portable terminal 2 are mutually connected together via the USB cable 3 and the image cable 4, and a start command for the launcher application is outputted from the in-vehicle device 1 to the portable terminal 2 in the step S1020, in response thereto, a resolution request is outputted from the portable terminal 2 by a step S1220 of Fig. 22 that will be explained subsequently being executed by the portable terminal 2. This resolution request is transmitted to the in-vehicle device 1 via the USB cable 3, and, in the in-vehicle device 1, is received by the interface unit 15 and outputted to the control unit 10. When, due to this, a resolution request has been received from the portable terminal 2, the flow of control proceeds to the next step S1040.

In the step S 1040, in response to the resolution request that was received from the portable terminal 2 in the step S1030, the control unit 10 transmits to the portable terminal 2 resolution information related to the resolution of the display unit 11. Here, for example, information specifying the screen size of the display unit 11 and its numbers of pixels vertically and horizontally may be transmitted as this resolution information. This transmission of the resolution information is performed via the interface unit 15 and the USB cable 3.

In the step S1050, the control unit 10 receives an image signal that is outputted from the portable terminal 2. Here, an image signal that the portable terminal 2 starts to output by executing a step S1270 of Fig. 22 that will be explained hereinafter is inputted to the image signal input unit 16 via the image cable 4. The image signal input unit 16 converts this image signal that has thus been inputted into image data for screen image display, and outputs this to the control unit 10. Due to this, the image signal is received by the control unit 10. Subsequently, reception of the image signal outputted from the portable terminal 2 is continued.

In the step S1060, the control unit 10 starts screen image display on the basis of the image signal received in the step S1050. Here, this screen image display is started by displaying a screen image based upon the image data outputted from the image signal output unit 16 in the step S 1050 upon the display unit 11. By doing this, for example, a menu screen image for the in-vehicle device 1 like the one shown in Fig. 18 is displayed upon the display unit 11.

In the step S1070, the control unit 10 makes a decision as to whether or not touch panel operation has been performed by the user upon the display unit 11. If the user has performed touch operation to designate some position upon the screen image of the display unit 11, then the flow of control proceeds to the step S1080, and in this step S1080 touch operation information specifying this position upon the screen image designated by the touch operation is outputted to the portable terminal 2. This output of touch operation information is performed via the interface unit 15 and the USB cable 3. When the output of touch operation in the step S1080 has been completed, the flow of control proceeds to the step S1090. On the other hand, if it is decided in the step S1070 that touch operation has not been performed, then the step S1080 is not executed, and the flow of control proceeds to the step S1090.

In the step S1090, the control unit 10 makes a decision as to whether or not a screen image changeover request has been received from the portable terminal 2. When an application starts and the screen image of the display unit 11 is to be changed over from the menu screen image for the in-vehicle device 1 to an execution screen image for the application, or when an application that has been executing up until now ends and the in-vehicle device 1 is to return to its menu screen image, then the portable terminal 2 outputs a screen image changeover request to the in-vehicle device 1 by executing a step S 1310 or a step S 13 50 of Fig. 22 that will be explained hereinafter. For example, as will be described hereinafter, a screen image changeover request may be issued from the portable terminal 2 to the in-vehicle device 1 by a session end notification being outputted to an application that has been executing up until now. This screen image changeover request is transmitted to the in-vehicle device 1 via the USB cable 3, and is received by the interface unit 15 of the in-vehicle device 1 and outputted to the control unit 10. When a screen image changeover request is received in this manner, the flow of control then proceeds to the step S 1100. On the other hand, if no screen image changeover request is received from the portable terminal 2, then the flow of control returns to the step S1070 and the processing described above is repeated.

In the step S1100, the control unit 10 temporarily interrupts screen image display on the basis of the image signal from the portable terminal 2, and performs predetermined screen image changeover display upon the display unit 11. Here, for example, a message to the effect that the screen image is being changed over, or a display animation effect that means that the screen image is being changed over, may be displayed for just a predetermined display interval upon the display unit 11. By doing this, it is possible to prevent flickering or the like generated during screen image changeover, and it is possible to ensure that the user does not experience any sense of unease due to the screen going blank. When the screen image changeover display of this step S1100 terminates, the control unit 10 proceeds to the step S1110. It should be understood that it would be possible to arrange for the timing at which the screen image changeover display is terminated to be determined as being the timing when a display time period that is set in advance has elapsed, or to arrange for it to be determined according to control from the portable terminal 2. When, for example, an application is to be started upon the portable terminal 2, in some cases, in order to establish communication between the in-vehicle device 1 and the portable terminal 2 that is to be performed for this application, an application session start notification is outputted from the portable terminal 2 to the in-vehicle device 1. It is possible to determine the timing for termination of the screen image changeover display upon the in-vehicle device 1 by receiving this application session start notification.

In the step S 1110, the control unit 10 resumes screen image display on the basis of the image signal from the portable terminal 2 that was interrupted when the step S1100 was performed, and arranges for a screen image display after changeover to be performed upon the display unit 11. When this step S 1110 has been executed, the control unit 10 returns to the step S1070, and processing like that described above is repeated.

Next, the flow chart of Fig. 22 will be explained. The processing shown in the flow chart of Fig. 22 is processing that is executed by the control unit 20 of the portable terminal 2.

In the step S1200, the control unit 20 makes a decision as to whether or not a launcher application start command has been received from the in-vehicle device 1. If, as shown in Fig. 17, the in-vehicle device 1 and the portable terminal 2 are connected together via the USB cable 3 and the image cable 4, and a launcher application start command outputted from the in-vehicle device 1 has been received due to the step S1020 of Fig. 21 having been executed by the in-vehicle device 1, then the flow of control proceeds to the next step S1210.

In the step S1210, the control unit 20 starts the launcher application. At this time, in order to establish communication with the in-vehicle device 1, the control unit 20 outputs a launcher application session start notification to the in-vehicle device 1. In the launcher application session, a series of communication steps performed between the in-vehicle device 1 and the portable terminal 2 are prescribed for the launcher application. This launcher application session start notification is transmitted to the in-vehicle device 1 via the USB cable 3, and is received by the interface unit 15 of the in-vehicle device 1 and outputted to the control unit 10. It should be understood that, if the launcher application has already been started, then the processing of the step S1210 is omitted, and the flow of control proceeds directly to the step S1220.

In the step S 1220, the control unit 20 outputs a resolution request for the resolution of the display unit 11 to the in-vehicle device 1. The output of this resolution request is performed via the interface unit 25 and the USB cable 3.

In the step S1230, the control unit 20 receives resolution information that is transmitted from the in-vehicle device 1 in response to the resolution request that was outputted in the step S1220. Here, resolution information such as previously described transmitted by the step S1040 of Fig. 21 being executed by the in-vehicle device 1 is received via the USB cable 3 and the interface unit 25.

In the step S1240, on the basis of the resolution information received in the step S1230, the control unit 20 determines the screen image structural factors to be employed for the in-vehicle device 1. Here, as previously described, for various screen image structural elements such as the characters, the lines, the icons and so on to be employed upon the screen images of various types to be displayed by the in-vehicle device 1 such as the menu screen images and the map screen images and so on, the sizes and fonts for the characters, the thicknesses and hues for the lines, the sizes for the icons and the gaps between adjacent icons and so on are determined. It should be understood that it would also be possible to determine screen image structural elements other than characters, lines, and the icons to be employed, according to the details corresponding to these screen image structural elements.

A table, for example like the one shown in Fig. 8 explained above in connection with the first embodiment, is stored in advance in a memory unit 24 or the like of the portable terminal 2. Upon receipt in the step S1230 of the resolution information from the in-vehicle device 1, the control unit 20 determines upon the sizes for the characters to be used, for example, by referring to the corresponding portion of the table in the step S1240, on the basis of the information included in this resolution information such as the screen size of the display unit 11 and its number of pixels and so on. The screen image structural factors may be determined in this manner on the basis of the resolution information, for example.

While in the example described above the case in which the sizes for the characters are determined has been explained, it is also possible to determine the other screen image structural factors by a similar method. Or, it would also be possible to employ some other method, without referring to a table. For example, it would be acceptable to arrange to determine the sizes of the characters to be used and the thicknesses of the lines by employing predetermined calculation equations.

Furthermore, while in the example described above a case has been explained in which the resolution information is specified by the size of the screen of the display unit 11 and its numbers of pixels vertically and horizontally, it would also be acceptable to arrange to specify this information by other details thereof. For example, it would be possible to express the resolution information by employing the density of the pixels, the pixel size, the vertical to horizontal aspect ratio, or the like. Or, if the types of in-vehicle device 1 that can be connected to the portable terminal 2 are determined in advance, it would also be acceptable to arrange to store a resolution for each type of in-vehicle device 1 in the portable terminal 2 in advance, and to transmit information specifying which type of in-vehicle device 1 has been connected from the in-vehicle device 1 as resolution information.

In the step S1250, the control unit 20 displays the menu screen image that has been generated for the portable terminal 2 upon the display unit 21. By doing this, a menu screen image upon which a plurality of icons are arranged as shown in Fig. 18 is displayed upon the display unit 21.

In the step S1260, the control unit 20 generates the menu screen image for the in-vehicle device 1, using the screen image structural factors that have been determined in the step S1240. Here, at least a portion of the menu screen image for the portable terminal 2 that was generated in the step S1250 is extracted, and the sizes of the icons that are included in this portion and their arrangement are determined according to the screen image structural factors that were determined in the step S1240. Due to this, the sizes of the icons and the gaps between adjacent icons are increased, as previously described. It should be understood that it would also be acceptable to change only one of the sizes of the icons, and the gaps between adjacent icons. Moreover, depending upon the number of icons that are to be displayed, the necessary ones from among the arrow signs 31 through 34 for changing over the menu screen image shown in Fig. 18 are selected, and the menu screen image for the in-vehicle device 1 is generated to include them.

In the step S1270, the control unit 20 starts output of an image signal to the in-vehicle device 1. At this time, the control unit 20 outputs the menu screen image for the in-vehicle device that was generated in the step S1260 to the image signal output unit 26. And the image signal output unit 26 converts this menu screen image outputted from the control unit 20 into an image signal, and outputs this image signal to the in-vehicle device 1 via the image cable 4. By this image signal being received by the in-vehicle device 1, a menu screen image like that shown in Fig. 18 is displayed upon the display unit 11 of the in-vehicle device 1. Subsequently, output of this image signal is continued.

In the step S1280, the control unit 20 makes a decision as to whether or not any icon has been designated by touch operation by the user, upon the menu screen image for the portable terminal that was displayed upon the display unit 21 in the step S1250, or upon on the menu screen image for the in-vehicle device 1 that has been displayed upon the display unit of the in-vehicle device 1 on the basis of the above image signal. At this time, the details of touch operation upon the menu screen image for the in-vehicle device 1 are determined on the basis of touch operation information transmitted from the in-vehicle device 1 in the step S1080 of Fig. 21. If no icon has been designated, then the flow of control proceeds to the step S1290, while if some icon has been designated, then the flow of control proceeds to the step S1310.

In the step S1290, the control unit 20 makes a decision as to whether or not a menu screen image changeover command has been issued. Here, as previously described, when one of the arrow signs 31 through 34 of Fig. 18 has been selected by touch operation by the user upon the menu screen image for the in-vehicle device 1, or when flick operation has been performed upon the menu screen image for the portable terminal 2, then it is decided that a menu screen image changeover command has been issued, and the flow of control proceeds to the step S 1300. On the other hand, if none of these operations has been performed, then it is decided that no menu screen image changeover command has been issued, and the flow of control returns to the step S1280.

In the step S1300, the control unit 20 changes over the menu screen image. At this time, if the arrow sign 31 or 34 upon the menu screen image for the in-vehicle device 1 has been selected, then the frame 30 is shifted, and the range of the menu screen image for the portable terminal 2 that is used for generating the menu screen image for the in-vehicle device 1 is changed, as previously described. Due to this, only the menu screen image for the in-vehicle device 1 is changed over, without the menu screen image for the portable terminal 2 being changed over. On the other hand, if the arrow sign 32 or 33 upon the menu screen image for the in-vehicle device 1 has been selected, or if flick operation has been performed upon the menu screen image for the portable terminal 2, then the menu screen image for the portable terminal 2 is changed over to another menu screen image, as previously described. Due to this, along with changing over the menu screen image for the portable terminal 2, corresponding thereto the menu screen image for the in-vehicle device 1 is also changed over. When this step S1300 has been executed, the flow of control returns to the step S1280.

In the step S 1310, the control unit 20 outputs a screen image changeover request to the in-vehicle device 1. Here, for example, the launcher application that was started in the step S 1210 is temporarily stopped, and a launcher application session end notification is outputted to the in-vehicle device 1. Upon receipt thereof, the in-vehicle device 1 determines in the step S1090 of Fig. 21 that a screen image changeover request has arrived. In other words, by outputting a launcher application session end notification from the portable terminal 2 to the in-vehicle device 1, a screen image changeover request can be outputted. This output of the screen image changeover request is performed via the interface unit 25 and the USB cable 3.

In the step S1320, the control unit 20 starts the application that corresponds to the icon that, in the step S1280, was determined to have been designated.

In the step S1330, the control unit 20 performs processing corresponding to the application that has been started in the step S 1320. At this time, along with a screen image for the portable terminal 2 generated by the application that is being executed being displayed upon the display unit 21, also, according to requirements, a screen image for the in-vehicle device 1 is generated and an image signal for it is transmitted to the in-vehicle device 1. And, on the basis of the image signal that is received, screen image display upon the display unit 11 is performed by the in-vehicle device 1. Due to this, when for example an application for navigation is being executed, along with a map screen image for the portable terminal 2 like the one shown in Fig. 19 being displayed upon the display unit 21, also a map screen image for the in-vehicle device 1 like the one shown in Fig. 20 is displayed upon the display unit 11.

In the step S1340, the control unit 20 makes a decision as to whether or not to stop the application that was started in the step S1320. If a predetermined end operation for stopping the application has been performed upon the in-vehicle device 1 or upon the portable terminal 2, then the control unit 20 makes a decision to stop the application that is being executed, and the flow of control proceeds to the step S1350. On the other hand, if end operation is not to be performed, then the control unit 20 makes the decision not to stop the application, and the flow of control returns to the step S1330 and processing corresponding to the application currently being executed is continued.

In the step S1350, in a similar manner to the case in the step S1310, the control unit 20 outputs a screen image changeover request to the in-vehicle device 1. Here, for example, a session end notification for the application that was started in the step S 1320 may be outputted to the in-vehicle device 1. And, upon receipt thereof, the in-vehicle device 1 determines in the step S1090 that a screen image changeover request has been issued.

In the step S1360, the control unit 20 stops the application that was started in the step S1320. When this step S1360 has been executed, the flow of control returns to the step S1250, and the display of the menu screen image is resumed and the processing previously described is repeated.

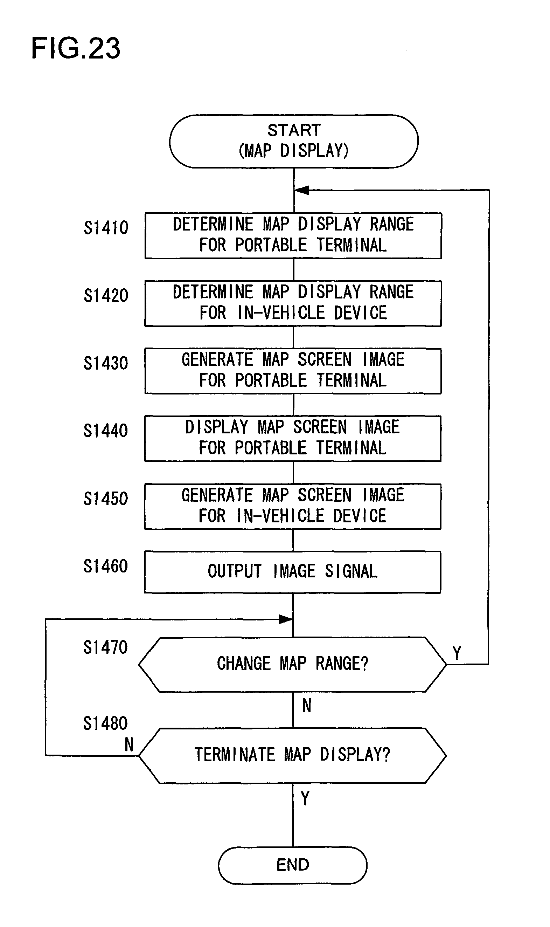

Next, map display by the application for navigation according to this embodiment will be explained. Fig. 23 is a flow chart showing processing executed by the portable terminal during map display. This flow chart is executed by the control unit 20 when the application for navigation is started upon the portable terminal 2.

In the step S1410, the control unit 20 determines upon the map display range for the portable terminal 2. Here, for example, a range from the current position that is predetermined, or a range specified by the user, may be determined as being the map display range for the portable terminal 2.

In the step S1420, the control unit 20 determines upon the map display range for the in-vehicle device 1, on the basis of the map display range for the portable terminal 2 that was determined in the step S1410. Here, as previously described, a portion of the map display range for the portable terminal 2 is determined as being the map display range for the in-vehicle device 1.

In the step S1430, the control unit 20 generates a map screen image for the portable terminal 2 including the map display range for the portable terminal 2 that was determined in the step S1410.

In the step S1440, the control unit 20 displays the map screen image for the portable terminal 2 that was generated in the step S1430 upon the display unit 21. At this time, the map display range for the in-vehicle device 1 that was determined upon in the step S 1420 is displayed upon this map screen image in an identifiable manner. By doing this, for example, a map screen image like that shown in Fig. 19 is displayed upon the portable terminal 2.

In the step S1450, the control unit 20 generates a map screen image for the in-vehicle device 1 on the basis of the map display range for the in-vehicle device 1 that was determined in the step S1420, and on the basis of the map screen image for the portable terminal 2 that was generated in the step S1430. Here, the portion in the map screen image for the portable terminal 2 that was generated in the step S1430 corresponding to the map display range for the in-vehicle device 1 that was determined in the step S1420 is extracted. And the sizes of the characters, the fonts of the characters, the thicknesses of the roads, the sizes of the map symbols, the hues and so on that are included in this portion are determined according to the screen image structural factors that were determined in the step S1240 of Fig. 22. Due to this, the map screen image for the in-vehicle device 1 is generated with the screen image structural elements being changed as previously described so that they become easier to see. At this time, as previously described, it would also be acceptable to arrange to eliminate from the map screen image some of the map symbols and roads whose importance for guidance of the vehicle is quite low. It should be understood that it is not necessarily required to perform change of all of these screen image structural factors; it would be acceptable to select any desired ones of them for change.

In the step S 1460, the control unit 20 outputs an image signal for the map screen image for the in-vehicle device that has thus been generated in the step S 1450 to the in-vehicle device 1. At this time, the control unit 20 outputs the map screen image for the in-vehicle device 1 to the image signal output unit 26. And the image signal output unit 26 converts this map screen image for the in-vehicle device that has been outputted from the control unit 20 into an image signal, and outputs this image signal to the in-vehicle device 1 via the image cable 4. By this image signal being received by the in-vehicle device 1, a map screen image like the one shown in Fig. 20 is displayed upon the display unit 11 of the in-vehicle device 1.

In the step S1470, the control unit 20 makes a decision as to whether or not to change the map range. If the current position has shifted, or if a predetermined operation for changing the map range has been performed upon the in-vehicle device 1 or upon the portable terminal 2, then it is decided that the map range is to be changed, and the flow of control returns to the step S1410. In this case, by executing the processing of the step S 1410 and subsequent steps as previously described, both a map screen image for the in-vehicle device 1 and also a map screen image for the portable terminal 2 that have been newly generated after the map range has been changed are created, and these are respectively displayed upon the display unit 11 and upon the display unit 21. On the other hand, if the map range is not to be changed, then the flow of control proceeds to the step S1480.

In the step S1480, the control unit 20 makes a decision as to whether or not map display is to be ended. If a predetermined operation for ending the map display, for example an operation to terminate the application for navigation or the like, has been performed upon the in-vehicle device 1 or upon the portable terminal 2, then the control unit decides that the map display is to be ended, and the flow chart of Fig. 23 terminates. On the other hand, if no such operation has been performed, then the control unit decides that the map display is not to be ended, and the flow of control returns to the step S 1470 and the displays of both the map screen image for the in-vehicle device 1 and the map screen image for the portable terminal 2 are continued.

According to the fifth embodiment of the present invention as explained above, the following beneficial operational effects are obtained.
(1) By the processing by the control unit 20, the portable terminal 2 generates the menu screen image and the map screen image for the portable terminal 2 for display upon the display unit 21 (in the steps S1250 and S1430), and, on the basis of at least portions of these screen images, generates the menu screen image or the map screen image for the in-vehicle device 1 for display upon the display unit 11 (in the step S1260 or the step S 1450). And, when the display unit 21 displays the menu screen image or the map screen image for the portable terminal 2, the menu screen image or the map screen image for the in-vehicle device 1 is outputted to the in-vehicle device 1 (in the step S1270 or the step S1460). Since it is arranged to do this, accordingly it is possible to control the in-vehicle device 1 from the portable terminal 2, and to provide a screen image display that is made to be suitable for the in-vehicle device 1.
(2) In the step S1260, the control unit 20 generates the menu screen image for the in-vehicle device 1 on the basis of a portion of the menu screen image for the portable terminal 2. In concrete terms, a portion of the menu screen image for the portable terminal 2 is extracted, and the menu screen image for the in-vehicle device 1 is generated by changing at least one of the size of the icons included in this portion and the gap between adjacent icons. Since it is arranged to do this, accordingly it is possible to ensure the necessary visibility and ease of use from the point of view of the user, and it is possible to create a menu screen image that is well adapted to the in-vehicle device 1.
(3) In the step S1450, the control unit 20 generates the map screen image for the in-vehicle device 1 on the basis of a portion of the map screen image for the portable terminal 2. In concrete terms, a portion of the map screen image for the portable terminal 2 is extracted, and the map screen image for the in-vehicle device 1 is generated by changing at least one of the size of the characters included in this portion, the font of the characters, the thickness of the roads, the size of the map symbols, and the hue. Since it is arranged to do this, accordingly it is possible to supply the map information that is necessary for driving the vehicle in an easily understandable format, and it is possible to create a map screen image that is well adapted to the in-vehicle device 1.
(4) By the frames 30 and 40 being displayed upon the menu screen image and the map screen image for the portable terminal 2, it is arranged for the display unit 21 to display the portions that correspond to the menu screen image and the map screen image for the in-vehicle device 1 upon those screen images in a manner in which they can be identified. By doing this, in a case such as when, for example, different users are talking to one another while looking at the portable terminal 2 and at the in-vehicle device 1, it is possible for the user who is looking at the screen of the portable terminal 2 to recognize at which portion upon which screen the other user is looking. Due to this, it is possible to prevent the occurrence of inconsistency in the details of the conversation between the users.
(5) The control unit 20 receives (in the step S1230) the resolution information transmitted from the in-vehicle device 1 that is related to the resolution of the display unit 11, and generates the menu screen image and the map screen image for the in-vehicle device 1 in the steps S1260 and S1450 on the basis of this resolution information. In other words, for the various screen image structural elements such as characters, lines, icons, and so on that are used upon the menu screen image and the map screen image for the in-vehicle device 1, the control unit 20 determines (in the step S1240) the sizes and fonts for the characters, the thicknesses and hues for the lines, the sizes for the icons, and the gaps between adjacent icons on the basis of the resolution information received in the step S1230. In this manner, corresponding to the screen image structural elements that are determined to be upon those screen images, in the step S1260 it is arranged to determine the sizes of the icons to be used when generating the menu screen image for the in-vehicle device 1 and their arrangement, and in the step S 1450 it is arranged to determine the sizes of the characters, the fonts for the characters, the thicknesses for the roads, the sizes of the map symbols, the hues and so on to be used when generating the map screen image for the in-vehicle device 1. Since it is arranged to do this, accordingly it is possible to generate a menu screen image and a map screen image for the in-vehicle device 1 that are optimized according to the resolution of the display unit 11. Furthermore, even if in-vehicle devices 1 of various types exist whose display units 11 have resolutions that are mutually different from one another, it is possible, whichever of those in-vehicle devices 1 is connected to the portable terminal 2, to generate an optimum menu screen image or map screen image that is optimized for that in-vehicle device 1, and to display it upon the display unit 11
(6) In the step S1260, the control unit 20 selects the ones from among the arrow signs 31 through 34 that are required, and generates a menu screen image for the in-vehicle device that includes them. And when touch operation information specifying that one of the arrow signs 31 through 34 has been selected is transmitted from the in-vehicle device 1 by touch operation upon its display unit 11 (in the step S1290), according thereto, the menu screen image for the in-vehicle device 1 is changed (in the step S1300). In concrete terms, when flick operation upon the display unit 21 is performed, or when touch operation information specifying that the arrow sign 32 or 33 has been selected upon the display unit 11 by touch operation is transmitted from the in-vehicle device 1, then the menu screen image for the portable terminal 2 is changed, and the menu screen image for the in-vehicle device 1 is also changed to correspond to this change. Moreover, when touch operation information specifying that the arrow sign 31 or 34 has been selected upon the display unit 11 by touch operation is transmitted from the in-vehicle device 1, the menu screen image for the in-vehicle device 1 is changed by altering the range upon the menu screen image for the portable terminal 2 that is used for generating the menu screen image for the in-vehicle device 1. Since it is arranged to do this, accordingly, even if the portable terminal 2 has a large number of applications, and it is not possible to display icons for all those applications upon the menu screen image for the in-vehicle device 1 all at once, it is still possible for the user to select any desired icon by changing over the menu screen image for the in-vehicle device 1.

It should be understood that, in the embodiments described above, examples have been explained in which the menu screen image and the map screen image for the in-vehicle device 1 are displayed upon the display unit 11 of the in-vehicle device 1, while the menu screen image and the map screen image for the portable terminal 2 are displayed upon the display unit 21 of the portable terminal 2. In other words, screen images of the same type but whose contents are different are displayed upon the in-vehicle device 1 and upon the portable terminal 2. However, the present invention should not be considered as being limited to this configuration; it would also be acceptable to display screen images of mutually different types upon the in-vehicle device 1 and upon the portable terminal 2.

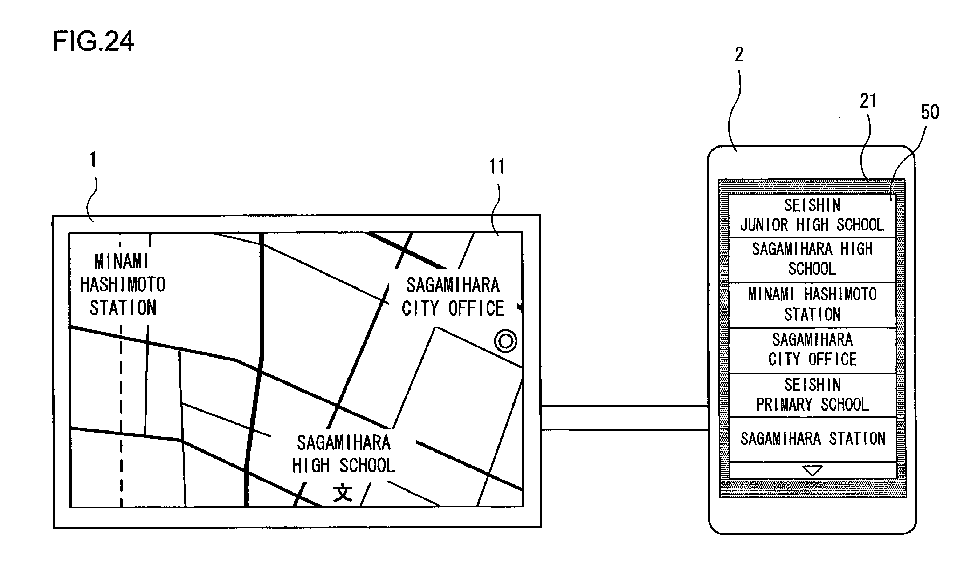

As one example of a case in which screen images of mutually different types are displayed upon the in-vehicle device 1 and upon the portable terminal 2, Fig. 24 is a figure showing an example in which a map screen image is displayed upon the in-vehicle device 1 and a nearby facility list is displayed upon the portable terminal 2. In Fig. 24, a map screen image that is similar to the one of Fig. 20 is displayed upon the display unit 11 of the in-vehicle device 1. On the other hand, a nearby facility list 50 is displayed upon the display unit 21 of the portable terminal 2.

Titles of facilities that are located nearby to a predetermined reference position that is established upon the map screen image displayed upon the display unit 11 (for example, nearby to its center) are displayed in the form of a list in this nearby facility list 50, in order of closeness. It should be understood that it would also be acceptable to arrange also to display additional information other than the titles of the facilities, for example the types of the facilities or their distances from the reference position or the like. When the user performs touch operation to select one of these facilities from the nearby facility list upon the screen of the display unit 21, he is able to display the position of this facility upon the map screen image on the display unit 11, and to set a destination for route searching.

It should be understood that, in the fifth embodiment explained above, in a similar manner to the case with the first embodiment, it is arranged for resolution information for the display unit 11 to be transmitted from the in-vehicle device 1 to the portable terminal 2, and for the portable terminal 2 to determine the display formats on the map screen image for the in-vehicle device 1 for various screen image structural elements such as characters, lines, icons, and so on, on the basis of this resolution information. However it would also be acceptable not to do this, but, as explained in connection with the second embodiment, to arrange for device type information specifying the type of the in-vehicle device 1 to be transmitted from the in-vehicle device 1 to the portable terminal 2, and for the portable terminal 2 to determine the display formats for these screen image structural elements on the map screen image for the in-vehicle device 1, and to generate the map screen image for the in-vehicle device 1, on the basis of this device type information.

### Embodiment #6

Next, a sixth embodiment of the present invention will be explained. In the fifth embodiment described above, an example was explained in which the menu screen image for the in-vehicle device 1 was generated by the portable terminal 2, and this was transmitted from the portable terminal 2 to the in-vehicle device 1 and was displayed upon the display unit 11. By contrast, in this embodiment, an example will be explained in which information for generating the menu screen image for the in-vehicle device 1 is transmitted from the portable terminal 2 to the in-vehicle device 1, and the menu screen image for the in-vehicle device 1 is generated by the in-vehicle device 1 on the basis of this information, and is displayed upon its display unit 11.

It should be understood that the structure of the in-vehicle information system according to this embodiment is the same as that shown in Fig. 1 for the in-vehicle information system according to the first embodiment, and as that shown in Fig. 17 for the in-vehicle information system according to the fifth embodiment. Moreover, in the in-vehicle information system according to this embodiment, the structures of the in-vehicle device 1 and of the portable terminal 2 are respectively the same as the structures of the in-vehicle device 1 and of the portable terminal 2 shown in Fig. 2 in the in-vehicle information system according to the first embodiment. Accordingly, in the following, explanation thereof will be omitted.

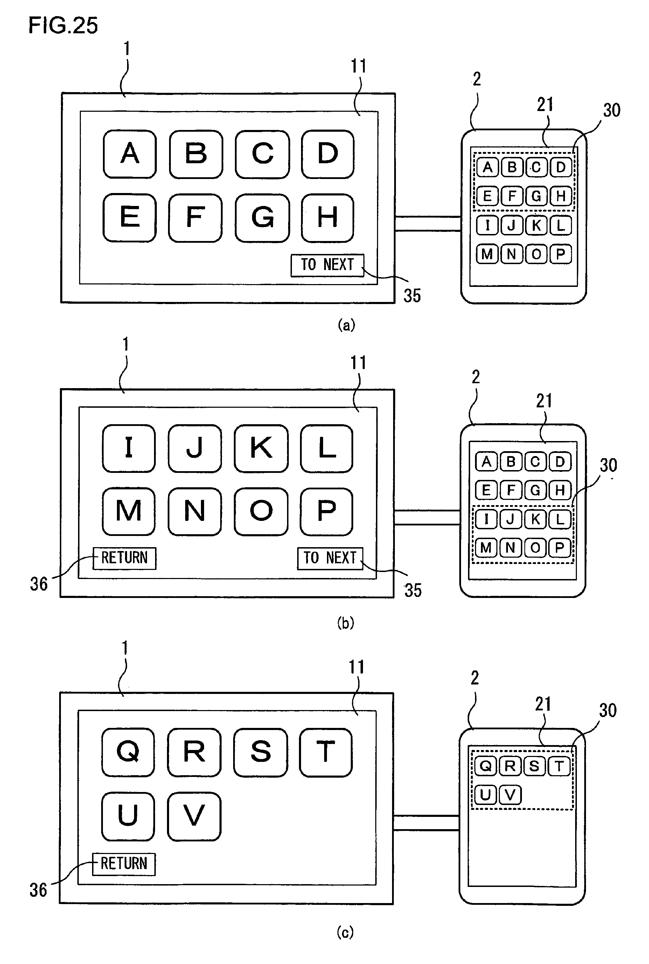

Fig. 25 is a figure showing examples of menu screen images that are displayed upon the in-vehicle device 1 and upon the portable terminal 2, according to this embodiment. When the in-vehicle device 1 and the portable terminal 2 are connected together, menu screen images like those shown in Fig. 25(a), for example, are displayed upon the display unit 11 of the in-vehicle device 11 and upon the display unit 21 of the portable terminal 2.

In Fig. 25(a), sixteen icons that correspond to applications "A" through "P" are arranged upon the menu screen image for the portable terminal 2 that is being displayed upon the display unit 21 of the portable terminal 2, in a similar manner to the case with the menu screen image of the fifth embodiment shown in Fig. 18(a). And, upon the menu screen image for the in-vehicle device 1 that is being displayed upon the display unit 11 of the in-vehicle device 1, in a similar manner to the case with the menu screen image of the fifth embodiment shown in Fig. 18(a), among the above described sixteen icons, only eight icons that correspond to the applications "A" through "H" are arranged.

Moreover, upon the menu screen image for the portable terminal 2 that is being displayed upon the display unit 21, a frame 30 is displayed around the portion that corresponds to the menu screen image for the in-vehicle device 1 that is being displayed upon the display unit 11, in order to make it possible to identify this portion.

In Fig. 25(a), the menu screen image for the portable terminal 2 that is being displayed upon the display unit 21 is a screen image that is generated by the portable terminal 2 in a similar manner to the case for the fifth embodiment described above. On the other hand, the menu screen image for the in-vehicle device 1 that is being displayed upon the display unit 11 is not a screen image that is generated by the portable terminal 2 as in the case of the fifth embodiment described above, but is a screen image that is generated by the in-vehicle device 1.

In this embodiment, the arrangement and the size of the icons upon the menu screen image for the in-vehicle device 1 are set in advance. When the in-vehicle device 1 and the portable terminal 2 are connected together, the in-vehicle device 1 sends a request to the portable terminal 2 for an amount of icon information corresponding to the number of icons that can be displayed upon its menu screen image. In response to this icon information request, the portable terminal 2 determines which icons are the ones for which icon information is to be transmitted, and transmits to the in-vehicle device 1 icon information specifying the patterns for these icons and specifying to which applications these icons correspond. Moreover, upon the menu screen image for the portable terminal 2 that is being displayed upon the display unit 21, the portable terminal 2 displays the frame 30 to match the range of icons for which icon information has been transmitted.

When the icon information transmitted from the portable terminal 2 is received by the in-vehicle device 1, it determines the patterns for the icons on the basis of this icon information, and arranges them upon the menu screen image for the in-vehicle device 1.

In Fig. 25(a), an icon 35 upon which "to next" is written is displayed upon the menu screen image for the in-vehicle device 1 that is being displayed upon the display unit 11. This icon 35 is a mark for changing over the menu screen image for the in-vehicle device 1. When the user designates this icon 35 by touch operation upon the display unit 11, the in-vehicle device 1, along with transmitting to the portable terminal 2 touch operation information specifying that the icon 35 has been designated, also makes a further request to the portable terminal 2 for icon information about the icons that are to be displayed upon the menu screen image after changing over. When this happens, the portable terminal 2 determines the icons for which icon information is now to be transmitted, and, along with transmitting icon information about these icons to the in-vehicle device 1, also shifts the frame 30. In this manner, the in-vehicle device 1 displays the menu screen image after changing over upon the display unit 11, on the basis of the icon information that has been newly transmitted from the portable terminal 2. As a result menu screen images as shown in Fig. 25(b), for example, are displayed upon the display unit 11 of the in-vehicle device 1 and upon the display unit 21 of the portable terminal 2.

In Fig. 25(b), on the menu screen image for the portable terminal 2 that is being displayed upon the display unit 21, the frame 30 is shifted in the downward direction from its position in Fig. 25(a). And, corresponding to the range of this frame 30 after shifting, eight icons that correspond to the applications "I" through "P" are arranged on the menu screen image for the in-vehicle device 1 that is being displayed upon the display unit 11. Furthermore, an icon 36 upon which "return" is written is also displayed upon the menu screen image for the in-vehicle device 1. When the user designates this icon 36 by touch operation, icon information about the icons that were upon the menu screen image before switching over is transmitted again from the portable terminal 2 to the in-vehicle device 1. As a result, it is possible to return to the menu screen image of Fig. 25(a).

When the user again designates the icon 35 upon the menu screen image for the in-vehicle device 1 shown in Fig. 25(b) by touch operation, the in-vehicle device 1, along with transmitting touch operation information to the portable terminal 2 in a similar manner to that described above, also again requests icon information for the, icons upon the menu screen image after changing over from the portable terminal 2. When this happens, the portable terminal 2, along with changing over the menu screen image for the portable terminal 2, also transmits to the in-vehicle device 1 new icon information corresponding to the menu screen image after this changeover. In this manner, the in-vehicle device 1 displays the menu screen image after changeover upon the display unit 11, on the basis of the icon information that has been newly transmitted from the portable terminal 2. As a result, menu screen images such as shown in Fig. 25(c), for example, are displayed upon the display unit 11 of the in-vehicle device 1 and upon the display unit 21 of the portable terminal 2.

In Fig. 25(c), six icons corresponding to applications "Q" through "V" are arranged upon the menu screen image for the portable terminal 2 that is being displayed upon the display unit 21. And, in a similar manner, six icons corresponding to the applications "Q" through "V" are also arranged on the menu screen image for the in-vehicle device 1 that is being displayed upon the display unit 11. It should be understood that, while the icon 36 for returning to the menu screen image before changeover is displayed upon this menu screen image for the in-vehicle device 1, the icon 35 is not displayed, since it is not required for changing over to any further menu screen image.

When the user selects any of the icons by touch panel operation upon the menu screen image for the in-vehicle device 1 or the menu screen image for the portable terminal 2 as explained above, the application that corresponds to that icon is started upon the portable terminal 2.

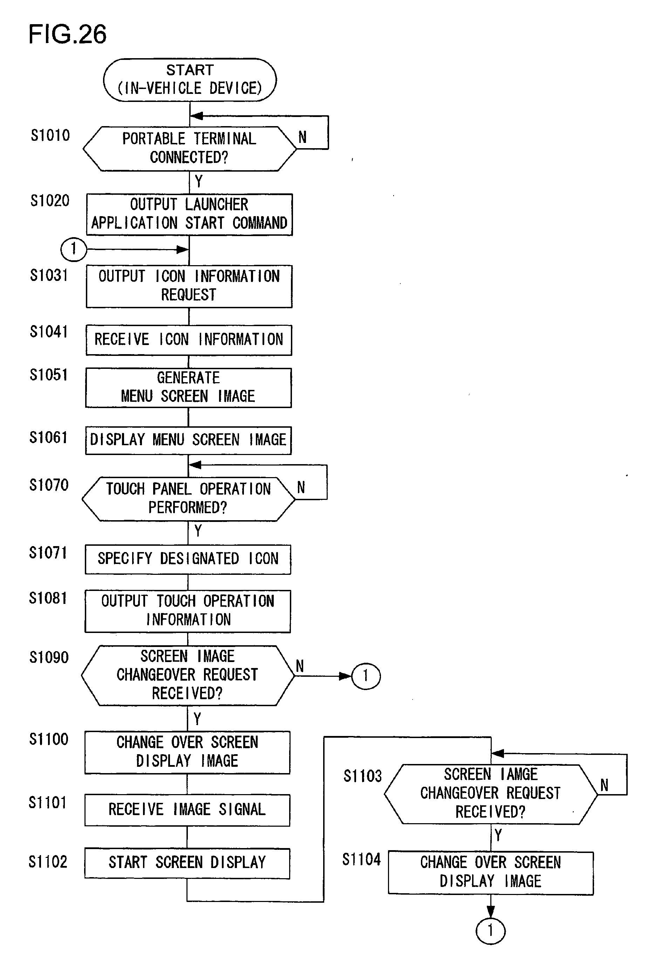

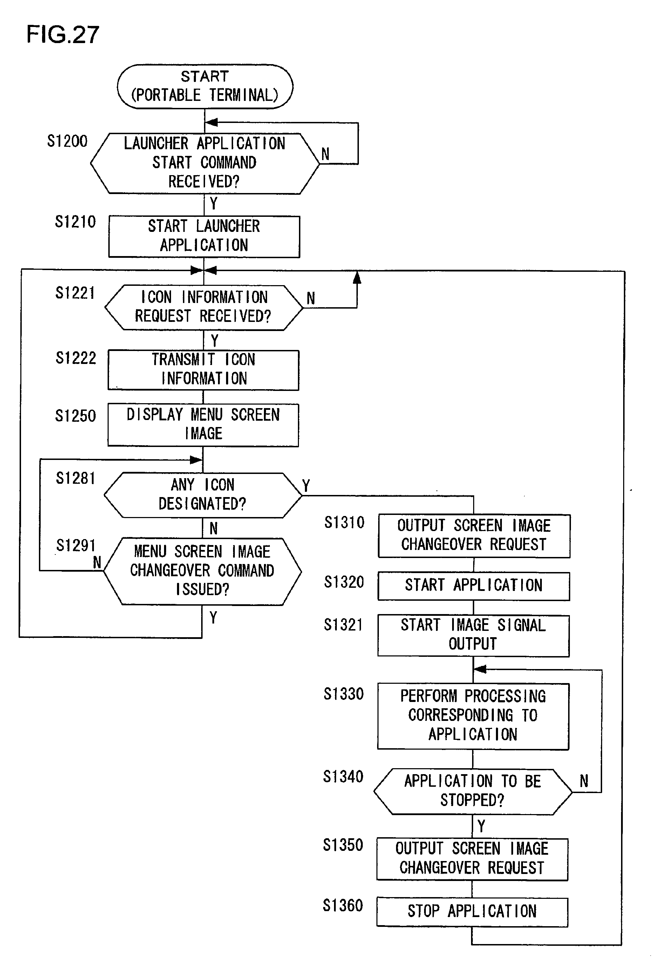

Flow charts for the processing executed by the in-vehicle device 1 and by the portable terminal 2 in this embodiment are shown in Figs. 26 and 27. Fig. 26 is a flow chart showing processing by the in-vehicle device 1, while Fig. 27 is a flow chart showing processing by the portable terminal 2. It should be understood that, in these flow charts, to processing steps that execute processing whose details are the same as those of steps shown in the flow chart of Figs. 21 and 22, the same step numbers as in Figs. 21 and 22 are appended. In the following, for such processing steps to which the same step numbers as in Figs. 21 and 22 are appended, explanation is omitted unless particularly required.

First, the flow chart of Fig. 26 will be explained. The processing shown in the flow chart of Fig. 26 is processing that is executed by the control unit 10 of the in-vehicle device 1.

In the step S 1031, in order to request icon information, the control unit 10 outputs an icon information request to the portable terminal 2. Due to this, an amount of icon information corresponding to the number of icons that can be displayed upon the menu screen image for the in-vehicle device 1 is requested to the portable terminal 2 by the in-vehicle device 1. It should be understood that this number of icons that can be displayed upon the menu screen image for the in-vehicle device 1 can be determined according to the arrangement of the icons and their size, these being set in advance by the in-vehicle device 1. This output of an icon information request is performed via the interface unit 15 and the USB cable 3.

In the step S 1041, the control unit 10 receives icon information that is transmitted from the portable terminal 2 in response to the icon information request that was outputted in the step S1031. Here this icon information, that is transmitted by a step S1222 of Fig. 27 that will be explained hereinafter being executed by the portable terminal 2, is received via the USB cable 3 and the interface unit 25.

In the step S1051, the control unit 10 generates a menu screen image for the in-vehicle device 1 by using the icon information that was received in the step S1041.

Here, the patterns for the icons are determined on the basis of the icon information that has been received, and these icons are arranged in a predetermined order, after having been set in advance to predetermined sizes. Moreover, according to requirements, the icons 35 and 36 shown in Fig. 25 are arranged in predetermined positions. The menu screen image for the in-vehicle device 1 can be generated in this manner.

In the step S1061, the control unit 10 displays the menu screen image that was generated in the step S1051 upon the display unit 11. Due to this, for example, a menu screen image like those shown in Fig. 25 is displayed upon the display unit 11.

In the step S1070, the control unit 10 makes a decision as to whether or not touch panel operation from the user has been performed upon the display unit 11. If the user has performed touch operation to designate some position upon the screen of the display unit 11, then the flow of control proceeds to the next step S1071.

In the step S1071, the control unit 10 specifies the icon that has been designated by the user by touch operation upon the menu screen image for the in-vehicle device 1 that was displayed in the step S1061. Here, the location region of the icon that has been designated by the user is specified by comparing together the position on the screen that has been designated by touch operation, and the region on the menu screen image for the in-vehicle device 1 where the icons are arranged, and the icon that is located in this location region is specified. Furthermore, the application to which the icon that has been specified in this manner corresponds is specified on the basis of the icon information that was received in the step S1041.

In the step S1081, as touch operation information, the control unit 10 outputs to the portable terminal 2 information specifying the application to which the icon specified in the step S1071 corresponds. This output of the touch operation information is performed via the interface unit 15 and the USB cable 3.

In the step S1090, the control unit 10 determines whether a screen image changeover request from the portable terminal 2 has arrived, as explained in connection with the fifth embodiment. If a screen image changeover request has been received from the portable terminal 2, then the flow of control proceeds to the next step S1100, and, after processing like that explained with reference to Fig. 21 has been executed, the flow of control proceeds to the step S 1101. On the other hand, if no screen image changeover request has been received from the portable terminal 2, in other words if the icon that was designated by touch operation by the user was the icon 35 or 36 for changing over the menu screen image as shown in Fig. 25, then the flow of control returns to the step S1031, and processing like that previously described is repeated. Due to this, icon information re transmitted from the portable terminal 2 is received, and a menu screen image for the in-vehicle device 1 after changeover is generated and is displayed upon the display unit 11.

In the step S1101, the control unit 10 receives the image signal outputted from the portable terminal 2. Here, an image signal whose output was started by a step S1321 of Fig. 27 that will be explained hereinafter being executed by the portable terminal 2 is inputted to the image signal input unit 16 via the image cable 4. After having converted the image signal that has been inputted into image data for screen image display, the image signal input unit 16 outputs this image data to the control unit 10. Due to this, the image signal is received by the control unit 10. Subsequently, this reception of the image signal outputted from the portable terminal 2 is continued.

In the step S1102, the control unit 10 starts screen image display on the basis of the image signal received in the step S1101. Here, screen image display is started by a screen image based upon the image data outputted from the image signal input unit 16 in the step S1101 being displayed upon the display unit 11. Due to this, a screen image is displayed upon the display unit 11 corresponding to the application that is being executed upon the portable terminal 2.

In the step S 1103, the control unit 10 makes a similar decision to that in the step S1090. If a screen image changeover request has been received from the portable terminal 2, then the flow of control proceeds to the next step S 1104, and similar processing is performed in this step S 1104 to that of the step S1100. Then the flow of control returns to the step S1031, and processing like that previously described is repeated.

Next, the flow chart of Fig. 27 will be explained. The processing shown in the flow chart of Fig. 27 is processing that is executed by the control unit 20 of the portable terminal 2.

In the step S1221, the control unit 20 makes a decision as to whether or not an icon information request as previously described has been received from the in-vehicle device 1. If an icon information request outputted from the in-vehicle device 1 in the step S1031 of Fig. 26 has been received, then the flow of control proceeds to the next step S1222.

In the step S1222, in response to the icon information request from the in-vehicle device 1 received in the step S1221, the control unit 20 transmits icon information corresponding to the number of icons requested to the in-vehicle device 1. Here, from among the icons that can be displayed upon the menu screen image for the portable terminal 2, those icons that are to be the subjects of transmission of icon information, within the number of icons that have been requested, are determined, and the patterns for these icons and information that specifies the applications that correspond to them is transmitted as icon information. This transmission of icon information is performed via the interface unit 25 and the USB cable 3.

In the step S1281, the control unit 20 makes a decision as to whether or not any icon has been designated by touch operation by the user upon the menu screen image for the portable terminal 2 that was displayed upon the display unit 21 in the step S1250, or upon the menu screen image for the in-vehicle device 1 that was displayed upon the display unit 11 of the in-vehicle device 1 on the basis of the image signal. At this time, which icon has been designated on the menu screen image for the in-vehicle device is determined on the basis of the touch operation information transmitted from the in-vehicle device 1 in the step S1081 of Fig. 26. It should be understood that the icons 35 and 36 for changing over the menu screen image as shown in Fig. 25 are not included in the icons that are the subjects for the decision here. If any icon has been designated then the flow of control proceeds to the step S1291, whereas if no icon has been designated then the flow of control proceeds to the step S 1310.

In the step S1291, the control unit 20 makes a decision as to whether or not a menu screen image changeover command has been issued. Here, as previously described, when the icon 35 or the icon 36 of Fig. 25 has been selected by touch operation by the user upon the menu screen image for the in-vehicle device 1, or when flick operation has been performed upon the menu screen image for the portable terminal 2, then it is decided that a menu screen image changeover command has been issued, and the flow of control returns to the step S 1221. In this case, icon information for the menu screen image after changeover is re transmitted to the in-vehicle device 1 by performing processing as described above for a second time. On the other hand, if neither of these operations has been performed, then it is decided that no menu screen image changeover command has been issued, and the flow of control returns to the step S1281.

In the step S1270, the control unit 20 starts output of the image signal to the in-vehicle device 1. Due to this, a screen image corresponding to the application that is being issued and that is generated by the processing of the following step S 1330 is converted into an image signal by the image signal output unit 26, and this image signal is outputted to the in-vehicle device 1 via the image cable 4. Subsequently similar processing to that of Fig. 22 is executed. After the step S1360 has been executed, the flow of control returns to the step S 1221.

According to the sixth embodiment of the present invention as explained above, similar beneficial operational effects are obtained to those obtained with the fifth embodiment.

It should be understood that it would also be acceptable to employ the icons 35 and 36 of Fig. 25 explained in connection with the sixth embodiment, instead of the arrow signs 31 through 34 of Fig. 18 in the previously described fifth embodiment. Moreover, it would also be acceptable to employ the arrow signs 31 through 34 explained in connection with the sixth embodiment, instead of the icons 35 and 36 of the sixth embodiment.

While, in the embodiments discussed above, examples were explained in which the in-vehicle device 1 and the portable terminal 2 were mutually connected together via the USB cable 3 and the image cable 4, and the image signal was outputted from the portable terminal 2 to the in-vehicle device 1 while performing communication between the in-vehicle device 1 and the portable terminal 2 by USB communication, it would also be possible to implement the present invention by using some other communication method or some other signal transmission method. For example, it would also be acceptable to arrange to transmit the image signal by USB communication after converting it into digital data. Moreover, it would also be possible to employ wireless communication such as Bluetooth (registered trademark) or wireless USB or the like, or cable communication of a type other than USB, or the like. It would be acceptable to employ any type of communication method, provided that it is one that is capable of transmitting and receiving the necessary information between the in-vehicle device 1 and the portable terminal 2.

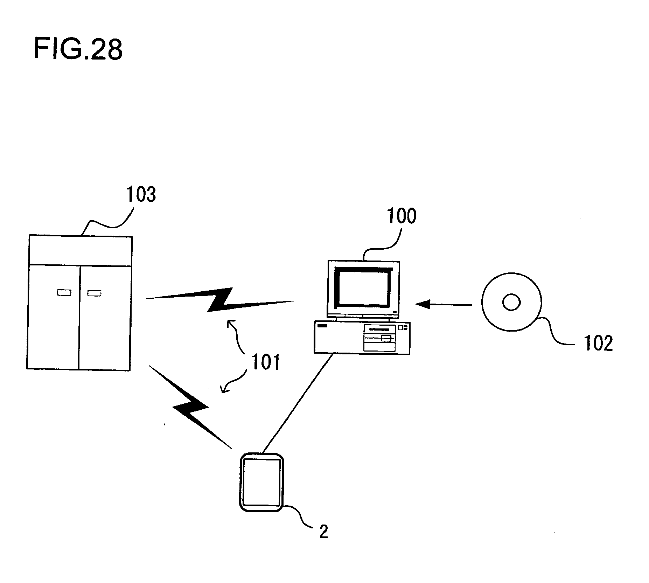

It should be understood that a program for executing the processing explained in connection with the various embodiments described above upon the portable terminal 2 may be supplied to the portable terminal 2 via a physical recording medium such as a CD ROM or the like, or via an electrical communication circuit such as the internet or the like. Fig. 28 shows a situation in which the program is supplied to the portable terminal 2. A personal computer 100 is connected to the portable terminal 2, acquires a program for the portable terminal 2 by reading a CD ROM 102 upon which the program is recorded, or by receiving the program being transmitted from a server 103 via a communication circuit 101, and outputs it to the portable terminal 2. In other words, via the personal computer 100, the portable terminal 2 may receive supply of the program from the CD ROM 102 or from the server 103. Or, it would also be acceptable to arrange to supply the program for the portable terminal 2 by directly transmitting the program from the server 103 to the portable terminal 2 via the communication circuit 101. The communication circuit 101 may, for example, be the internet, a wireless LAN, a portable telephone circuit, or the like. The server 103 converts the program for the portable terminal 2 to a data signal upon a carrier wave, and transmits that data signal to the personal computer 100 or to the portable terminal 2 via the communication circuit 101. By doing this, it is possible to supply the program for the portable terminal 2 as a computer readable computer program product in various formats, such as upon a recording medium or on a carrier wave or the like.

The embodiments and various variant embodiments explained above are only examples, and the present invention is not to be considered as being limited by the details thereof, provided that the essential features of the present invention are preserved. Moreover, the embodiments and variant embodiments described above may be used in any suitable combinations, as desired.

## Claims

1. A portable information terminal that is connected to an in-vehicle device (1), comprising:
a first display unit (21);
a display control unit that is configured to generate a first screen image for display upon the first display unit (21), and a second screen image for display upon a second display unit (11) that is comprised in the in-vehicle device; (1);
a screen image output unit that is configured to output the second screen image to the in-vehicle device (1); and
a connection determination unit that is configured to make a decision as to whether or not the in-vehicle device (1) is connected, wherein:
the display control unit is configured to generate the first screen image if it has been determined by the connection determination unit that the in-vehicle device (1) is not connected, and to generate the second screen image if it has been determined by the connection determination unit that the in-vehicle device (1) is connected;
**characterized in that**
the first screen image is displayed only by the first display unit (21); and
the second screen image is displayed in common both by the first display unit (21) and by the second display unit (11).

2. The information terminal according to claim 1, wherein:
the first screen image includes a map screen image; and
the display control unit is configured to generate the second screen image by changing at least one of the size of a character, the font of a character, the thickness of a road, the size of a map symbol, and a hue on the map screen image.

3. The information terminal according to claim 1 or claim 2, wherein the display control unit is configured to generate the second screen image on the basis of resolution information transmitted from the in-vehicle device (1) related to the resolution of the second display unit (11), or on the basis of device type information related to the device type of the in-vehicle device (1).

4. The information terminal according to any one of claims 1 through 3, wherein:
the first display unit (21) and the second display unit (11) are touch panels;
the display control unit is configured to generate the second screen image that includes a predetermined mark for selection by touch operation upon the first display unit (21) or upon the second display unit (11); and
when pull touch operation upon the first display unit (21) in a predetermined direction or touch operation to select the mark has been performed, or when touch operation information has been transmitted from the in-vehicle device (1) specifying that the mark has been selected by touch operation upon the second display unit (11), the display control unit is configured to change the second screen image.

5. The information terminal according to claim 1, wherein:
the display control unit (21) comprises a first display control unit that is configured to generate the first screen image, and a second display control unit that is configured to generate the second screen image on the basis of at least a portion of the first screen image; and
the screen image output unit is configured to output the second screen image to the in-vehicle device (1) when the first display unit is displaying the first screen image.

6. The information terminal according to Claim 5, wherein:
the first display unit (21) and the second display unit (11) are touch panels;
the first screen image includes an information terminal menu screen image upon which one, or two or more, icons are arranged for being selected by touch operation upon the first display unit (21); and
on the basis of a portion of the information terminal menu screen image, the second display control unit is configured to generate, as the second screen image, an in-vehicle device menu screen image upon which one, or two or more, icons are arranged for being selected by touch operation upon the second display unit (11).

7. The information terminal according to claim 6, wherein the second display control unit is configured to extract a portion of the information terminal menu screen image, and to generate the in-vehicle device menu screen image by changing at least one of the size of the icons included in that portion, and the gap between adjacent icons.

8. The information terminal according to any one of claims 5 through 7, wherein:
the first screen image includes an information terminal map screen image; and
as the second screen image, the second display control unit is configured to generate a map screen image for the in-vehicle device on the basis of a portion of the information terminal map screen image.

9. The information terminal according to claim 8, wherein the second display control unit is configured to generate the map screen image for the in-vehicle device (1) by extracting a portion of the information terminal map screen image, and by changing at least one of the size of a character, the font of a character, the thickness of a road, the size of a map symbol, and a hue included in that portion.

10. The information terminal according to any one of claims 5 through 9, wherein the first display unit (21) is configured to display the portion in the first screen image that corresponds to the second screen image in an identifiable format.

11. The information terminal according to any one of claims 5 through 10, wherein the second display control unit is configured to generate the second screen image on the basis of resolution information related to the resolution of the second display unit (11), or on the basis of device type information related to the device type of the in-vehicle device (1), transmitted from the in-vehicle device (1).

12. The information terminal according to any one of claims 5 through 11, wherein:
the first display unit (21) and the second display unit (11) are touch panels;
the second display control unit is configured to generate the second screen image that includes a predetermined mark for selection by touch operation upon the second display unit (11); and
when touch operation information is transmitted from the in-vehicle device (1), specifying that the mark has been selected by touch operation upon the second display unit (11), the second display control unit is configured to change the second screen image in correspondence thereto.

13. The information terminal according to claim 12, wherein:
the first display control unit is configured to change the first screen image when pull touch operation in a predetermined direction has been performed upon the first display unit (21), or when the touch operation information has been transmitted from the in-vehicle device (1);and
the second display control unit is configured to change the second screen image according to change of the first screen image.

14. The information terminal according to claim 12 or claim 13, wherein, when the touch operation information is transmitted from the in-vehicle device (1), the second display control unit is configured to change the second screen image by changing a range of the first screen image that is employed for generation of the second screen image.

15. The information terminal according to claim 1, wherein:
the display control unit comprises a first display control unit that is configured to generate the first screen image, and a second display control unit that is configured to generate the second screen image on the basis of at least a portion of the first screen image; and
the first display unit is configured to display the portion in the first screen image that corresponds to the second screen image in an identifiable format.

16. The information terminal according to claim 1, wherein:
the display control unit comprises a first display control unit that is configured to generate the first screen image, and a second display control unit that is configured to generate the second screen image; and
the second display control unit is configured to generate the second screen image on the basis of resolution information related to the resolution of the second display unit (11), or on the basis of device type information related to the device type of the in-vehicle device (1), transmitted from the in-vehicle device (1).

17. The information terminal according to claim 1, wherein:
the first display unit (21) and the second display unit (11) are touch panels;
the second display control unit is configured to generate the second screen image that includes a predetermined mark for selection by touch operation upon the second display unit (11); and
when touch operation information is transmitted from the in-vehicle device (1) specifying that the mark has been selected by touch operation upon the second display unit, the second display control unit is configured to change the second screen image.

18. An in-vehicle information system comprising a portable information terminal and an in-vehicle device (1), wherein
the information terminal comprises:
a first display unit (21);
a display control unit that is configured to generate a first screen image for display upon the first display unit (21), and a second screen image for display upon a second display unit (11) that is comprised in the in-vehicle device (1); and
a screen image output unit that is configured to output the second screen image to the in-vehicle device (1); and
a connection determination unit that is configured to make a determination as to whether or not the in-vehicle device (1) is connected;
the display control unit is configured to generate the first screen image if it has been decided by the connection determination unit that the in-vehicle device (1) is not connected, and to generate the second screen image if it has been decided by the connection determination unit that the in-vehicle device (1) is connected;
the in-vehicle device (1) comprises the second display unit (11) that is configured to display the second screen image outputted from the information terminal by the screen image output unit;
the first screen image is displayed only be the first display unit (21); and
the second screen image is displayed in common both by the first display unit (21) and be the second display unit (21).

19. The in-vehicle information system according to claim 18, wherein:
the display control unit comprises a first display control unit that is configured to generate the first screen image, and a second display control unit that is configured to generate the second screen image on the basis of at least a portion of the first screen image; and
the second display unit (11) is configured to display the second screen image outputted from the information terminal by the screen image output unit, when the first display unit (21) is displaying the first screen image.

20. An in-vehicle device that is used in an in-vehicle information system according to claim 18 or claim 19, and that comprises the second display unit (11).

## Patentansprüche

1. Tragbares Datenendgerät, das an eine Vorrichtung in einem Fahrzeug (1) angeschlossen ist und das umfasst:
eine erste Anzeigeeinheit (21);
eine Anzeigesteuereinheit, die konfiguriert ist, ein erstes Bildschirmbild für eine Anzeige auf der ersten Anzeigeeinheit (21) und ein zweites Bildschirmbild für eine Anzeige auf einer zweiten Anzeigeeinheit (11), die in der Vorrichtung in dem Fahrzeug (1) enthalten ist, zu erzeugen;
eine Bildschirmbildausgabeeinheit, die konfiguriert ist, das zweite Bildschirmbild an die Vorrichtung in dem Fahrzeug (1) auszugeben; und
eine Verbindungsbestimmungseinheit, die konfiguriert ist, eine Entscheidung zu treffen, ob die Vorrichtung in dem Fahrzeug (1) angeschlossen ist oder nicht, wobei:
die Anzeigesteuereinheit konfiguriert ist, das erste Bildschirmbild zu erzeugen, wenn durch die Verbindungsbestimmungseinheit bestimmt wurde, dass die Vorrichtung in dem Fahrzeug (1) nicht angeschlossen ist, und das zweite Bildschirmbild zu erzeugen, wenn durch die Verbindungsbestimmungseinheit bestimmt wurde, dass die Vorrichtung in dem Fahrzeug (1) angeschlossen ist;
**dadurch gekennzeichnet, dass**
das erste Bildschirmbild nur durch die erste Anzeigeeinheit (21) angezeigt wird; und
das zweite Bildschirmbild gemeinsam sowohl durch die erste Anzeigeeinheit (21) als auch durch die zweite Anzeigeeinheit (11) angezeigt wird.

2. Datenendgerät nach Anspruch 1, wobei:
das erste Bildschirmbild ein Kartenbildschirmbild enthält; und
die Anzeigesteuereinheit konfiguriert ist, das zweite Bildschirmbild durch Ändern der Größe eines Zeichens und/oder der Schriftart eines Zeichens und/oder der Dicke einer Straße und/oder der Größe eines Kartensymbols und/oder eines Farbtons auf dem Kartenbildschirmbild zu erzeugen.

3. Datenendgerät nach Anspruch 1 oder Anspruch 2, wobei die Anzeigesteuereinheit konfiguriert ist, das zweite Bildschirmbild aufgrund von von der Vorrichtung in dem Fahrzeug (1) gesendeten Auflösungsinformationen, die sich auf die Auflösung der zweiten Anzeigeeinheit (11) beziehen, oder aufgrund von Vorrichtungstypinformationen, die sich auf den Vorrichtungstyp der Vorrichtung in dem Fahrzeug (1) beziehen, zu erzeugen.

4. Datenendgerät nach einem der Ansprüche 1 bis 3, wobei:
die erste Anzeigeeinheit (21) und die zweite Anzeigeeinheit (11) Berührungsbildschirme sind;
die Anzeigesteuereinheit konfiguriert ist, das zweite Bildschirmbild so zu erzeugen, dass es eine vorgegebene Markierung für die Auswahl durch einen Berührungsvorgang auf der ersten Anzeigeeinheit (21) oder auf der zweiten Anzeigeeinheit (11) enthält; und
dann, wenn ein Ziehberührungsvorgang auf der ersten Anzeigeeinheit (21) in einer vorgegebenen Richtung oder ein Berührungsvorgang, um die Markierung auszuwählen, ausgeführt worden ist, oder dann, wenn Berührungsvorgangsinformationen von der Vorrichtung in dem Fahrzeug (1), die bestimmen, dass die Markierung durch einen Berührungsvorgang auf der zweiten Anzeigeeinheit (11) ausgewählt wurde, gesendet worden sind, die Anzeigesteuereinheit konfiguriert ist, das zweite Bildschirmbild zu ändern.

5. Datenendgerät nach Anspruch 1, wobei:
die Anzeigesteuereinheit (21) eine erste Anzeigesteuereinheit, die konfiguriert ist, das erste Bildschirmbild zu erzeugen, und eine zweite Anzeigesteuereinheit, die konfiguriert ist, das zweite Bildschirmbild zumindest aufgrund eines Teils des ersten Bildschirmbildes zu erzeugen, umfasst; und
die Bildschirmbildausgabeeinheit konfiguriert ist, das zweite Bildschirmbild an die Vorrichtung in dem Fahrzeug (1) auszugeben, wenn die erste Anzeigeeinheit das erste Bildschirmbild anzeigt.

6. Datenendgerät nach Anspruch 5, wobei:
die erste Anzeigeeinheit (21) und die zweite Anzeigeeinheit (11) Berührungsbildschirme sind;
das erste Bildschirmbild ein Datenendgerät-Menübildschirmbild enthält, auf dem ein oder zwei oder mehrere Symbole angeordnet sind, um durch einen Berührungsvorgang auf der ersten Anzeigeeinheit (21) ausgewählt zu werden; und
die zweite Anzeigesteuereinheit konfiguriert ist, aufgrund eines Teils des Datenendgerät-Menübildschirmbildes als das zweite Bildschirmbild ein Menübildschirmbild der Vorrichtung in dem Fahrzeug zu erzeugen, auf dem ein oder zwei oder mehrere Symbole angeordnet sind, um durch einen Berührungsvorgang auf der zweiten Anzeigeeinheit (11) ausgewählt zu werden.

7. Datenendgerät nach Anspruch 6, wobei die zweite Anzeigesteuereinheit konfiguriert ist, einen Teil des Datenendgerät-Menübildschirmbildes zu extrahieren und das Menübildschirmbild der Vorrichtung in dem Fahrzeug durch Ändern der Größe der Symbole, die in diesem Teil enthalten sind, und/oder des Abstands zwischen benachbarten Symbolen zu erzeugen.

8. Datenendgerät nach einem der Ansprüche 5 bis 7, wobei:
das erste Bildschirmbild ein Datenendgerät-Kartenbildschirmbild enthält; und
die zweite Anzeigesteuereinheit konfiguriert ist, als das zweite Bildschirmbild ein Kartenbildschirmbild für die Vorrichtung in dem Fahrzeug aufgrund eines Teils des Datenendgerät-Kartenbildschirmbildes zu erzeugen.

9. Datenendgerät nach Anspruch 8, wobei die zweite Anzeigesteuereinheit konfiguriert ist, das Kartenbildschirmbild für die Vorrichtung in dem Fahrzeug (1) durch Extrahieren eines Teils des Datenendgerät-Kartenbildschirmbildes und durch Ändern der Größe eines Zeichens und/oder der Schriftart eines Zeichens und/oder der Dicke einer Straße und/oder der Größe eines Kartensymbols und/oder eines Farbtons, der in dem Teil enthalten ist, zu erzeugen.

10. Datenendgerät nach einem der Ansprüche 5 bis 9, wobei die erste Anzeigeeinheit (21) konfiguriert ist, den Teil in dem ersten Bildschirmbild, der dem zweiten Bildschirmbild entspricht, in einem identifizierbaren Format anzuzeigen.

11. Datenendgerät nach einem der Ansprüche 5 bis 10, wobei die zweite Anzeigesteuereinheit konfiguriert ist, das zweite Bildschirmbild aufgrund von Auflösungsinformationen, die sich auf die Auflösung der zweiten Anzeigeeinheit (11) beziehen, oder aufgrund von Vorrichtungstypinformationen, die sich auf den Vorrichtungstyp der Vorrichtung in dem Fahrzeug (1) beziehen, die von der Vorrichtung in dem Fahrzeug (1) gesendet wurden, zu erzeugen.

12. Datenendgerät nach einem der Ansprüche 5 bis 11, wobei:
die erste Anzeigeeinheit (21) und die zweite Anzeigeeinheit (11) Berührungsbildschirme sind;
die zweite Anzeigesteuereinheit konfiguriert ist, das zweite Bildschirmbild, das eine vorgegebenen Markierung für die Auswahl durch einen Berührungsvorgang auf der zweiten Anzeigeeinheit (11) enthält, zu erzeugen; und
dann, wenn Berührungsvorgangsinformationen von der Vorrichtung in dem Fahrzeug (1) gesendet wurden, die bestimmen, dass die Markierung durch einen Berührungsvorgang auf der zweiten Anzeigeeinheit (11) ausgewählt wurde, die zweite Anzeigesteuereinheit konfiguriert ist, das zweite Bildschirmbild in Übereinstimmung damit zu ändern.

13. Datenendgerät nach Anspruch 12, wobei:
die erste Anzeigesteuereinheit konfiguriert ist, das erste Bildschirmbild zu ändern, wenn ein Ziehberührungsvorgang in eine vorgegebene Richtung auf der ersten Anzeigeeinheit (21) ausgeführt wurde oder wenn die Berührungsvorgangsinformationen von der Vorrichtung in dem Fahrzeug (1) gesendet wurden; und
die zweite Anzeigesteuereinheit konfiguriert ist, das zweite Bildschirmbild gemäß der Änderung des ersten Bildschirmbildes zu ändern.

14. Datenendgerät nach Anspruch 12 oder Anspruch 13, wobei dann, wenn die Berührungsvorgangsinformationen von der Vorrichtung in dem Fahrzeug (1) gesendet wurden, die zweite Anzeigesteuereinheit konfiguriert ist, das zweite Bildschirmbild durch Ändern eines Bereichs des ersten Bildschirmbildes, der für die Erzeugung des zweiten Bildschirmbildes verwendet wird, zu ändern.

15. Datenendgerät nach Anspruch 1, wobei:
die Anzeigesteuereinheit eine erste Anzeigesteuereinheit, die konfiguriert ist, das erste Bildschirmbild zu erzeugen, und eine zweite Anzeigesteuereinheit, die konfiguriert ist, das zweite Bildschirmbild zumindest aufgrund eines Teils des ersten Bildschirmbildes zu erzeugen, umfasst; und
die erste Anzeigeeinheit konfiguriert ist, den Teil in dem ersten Bildschirmbild, der dem zweiten Bildschirmbild entspricht, in einem identifizierbaren Format anzuzeigen.

16. Datenendgerät nach Anspruch 1, wobei:
die Anzeigesteuereinheit eine erste Anzeigesteuereinheit, die konfiguriert ist, das erste Bildschirmbild zu erzeugen, und eine zweite Anzeigesteuereinheit, die konfiguriert ist, das zweite Bildschirmbild zu erzeugen, umfasst; und
die zweite Anzeigesteuereinheit konfiguriert ist, das zweite Bildschirmbild aufgrund von Auflösungsinformationen, die sich auf die Auflösung der zweiten Anzeigeeinheit (11) beziehen, oder aufgrund von Vorrichtungstypinformationen, die sich auf den Vorrichtungstyp der Vorrichtung in dem Fahrzeug (1) beziehen, die von der Vorrichtung in dem Fahrzeug (1) gesendet wurden, zu erzeugen.

17. Datenendgerät nach Anspruch 1, wobei:
die erste Anzeigeeinheit (21) und die zweite Anzeigeeinheit (11) Berührungsbildschirme sind;
die zweite Anzeigesteuereinheit konfiguriert ist, das zweite Bildschirmbild zu erzeugen, dass eine vorgegebene Markierung für die Auswahl durch einen Berührungsvorgang auf der zweiten Anzeigeeinheit (11) enthält; und
dann, wenn Berührungsvorgangsinformationen von der Vorrichtung in dem Fahrzeug (1), die bestimmen, dass die Markierung durch einen Berührungsvorgang auf der zweiten Anzeigeeinheit (11) ausgewählt wurde, gesendet wurden, die zweite Anzeigesteuereinheit konfiguriert ist, das zweite Bildschirmbild zu ändern.

18. Datenverarbeitungssystem in einem Fahrzeug, das ein tragbares Datenendgerät und eine Vorrichtung in einem Fahrzeug (1) umfasst, wobei
das Datenendgerät umfasst:
eine erste Anzeigeeinheit (21);
eine Anzeigesteuereinheit, die konfiguriert ist, ein erstes Bildschirmbild für eine Anzeige auf der ersten Anzeigeeinheit (21) und ein zweites Bildschirmbild für die Anzeige auf einer zweiten Anzeigeeinheit (11), die in der Vorrichtung in dem Fahrzeug (1) enthalten ist, zu erzeugen; und
eine Bildschirmbildausgabeeinheit, die konfiguriert ist, das zweite Bildschirmbild an die Vorrichtung in dem Fahrzeug (1) auszugeben; und
eine Verbindungsbestimmungseinheit, die konfiguriert ist, eine Bestimmung auszuführen, ob die Vorrichtung in dem Fahrzeug (1) angeschlossen ist oder nicht;
wobei die Anzeigesteuereinheit konfiguriert ist, das erste Bildschirmbild zu erzeugen, wenn durch die Verbindungsbestimmungseinheit bestimmt wurde, dass die Vorrichtung in dem Fahrzeug (1) nicht angeschlossen ist, und das zweite Bildschirmbild zu erzeugen, wenn durch die Verbindungsbestimmungseinheit bestimmt wurde, dass die Vorrichtung in dem Fahrzeug (1) angeschlossen ist;
wobei die Vorrichtung in dem Fahrzeug (1) die zweite Anzeigeeinheit (11) umfasst, die konfiguriert ist, das zweite Bildschirmbild, das von dem Datenendgerät durch die Bildschirmbildausgabeeinheit ausgegeben wurde, anzuzeigen;
wobei das erste Bildschirmbild nur durch die erste Anzeigeeinheit (21) angezeigt wird; und
das zweite Bildschirmbild gemeinsam sowohl durch die erste Anzeigeeinheit (21) als auch durch die zweite Anzeigeeinheit (11) angezeigt wird.

19. Datenverarbeitungssystem in einem Fahrzeug nach Anspruch 18, wobei:
die Anzeigesteuereinheit eine erste Anzeigesteuereinheit, die konfiguriert ist, das erste Bildschirmbild zu erzeugen, und eine zweite Anzeigesteuereinheit, die konfiguriert ist, das zweite Bildschirmbild zumindest aufgrund eines Teils des ersten Bildschirmbildes zu erzeugen, umfasst; und
die zweite Anzeigeeinheit (11) konfiguriert ist, das zweite Bildschirmbild, das von dem Datenendgerät durch die Bildschirmausgabeeinheit ausgegeben wurde, anzuzeigen, wenn die erste Anzeigeeinheit (21) das erste Bildschirmbild anzeigt.

20. Vorrichtung in einem Fahrzeug, die in einem Datenverarbeitungssystem in einem Fahrzeug gemäß Anspruch 18 oder Anspruch 19 verwendet wird und die die zweite Anzeigeeinheit (11) umfasst.

## Revendications

1. Terminal d'information portatif qui est connecté à un dispositif embarqué sur véhicule (1), comprenant :
une première unité d'affichage (21) ;
une unité de commande d'affichage qui est configurée pour générer une première image écran pour l'affichage sur la première unité d'affichage (21), et une seconde image écran pour l'affichage sur une seconde unité d'affichage (11) qui est comprise dans le dispositif embarqué sur véhicule (1) ;
une unité de sortie d'image écran qui est configurée pour sortir la seconde image écran vers le dispositif embarqué sur véhicule (1) ; et
une unité de détermination de connexion qui est configurée pour prendre une décision quant à savoir si le dispositif embarqué sur véhicule (1) est connecté ou non, dans lequel :
l'unité de commande d'affichage est configurée pour générer la première image écran s'il a été déterminé par l'unité de détermination de connexion que le dispositif embarqué sur véhicule (1) n'est pas connecté, et pour générer la seconde image écran s'il a été déterminé par l'unité de détermination de connexion que le dispositif embarqué sur véhicule (1) est connecté ;
**caractérisé en ce que**
la première image écran est affichée uniquement par la première unité d'affichage (21) ; et
la seconde image écran est affichée en commun à la fois par la première unité d'affichage (21) et par la seconde unité d'affichage (11).

2. Terminal d'information selon la revendication 1, dans lequel :
la première image écran inclut une image écran de cartographie ; et
l'unité de commande d'affichage est configurée pour générer la seconde image écran en changeant au moins un paramètre parmi la taille d'un caractère, la police d'un caractère, l'épaisseur d'une route, la taille d'un symbole de cartographie, et une teinte sur l'image écran de cartographie.

3. Terminal d'information selon la revendication 1 ou 2, dans lequel l'unité de commande d'affichage est configurée pour générer la seconde image écran sur la base d'une information de résolution transmise depuis le dispositif embarqué sur véhicule (1) en relation avec la résolution de la seconde unité d'affichage (11), ou sur la base d'une information de type de dispositif en relation avec le type de dispositif du dispositif embarqué sur véhicule (1).

4. Terminal d'information selon l'une quelconque des revendications 1 à 3, dans lequel :
la première unité d'affichage (21) et la seconde unité d'affichage (11) sont des panneaux tactiles ;
l'unité de commande d'affichage est configurée pour générer la seconde image écran qui inclut une marque prédéterminée pour une sélection par opération tactile sur la première unité d'affichage (21) ou sur la seconde unité d'affichage (11) ; et
lorsqu'on exécute une opération de toucher-tirer sur la première unité d'affichage (21) dans une direction prédéterminée ou une opération de toucher afin de sélectionner la marque, ou bien quand une information d'opération de toucher a été transmise depuis le dispositif embarqué sur véhicule (1) spécifiant que la marque a été sélectionnée par opération de toucher sur la seconde unité d'affichage (11), l'unité de commande d'affichage est configurée pour changer la seconde image écran.

5. Terminal d'information selon la revendication, dans lequel :
l'unité de commande d'affichage (21) comprend une première unité de commande d'affichage qui est configurée pour générer la première image écran, et une seconde unité de commande d'affichage qui est configurée pour générer la seconde image écran sur la base d'au moins une portion de la première image écran ; et
l'unité de sortie d'image écran est configurée pour sortir la seconde image écran vers le dispositif embarqué sur véhicule (1) quand la première unité d'affichage affiche la première image écran.

6. Terminal d'information selon la revendication 5, dans lequel :
la première unité d'affichage (21) et la seconde unité d'affichage (11) sont des panneaux tactiles ;
la première image écran inclut une image écran formant menu de terminal d'information sur laquelle un, ou deux ou plusieurs icônes sont agencés afin d'être sélectionnés par une opération de toucher sur la première unité d'affichage (21) ; et
sur la base d'une portion de l'image écran formant menu de terminal d'information, la seconde unité de commande d'affichage est configurée pour générer, à titre de seconde image écran, une image écran formant menu de dispositif embarqué sur véhicule sur laquelle un, ou deux ou
plusieurs icônes sont agencés afin d'être sélectionnés par une opération de toucher sur la seconde unité d'affichage (11).

7. Terminal d'information selon la revendication 6, dans lequel la seconde unité de commande d'affichage est configurée pour extraire une portion de l'image écran formant menu de terminal d'information, et pour générer l'image écran formant menu de dispositif embarqué sur véhicule en changeant au moins un paramètre parmi la taille des icônes inclus dans cette portion, et l'intervalle entre icônes adjacents.

8. Terminal d'information selon l'une quelconque des revendications 5 à 7, dans lequel :
la première image écran inclut une image écran de cartographie de terminal d'information ; et
à titre de seconde image écran, la seconde unité de commande d'affichage est configurée pour générer une image écran de cartographie pour le dispositif embarqué sur véhicule sur la base d'une portion de l'image écran de cartographie du terminal d'information.

9. Terminal d'information selon la revendication 8, dans lequel la seconde unité de commande d'affichage est configurée pour générer l'image écran de cartographie pour le dispositif embarqué sur véhicule (1) en extrayant une portion de l'image écran de cartographie du terminal d'information, et en changeant au moins un paramètre parmi la taille d'un caractère, la police d'un caractère, l'épaisseur d'une route, la taille d'un symbole de cartographie, et une teinte incluse dans cette portion.

10. Terminal d'information selon l'une quelconque des revendications 5 à 9, dans lequel la première unité d'affichage (21) est configurée pour afficher la portion dans la première image écran qui correspond à la seconde image écran dans un format identifiable.

11. Terminal d'information selon l'une quelconque des revendications 5 à 10, dans lequel la seconde unité de commande d'affichage est configurée pour générer la seconde image écran sur la base d'une information de résolution en relation avec la résolution de la seconde unité d'affichage (11), ou sur la base d'une information de type de dispositif en relation avec le type de dispositif du dispositif embarqué sur véhicule (1), transmise depuis le dispositif embarqué sur véhicule (1).

12. Terminal d'information selon l'une quelconque des revendications 5 à 11, dans lequel :
la première unité d'affichage (21) et la seconde unité d'affichage (11) sont des panneaux tactiles ;
la seconde unité de commande d'affichage est configurée pour générer la seconde image écran qui inclut une marque prédéterminée pour une sélection par une opération de toucher sur la seconde unité d'affichage (11) ; et
quand une information d'opération de toucher est transmise depuis le dispositif embarqué sur véhicule (1), spécifiant que la marque a été sélectionnée par une opération de toucher sur la seconde unité d'affichage (11), la seconde unité de commande d'affichage est configurée pour changer la seconde image écran en correspondance à celle-ci.

13. Terminal d'information selon la revendication 12, dans lequel :
la première unité de commande d'affichage est configurée pour changer la première image écran quand une opération de toucher-tirer dans une direction prédéterminée a été exécutée sur la première unité d'affichage (21), ou bien quand l'information d'opération de toucher a été transmise depuis le dispositif embarqué sur véhicule (1) ; et
la seconde unité de commande d'affichage est configurée pour changer la seconde image écran en accord avec le changement de la première image écran.

14. Terminal d'information selon la revendication 12 ou 13 dans lequel, quand l'information d'opération de toucher est transmise depuis le dispositif embarqué sur véhicule (1), la seconde unité de commande d'affichage est configurée pour changer la seconde image écran en changeant une plage de la première image écran qui est employée pour la génération de la seconde image écran.

15. Terminal d'information selon la revendication 1, dans lequel :
l'unité de commande d'affichage comprend une première unité de commande d'affichage qui est configurée pour générer la première image écran, et une seconde unité de commande d'affichage qui est configurée pour générer la seconde image écran sur la base d'au moins une portion de la première image écran ; et
la première unité d'affichage est configurée pour afficher la portion, dans la première image écran, qui correspond à la seconde image écran dans un format identifiable.

16. Terminal d'information selon la revendication 1, dans lequel :
l'unité de commande d'affichage comprend une première unité de commande d'affichage qui est configurée pour générer la première image écran, et une seconde unité de commande d'affichage qui est configurée pour générer la seconde image écran ; et
la seconde unité de commande d'affichage est configurée pour générer la seconde image écran sur la base d'une information de résolution en relation avec la résolution de la seconde unité d'affichage (11), ou sur la base d'une information de type de dispositif en relation avec le type de dispositif du dispositif embarqué sur véhicule (11), transmise depuis le dispositif embarqué sur véhicule (1).

17. Terminal d'information selon la revendication 1, dans lequel :
la première unité d'affichage (21) et la seconde unité d'affichage (11) sont des panneaux tactiles ;
la seconde unité de commande d'affichage est configurée pour générer la seconde image écran qui inclut une marque prédéterminée pour une sélection par une opération de toucher sur la seconde unité d'affichage (11) ; et
quand une information d'opération de toucher est transmise depuis le dispositif embarqué sur véhicule (1) spécifiant que la marque a été sélectionnée par une opération de toucher sur la seconde unité d'affichage, la seconde unité de commande d'affichage est configurée pour changer la seconde image écran.

18. Système d'information embarqué sur véhicule comprenant un terminal d'information portatif et un dispositif embarqué sur véhicule (1), dans lequel
le terminal d'information comprend :
une première unité d'affichage (21) ;
une unité de commande d'affichage qui est configurée pour générer une première image écran pour l'affichage sur le premier dispositif d'affichage (21), et une seconde image écran pour l'affichage sur une seconde unité d'affichage (11) qui est comprise dans le système embarqué sur véhicule (1) ; et
une unité de sortie d'image écran qui est configurée pour sortir la seconde image écran vers le dispositif embarqué sur véhicule (1) ; et
une unité de détermination de connexion qui est configurée pour prendre une décision quant à savoir si le dispositif embarqué sur véhicule (1) est connecté ou non ;
l'unité de commande d'affichage est configurée pour générer la première image écran si l'unité de détermination de connexion a décidé que le dispositif embarqué sur véhicule (1) n'est pas connecté, et pour générer la seconde image écran si l'unité de détermination de connexion a décidé que le dispositif embarqué sur véhicule (1) est connecté ;
le dispositif embarqué sur véhicule (1) comprend la seconde unité d'affichage (11) qui est configurée pour afficher la seconde image écran de sortie depuis le terminal d'information par l'unité de sortie d'image écran ;
la première image écran est affichée uniquement par la première unité d'affichage (21) ; et
la seconde image écran est affichée en commun à la fois par la première unité d'affichage (21) et par la seconde unité d'affichage (11).

19. Système d'information embarqué sur véhicule selon la revendication 18, dans lequel :
l'unité de commande d'affichage comprend une première unité de commande d'affichage qui est configurée pour générer la première image écran, et une seconde unité de commande d'affichage qui est configurée pour générer la seconde image écran sur la base d'au moins une portion de la première image écran ; et
la seconde unité d'affichage (11) est configurée pour afficher la seconde image écran sortie depuis le terminal d'information par l'unité de sortie d'image écran, quand la première unité d'affichage (21) affiche la première image écran.

20. Dispositif embarqué sur véhicule qui est utilisé à titre de système d'information embarqué sur véhicule selon la revendication 18 ou 19, et qui comprend la seconde unité d'affichage (11).
